# EUROPEAN PATENT APPLICATION

(11) **EP 4 733 889 A1**
(43) Date of publication of application: **29.04.2026**
(21) Application number: 25727163.5
(22) Date of filing: 22.05.2025
(51) Int. Cl.: G06F 1/16, G06F 9/30, F16C 11/04

(54) **FOLDABLE ELECTRONIC DEVICE COMPRISING ROTATORS**

(30) Priority: 05.09.2024 KR 20240121183; 09.09.2024 KR 20240122729; 21.10.2024 KR 20240143838
(71) Applicant: Samsung Electronics Co., Ltd, Suwon-si, Gyeonggi-do 16677 (KR)
(72) Inventor: LEE, Jinju, Suwon-si, Gyeonggi-do 16677 (KR); KIM, Jongkeun, Suwon-si, Gyeonggi-do 16677 (KR); KIM, Jongyoon, Suwon-si, Gyeonggi-do 16677 (KR); SEO, Wonyoung, Suwon-si, Gyeonggi-do 16677 (KR); KIM, Dooryong, Suwon-si, Gyeonggi-do 16677 (KR)
(74) Representative: Gulde & Partner
(86) International application number: PCT/KR2025/006973
(87) International publication number: WO 2026/054233

(57) **Abstract**

A foldable electronic device includes a foldable housing including a first housing part and a second housing part, and a hinge assembly configured to provide an unfolding movement and a folding movement. The hinge assembly includes a bracket, a first rotator rotatably coupled to the bracket, and a second rotator coupled to the first rotator, coupled to the second housing part, and rotatably coupled to the bracket through the first rotator. The second rotator is configured to rotate with respect to the bracket according to the folding movement. The first rotator is configured to start to rotate with respect to the bracket in conjunction with the second rotator, based on a rotation angle of the second rotator reaching a threshold angle according to the folding movement.

## Description

### [Technical Field]

The present disclosure relates to a foldable electronic device including rotators.

### [Background Art]

An electronic device may include housing parts that are rotatably coupled and a flexible display. As the housing parts rotate, a portion of the flexible display may be bent. The electronic device may include a hinge assembly rotatably connecting the housing parts. The hinge assembly may provide a folded state, an unfolded state, and an intermediate state of the electronic device.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

A foldable electronic device is provided. The foldable electronic device may comprise a foldable housing including a first housing part, and a second housing part. The foldable electronic device may comprise a hinge assembly, configured to provide an unfolding movement and a folding movement by rotatably connecting the first housing part and the second housing part. The hinge assembly may include a bracket, a first rotator, rotatably coupled to the bracket, separated from the second housing part, and a second rotator, coupled to the first rotator, coupled to the second housing part, and rotatably coupled to the bracket through the first rotator. The second rotator may be configured to rotate with respect to the bracket according to the folding movement. The first rotator may be configured to, based on an angle of the rotation of the second rotator reaching a threshold angle according to the folding movement, start to rotate with respect to the bracket in conjunction with the second rotator.

A foldable electronic device is provided. The foldable electronic device may comprise a foldable housing including a first housing part, and a second housing part. The foldable electronic device may comprise a flexible display disposed on the foldable housing. The foldable electronic device may comprise a hinge assembly, configured to provide an unfolding movement that changes a folded state of the foldable electronic device to an unfolded state of the foldable electronic device and a folding movement that changes the unfolded state of the foldable electronic device to the unfolded state of the foldable electronic device, by rotatably connecting the first housing part and the second housing part. The hinge assembly may include a bracket, a first rotator, rotatably coupled to the bracket, separated from the second housing part, a second rotator, coupled to the first rotator, coupled to the second housing part, and rotatably coupled to the bracket through the first rotator, and a coupling bracket, coupled to the second housing part and the second rotator, separated from the first rotator. The second rotator may be configured to rotate with respect to the bracket according to the folding movement. The first rotator may be configured to, based on an angle of the rotation of the second rotator reaching a threshold angle according to the folding movement, start to rotate with respect to the bracket in conjunction with the second rotator.

A foldable electronic device is provided. The foldable electronic device may include a first housing part, a second housing part, a third housing part, a first hinge housing part, disposed between the first housing part and the second housing part and having a first width, and a second hinge housing part, disposed between the second housing part and the third housing part and having a second width different from the first width. The foldable electronic device may include a first hinge assembly, at least partially accommodated in the first hinge housing part and rotatably connected to the first housing part and the second housing part. The foldable electronic device may include a second hinge assembly, at least partially accommodated in the second hinge housing part and rotatably connected to the second housing part and the third housing part. The foldable electronic device may include a flexible display including a first display region, a second display region, and a third display region which are respectively accommodated in the first housing part, the second housing part, and the third housing part. The first hinge assembly may include a first bracket, a first rotation member rotatably coupled to the first bracket, and a second rotation member rotatably coupled to the first bracket through the first rotation member and coupled to the first housing part. The first rotation member may be configured to be restricted from rotating while the second rotation member is rotated within a first rotation range. The first rotation member may be rotated in conjunction with the second rotation member while the second rotation member is rotated in a second rotation range exceeding the first rotation range. The second hinge assembly may include a second bracket, and a third rotation member rotatably coupled to the second bracket and coupled to the second housing part. The third rotation member may be configured to be rotatable in a state in which the first housing part and the second housing part are folded.

### [Description of the Drawings]

FIG. 1 is a block diagram of an electronic device in a network environment according to an embodiment.
FIG. 2A illustrates an example of an unfolded state of an electronic device according to an embodiment.
FIG. 2B illustrates an example of a folded state of an electronic device according to an embodiment.
FIG. 2C is an exploded view of an electronic device according to an embodiment.
FIG. 3 is an exploded perspective view of a hinge assembly of a foldable electronic device according to an embodiment.
FIG. 4 illustrates a portion of a hinge assembly according to an embodiment.
FIG. 5 is an exploded view of a first rotator and a second rotator.
FIG. 6 is a perspective view of a first rotator.
FIGS. 7 and 8 are perspective views of a first rotator and a second rotator coupled to each other.
FIG. 9 is a cross-sectional view of a hinge assembly cut along line A-A' of FIG. 6 in an unfolded state of a foldable electronic device.
FIG. 10 is a cross-sectional view of a hinge assembly cut along line A-A' of FIG. 6 when a rotation angle of a second rotator according to a folding movement is a threshold angle.
FIG. 11 is a cross-sectional view of a hinge assembly cut along line A-A' of FIG. 6 when a rotation angle of a second rotator exceeds a threshold angle.
FIG. 12 is a cross-sectional view of a hinge assembly cut along line A-A' of FIG. 6 in a folded state of a foldable electronic device.
FIG. 13 illustrates a hinge assembly in a folded state of a foldable electronic device according to an embodiment.
FIG. 14 illustrates a hinge assembly in a folded state of a foldable electronic device according to a comparative example.
FIG. 15 is an exploded view of a first rotator and a second rotator.
FIG. 16 is a cross-sectional view of a hinge assembly cut along line B-B' of FIG. 6 in a folded state of a foldable electronic device.
FIG. 17 is a cross-sectional view of a hinge assembly cut along line B-B' of FIG. 6 when a rotation angle of a second rotator according to an unfolding movement is a threshold angle.
FIG. 18 is a cross-sectional view of a hinge assembly cut along line B-B' of FIG. 6 when a rotation angle of a second rotator exceeds a threshold angle.
FIG. 19 is a cross-sectional view of a hinge assembly cut along line B-B' of FIG. 6 in an unfolded state of a foldable electronic device.
FIG. 20A illustrates an example of a first state of an electronic device.
FIG. 20B illustrates an example of a second state of an electronic device.
FIG. 20C illustrates an example of a third state of an electronic device.
FIG. 21A is a plan view of an electronic device from which a flexible display is removed.
FIG. 21B is a rear view of an electronic device from which a rear cover and a display are removed.
FIG. 22 is a plan view of a hinge assembly including a spiral structure.
FIG. 23 is a perspective view of a hinge assembly including a spiral structure.
FIGS. 24 and 25 illustrate a portion of a hinge assembly including three rotators.
FIG. 26 is an exploded perspective view of a second rotator and a third rotator.
FIG. 27 is a perspective view of a second rotator.
FIG. 28 is a perspective view of a first rotator. FIG. 29 is a perspective view of a third rotator.
FIG. 30 is a cross-sectional view of a hinge assembly cut along line C-C' of FIG. 24 in an unfolded state of a foldable electronic device.
FIG. 31 is a cross-sectional view of a hinge assembly cut along line C-C' of FIG. 24 when a rotation angle of a third rotator according to a folding movement is a threshold angle.
FIG. 32 is a cross-sectional view of a hinge assembly cut along line D-D' of FIG. 24 when a rotation angle of a third rotator according to a folding movement is a threshold angle.
FIG. 33 is a cross-sectional view of a hinge assembly cut along line D-D' of FIG. 24 when a rotation angle of a second rotator according to a folding movement is a threshold angle.
FIG. 34 is a cross-sectional view of a hinge assembly cut along line E-E' of FIG. 24 in a folded state of a foldable electronic device.
FIG. 35 is a cross-sectional view of a hinge assembly cut along E-E' line of FIG. 24 when a rotation angle of a third rotator according to an unfolding movement is a threshold angle.
FIG. 36 is a cross-sectional view of a hinge assembly cut along line D-D' of FIG. 24 when a rotation angle of a third rotator according to an unfolding movement is a threshold angle.
FIG. 37 is a cross-sectional view of a hinge assembly cut along line D-D' of FIG. 24 when a rotation angle of a second rotator according to an unfolding movement is a threshold angle.

### [Mode for Invention]

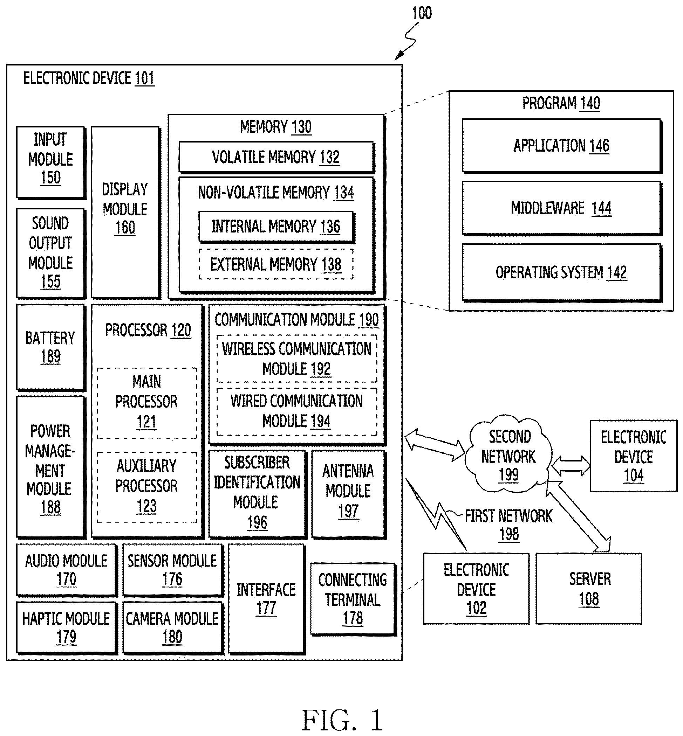

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

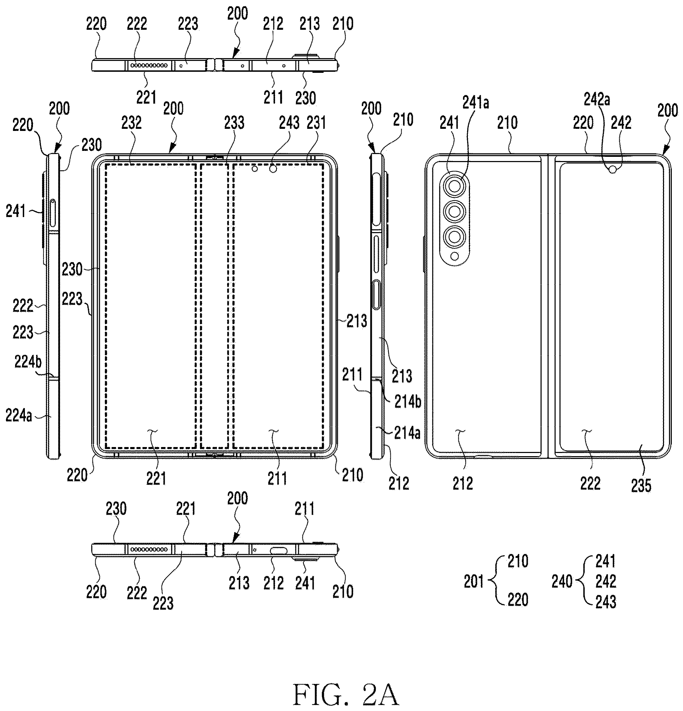

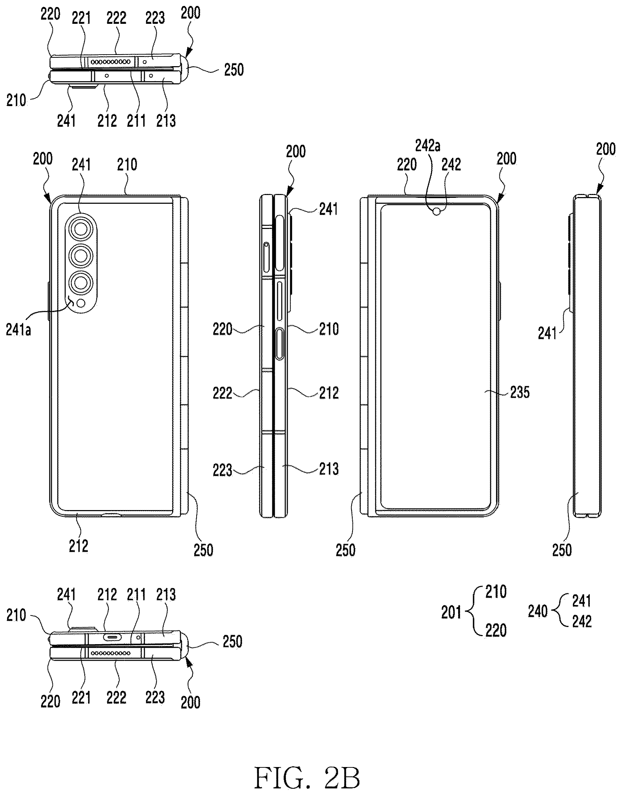

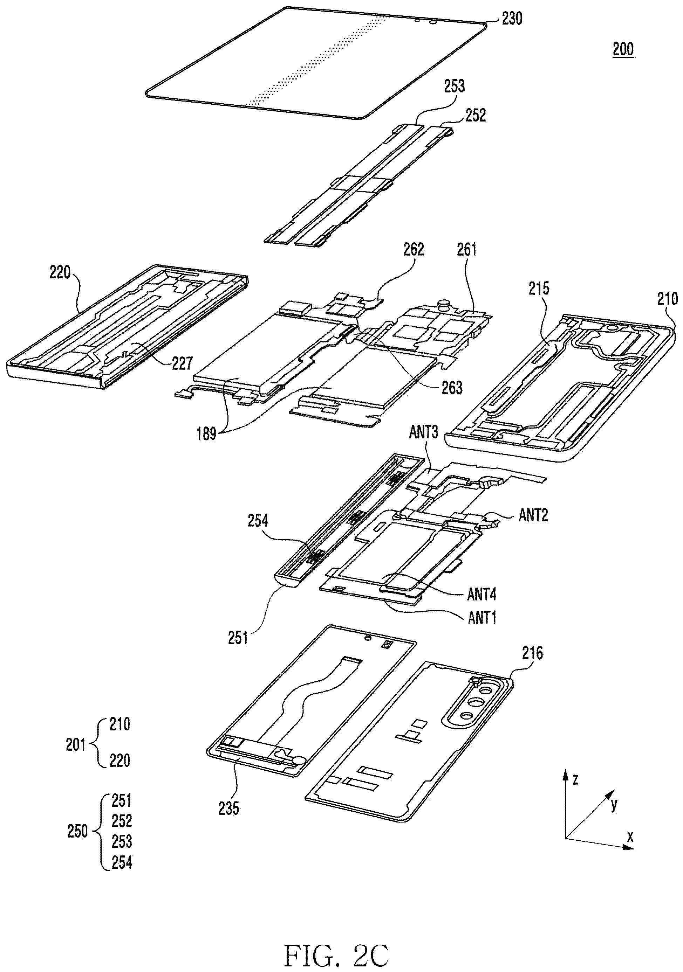

FIG. 2A illustrates an example of an unfolded state of an electronic device according to an embodiment. FIG. 2B illustrates an example of a folded state of an electronic device according to an embodiment. FIG. 2C is an exploded view of an electronic device according to an embodiment.

The electronic device 101 of FIG. 1 may include a foldable electronic device 200. Referring to FIGS. 2A, 2B, and 2C, the foldable electronic device 200 according to an embodiment may include a foldable housing 201, a flexible display 230, one or more cameras 240, and a hinge assembly 250.

According to an embodiment, the foldable housing 201 may define an exterior surface of the foldable electronic device 200. For example, the foldable housing 201, which is as a physical exterior surface of the foldable electronic device 200 to be exposed to the outside, may accommodate components disposed inside the foldable electronic device 200. At least a portion of components for implementing a function of the foldable electronic device 200 may be disposed in the foldable housing 201. According to an embodiment, the foldable housing 201 may include a first housing part 210 and a second housing part 220.

According to an embodiment, the first housing part 210 may include a first surface 211, a second surface 212 opposite to the first surface 211, and a first side surface 213 at least partially surrounding a periphery of the first surface 211 and a periphery of the second surface 212. For example, the first surface 211 may be referred to as a front surface of the first housing part 210, and the second surface 212 may be referred to as a rear surface of the first housing part 210. The first side surface 213 may be connected to the periphery of the first surface 211 and the periphery of the second surface 212. The first surface 211, the second surface 212, and the first side surface 213 may form an inner space of the first housing part 210. For example, at least one component may be disposed in a space surrounded by the first surface 211, the second surface 212, and the first side surface 213.

According to an embodiment, the second housing part 220 may include a third surface 221, a fourth surface 222 opposite to the third surface 221, and a second side surface 223 at least partially surrounding a periphery of the third surface 221 and a periphery of the fourth surface 222. For example, the third surface 221 may be referred to as a front surface of the second housing part 220, and the fourth surface 222 may be referred to as a rear surface of the second housing part 220. The second side surface 223 may be connected to the periphery of the third surface 221 and the periphery of the fourth surface 222. The third surface 221, the fourth surface 222, and the second side surface 223 may form an inner space of the second housing part 220. For example, at least one component may be disposed in a space surrounded by the third surface 221, the fourth surface 222, and the second side surface 223.

According to an embodiment, the flexible display 230 may be configured to display visual information. For example, the flexible display 230 may include a display region including a plurality of pixels. For example, the dispaly region may be referred to as an active region displaying visual information.

According to an embodiment, the flexible display 230 may include a first portion 231, a second portion 232, and a third portion 233 disposed between the first portion 231 and the second portion 232. The foldable electronic device 200 may further include a cover display 235 distinguished from the flexible display 230. The cover display 235 may be referred to as a sub display.

According to an embodiment, the first portion 231 may be supported by the first housing part 210. The second portion 232 may be supported by the second housing part 220. The first portion 231 and the second portion 232 may be substantially flat, independently of a state of the foldable electronic device 200. The third portion 233 may be configured to be bent based on a rotation of the first housing part 210 or the second housing part 220. For example, in an unfolded state that the first housing part 210 and the second housing part 220 are unfolded, the third portion 233 may be substantially flat. In a folded state or intermediate state in which the first housing part 210 and the second housing part 220 are folded, the third portion 233 may be at least partially bent. The flexible display 230 may be a flexible display including a bendable third portion 233.

According to an embodiment, the one or more cameras 240 may be configured to obtain an image or a video, based on receiving light from a subject outside the foldable electronic device 200. For example, the one or more cameras 240 may include first cameras 241, a second camera 242, and/or a third camera 243. For example, the first cameras 241 may be disposed in the first housing part 210. For example, the first housing part 210 may include at least one opening 241a overlapping the first cameras 241 when the foldable electronic device 200 is viewed from above. The first cameras 241 may obtain an image based on receiving light from the outside of the foldable electronic device 200 through the at least one opening 241a. The first cameras 241 may face the rear side of the foldable electronic device 200.

According to an embodiment, the second camera 242 may be disposed in the second housing part 220. The second housing part 220 may include at least one opening 242a overlapping the second camera 242 when the foldable electronic device 200 is viewed from above. The second camera 242 may obtain an image based on receiving light from the outside of the foldable electronic device 200 through the at least one opening 242a.

According to an embodiment, the third camera 243 may be disposed in the first housing part 210. For example, the first portion 231 of the flexible display 230 may include at least one opening overlapping the third camera 243 when the flexible display 230 is viewed from above. The third camera 243 may obtain an image based on receiving light from the outside of the flexible display 230 through the at least one opening.

According to an embodiment, the second camera 242 and the third camera 243 may be disposed below (e.g., in the -z direction) the flexible display 230 or the cover display 235. For example, the second camera 242 and/or the third camera 243 may include an under display camera (UDC) and/or a punch hole camera.

According to an embodiment, the first housing part 210 and the second housing part 220 may be rotatably coupled. For example, the second housing part 220 may be rotatably coupled to the first housing part 210 via the hinge assembly 250.

According to an embodiment, the hinge assembly 250 may rotatably connect the first housing part 210 and the second housing part 220. The hinge assembly 250 may be disposed between the first housing part 210 and the second housing part 220 of the foldable electronic device 200 so that the foldable electronic device 200 may be folded. The hinge assembly 250 may enable the foldable electronic device 200 to change from the unfolded state to the folded state. The hinge assembly 250 may enable the foldable electronic device 200 to change from the folded state to the unfolded state. For example, the hinge assembly 250 may maintain the foldable electronic device 200 in an intermediate state between the unfolded state and the folded state.

According to an embodiment, the unfolded state may be referred to as a state in which a first direction toward which the first portion 231 faces and a second direction toward which the second portion 232 faces are substantially the same. The folded state may be referred to as a state in which the first direction is substantially opposite to the second direction. When the foldable electronic device 200 is in the folded state, the first housing part 210 and the second housing part 220 may be stacked or overlapped.

According to an embodiment, when the foldable electronic device 200 is in the folded state and the intermediate state, the first direction and the second direction may be different from each other. For example, when the foldable electronic device 200 is in the folded state, the first direction and the second direction may be opposite to each other. For example, when the foldable electronic device 200 is in the intermediate state, the first direction may form an angle with respect to the second direction.

For example, the foldable electronic device 200 may include at least one conductive portion 214a or 224a and at least one non-conductive portion 214b or 224b included in the first side surface 213 and/or the third side surface 223. For example, at least one conductive portion 214a or 224a may be separated from another conductive portions in the first side surface 213 and/or the third side surface 223 by contacting the at least one non-conductive portion 214b or 224b. In an embodiment, at least one conductive portion 214a or 224a may operate as an antenna radiator for communicating with an external electronic device.

Referring to FIG. 2C, the hinge assembly 250 may include a hinge cover 251, a first hinge plate 252, a second hinge plate 253, and a plurality of hinge modules 254. The hinge cover 251 may at least partially surround components of the hinge assembly 250 and form an outer surface of the hinge assembly 250. When the foldable electronic device 200 is in the folded state, the hinge cover 251 may at least partially be exposed to the outside of the foldable electronic device 200 through a space between the first housing part 210 and the second housing part 220. When the foldable electronic device 200 is in the unfolded state, the hinge cover 251 may be covered by the first housing part 210 and the second housing part 220 and may not be exposed to the outside of the foldable electronic device 200. The hinge cover 251 may be referred to as a hinge housing part.

According to an embodiment, the first hinge plate 252 and the second hinge plate 253 may be operably coupled with the first housing part 210 and the second housing part 220, respectively, thereby rotatably connecting the first housing part 210 and the second housing part 220. For example, the first hinge plate 252 may be coupled with a first support portion 215 of the first housing part 210, and the second hinge plate 253 may be coupled with a second support portion 227 of the second housing part 220. As the first hinge plate 252 and the second hinge plate 253 are operably coupled to the first support portion 215 and the second support portion 227, respectively, the first housing part 210 and the second housing part 220 may be rotatable according to a rotation of the first hinge plate 252 and the second hinge plate 253.

According to an embodiment, the plurality of hinge modules 254 may rotate the first hinge plate 252 and the second hinge plate 253. For example, the plurality of hinge modules 254 may include gears that are engageable with each other and rotatable. The first hinge plate 252 and the second hinge plate 253 may rotate based on a rotational motion of the gears of the plurality of hinge modules 254.

According to an embodiment, the first housing part 210 may include a first support portion 215 and a rear cover 216. The first support portion 215 may be disposed inside the first housing part 210 and may support at least one component disposed within the first housing part 210. The rear cover 216 may at least partially form the second side 212 of the first housing part 210. For example, the second housing part 220 may include the second support portion 227. The second support portion 227 may be disposed inside the second housing part 220 and may support at least one component disposed within the second housing part 220. For example, the cover display 235 may be disposed below (e.g., in the -z direction) the second support portion 227. According to an embodiment, a flexible display (e.g., the flexible display 230 of FIG. 2A) may define a front side of the foldable electronic device 200, and the rear cover 216 opposite to the flexible display may define a rear side of the foldable electronic device 200.

According to an embodiment, the foldable electronic device 200 may include a plurality of electronic components for implementing various functions in addition to the one or more cameras 240 described above. For example, the foldable electronic device 200 may include a first printed circuit board 261, a second printed circuit board 262, a flexible printed circuit board 263, and/or a battery 189. The above-described electronic components are only exemplary and are not limited thereto.

For example, the first printed circuit board 261 and the second printed circuit board 262 may provide electrical connections between components within the foldable electronic device 200, respectively. For example, the first printed circuit board 261 may be disposed within the first housing part 210, and the second printed circuit board 262 may be disposed within the second housing part 220. The first printed circuit board 261 may provide electrical connections between electronic components disposed within the first housing part 210. The second printed circuit board 262 may provide electrical connections between electronic components disposed within the second housing part 220. The flexible printed circuit board 263 may electrically connect the first printed circuit board 261 and the second printed circuit board 262. For example, the flexible printed circuit board 263 may extend from the first printed circuit board 261 across the hinge assembly 250 to the second printed circuit board 262. For example, the flexible printed circuit board 263 may at least partially overlap the hinge assembly 250.

According to an embodiment, the battery 189, which is a device for supplying power to at least one component of the foldable electronic device 200, may include, for example, a non-rechargeable primary battery and/or a rechargeable secondary battery.

According to an embodiment, the foldable electronic device 200 may include a plurality of antennas ANT1, ANT2, ANT3, or ANT4 to be used for communication with an external electronic device. For example, the foldable electronic device 200 may include a main antenna ANT1, a sub antenna ANT2, an ultra-wide band (UWB) antenna ANT3, and/or an antenna for short-range wireless communication ANT4. However, it is not limited thereto. For example, the main antenna ANT1 may include one or more conductive portions forming at least a portion of the first housing part 210 or the second housing part 220. For example, the main antenna ANT1 may include a plurality of conductive portions forming a periphery portion of the first housing part 210. For example, the main antenna ANT1 may further include conductive portions forming an upper periphery or a side periphery of the first housing part 210. The main antenna ANT1 may be configured to transmit and/or receive signals in various frequency bands, through each of the plurality of conductive portions or a combination of the plurality of conductive portions.

Hereinafter, one or more components described below with reference to the drawings may be implemented in conjunction with the components of the foldable electronic device 200 described with reference to FIGS. 2A, 2B, and 2C. The same reference numerals may be assigned to components that are identical to the above-described components, and redundant descriptions may be omitted. In the present disclosure, terms indicating positions such as 'above' and 'below' may be used to describe relative positions between components, and do not define an absolute position relationship. For example, if the foldable electronic device 200 illustrated in the drawings is flipped over, 'above' and 'below' may be swapped with each other.

According to an embodiment, the hinge assembly 250 may be configured to provide an unfolding movement and a folding movement of the foldable electronic device 200. In the present disclosure, the folding movement, which is an operation of the foldable housing 201 to change a state of the foldable electronic device 200 from an unfolded state (e.g., the state illustrated in FIG. 2A) to a folded state (e.g., the state illustrated in FIG. 2B), may be referred to as an operation in which the second housing part 220 rotates in a first rotational direction (e.g., counterclockwise) with respect to the first housing part 210. In the present disclosure, the unfolding movement, which is an operation of the foldable housing 201 to change the state of the foldable electronic device 200 from the folded state to the unfolded state, may be referred to as an operation in which the second housing part 220 rotates in a second rotational direction (e.g., clockwise) with respect to the first housing part 210.

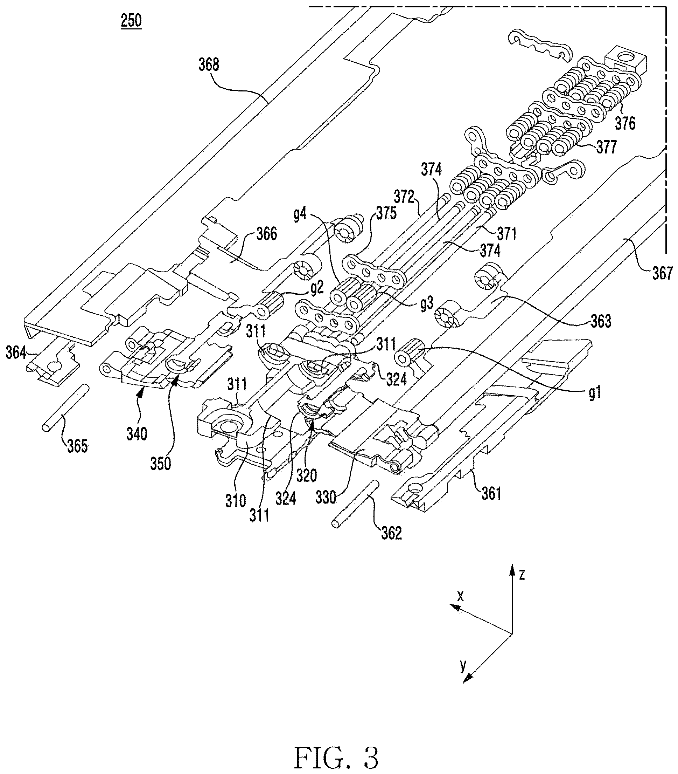

In the present disclosure, for convenience of explanation, the folding movement and the unfolding movement are described based on a rotation movement of the second housing part 220 with respect to the first housing part 210. For example, when a user holds the first housing part 210 by hand and rotates the second housing part 220, the state of the foldable electronic device 200 may be changed as the second housing part 220 rotates with respect to the first housing part 210. However, the folding movement and the unfolding movement are not defined solely by the rotation of the second housing part 220, but are defined by a change in a relative positional relationship between the first housing part 210 and the second housing part 220. For example, the rotation of the first housing part 210 and the rotation of the second housing part 220 may be linked by gears (e.g., the first gear g1, the second gear g2, the third gear g3, and the fourth gear g4 of FIG. 3) of the hinge assembly 250 described below.

FIG. 3 is an exploded perspective view of a hinge assembly of a foldable electronic device according to an embodiment.

According to an embodiment, the hinge assembly 250 may include components for rotatably connecting a first housing part (e.g., the first housing part 210 of FIG. 2A) and a second housing part (e.g., the second housing part 220 of FIG. 2A). The first housing part 210 and the second housing part 220 may be rotatably connected to each other through the hinge assembly 250. When an external force is applied to the first housing part 210 and/or the second housing part 220, components of the hinge assembly 250 may operate in response to the external force. The external force may be referred to as a torque provided from a user to the first housing part 210 and/or the second housing part 220 to change a state of the foldable electronic device 200.

According to an embodiment, the hinge assembly 250 may include a bracket 310 and rotators rotatably coupled to the bracket 310. The rotators may include a first rotator 320 and a second rotator 330 for a rotation of the second housing part 220, and a third rotator 340 and a fourth rotator 350 for rotation of the first housing part 210. The bracket 310 may be referred to as a rotation bracket or a rotator bracket. The rotators may be part of each hinge module of the hinge modules 254 of FIG. 2C.

According to an embodiment, the first rotator 320 may correspond to the fourth rotator 350, and the second rotator 330 may correspond to the third rotator 340. For example, a structure of the first rotator 320 may be substantially identical to a structure of the fourth rotator 350, and a structure of the second rotator 330 may be substantially identical to a structure of the third rotator 340. Within the present disclosure, descriptions of the first rotator 320 may be substantially identically applied to the fourth rotator 350, and descriptions of the second rotator 330 may be substantially identically applied to the third rotator 340.

According to an embodiment, the first rotator 320 may be rotatably coupled to the bracket 310. The first rotator 320 being rotatably coupled to the bracket 310 may be referred to as the first rotator 320 being directly coupled to the bracket 310 and being rotatable with respect to the bracket 310. For example, the bracket 310 may include a first rail portion 311, and the first rotator 320 may include a second rail portion 324, inserted into the first rail portion 311 and slidable along the first rail portion 311. The first rotator 320 may be rotatably coupled to the bracket 310 through the second rail portion 324 inserted into the first rail portion 311 of the bracket 310.

According to an embodiment, the second rotator 330 may be coupled to the first rotator 320. The second rotator 330 may be rotatably coupled to the bracket 310 through the first rotator 320. That the second rotator 330 being rotatably coupled to the bracket 310 through the first rotator 320 may be referred to as the second rotator 330 being indirectly coupled to the bracket 310 through the first rotator 320 coupled to the bracket 310, rather than being directly coupled to the bracket 310.

According to an embodiment, the second rotator 330 may be coupled to the second housing part 220. For example, the hinge assembly 250 may include a first coupling bracket 361 coupled to the second housing part 220. The second rotator 330 may be coupled to the first coupling bracket 361 coupled to the second housing part 220. As the second rotator 330 is coupled to the first coupling bracket 361 directly coupled to the second housing part 220, the second rotator 330 may be coupled to the second housing part 220. For example, a first coupling member 362 (e.g., a pin) may be inserted into the second rotator 330 and the first coupling bracket 361 to couple the second rotator 330 to the first coupling bracket 361. When the second housing part 220 rotates, the first coupling bracket 361 coupled to the second housing part 220 may rotate in conjunction with the second housing part 220. According to the rotation of the first coupling bracket 361, the second rotator 330 coupled to the first coupling bracket 361 may rotate in conjunction with the first coupling bracket 361. When an external force is applied to the second housing part 220, the second housing part 220 may rotate with respect to the first housing part 210, and the first coupling bracket 361 and the second rotator 330 may rotate according to the rotation of the second housing part 220.

According to an embodiment, the first rotator 320 may be separated from the second housing part 220. The first rotator 320 being separated from the second housing part 220 may be referred to as the first rotator 320 not being coupled to the first coupling bracket 361 that is directly coupled to the second housing part 220. Unlike the second rotator 330 coupled to the first coupling bracket 361, the first rotator 320 may not be coupled to the first coupling bracket 361. As the first rotator 320 is separated from the second housing part 220, the first rotator 320 may be configured to rotate by the rotation of the second rotator 330, rather than directly rotating by the rotation of the second housing part 220. As the second housing part 220 rotates, the second rotator 330 coupled to the second housing part 220 through the first coupling bracket 361 rotates, and as the second rotator 330 rotates, the first rotator 320 may rotate.

According to an embodiment, since the second rotator 330 is rotatably coupled to the bracket 310 through the first rotator 320, the second rotator 330 may be configured to rotate with respect to the bracket 310, through the first rotator 320, according to a folding movement or an unfolding movement. According to an embodiment, when the second rotator 330 starts to rotate according to the folding movement or the unfolding movement, the first rotator 320 may be configured to, based on a rotation angle of the second rotator 330 reaching a threshold angle, start rotating with respect to the bracket 310 in conjunction with the second rotator 330, rather than rotating directly with respect to the bracket 310.

For example, when the foldable electronic device 200 is changed from the unfolded state to the folded state, an external force causing rotation may be applied to the second housing part 220. In response to the external force, the first coupling bracket 361 coupled to the second housing part 220 and the second rotator 330 coupled to the first coupling bracket 361 may rotate. Even when the rotation of the second rotator 330 starts, the first rotator 320 may not rotate until a rotation angle of the second rotator 330 reaches a first threshold angle (e.g., about 20 degrees). The first rotator 320 may be configured to maintain a position until the rotation angle of the second rotator 330 reaches the first threshold angle. When the rotation angle of the second rotator 330 reaches the first threshold angle, the first rotator 320 may be configured to start rotating in conjunction with the second rotator 330. The first rotator 320 and the second rotator 330 may rotate in conjunction with each other until the foldable electronic device 200 is in a folded state. Since the first rotator 320 may rotate in conjunction with the second rotator 330 at the first threshold angle or greater, a total rotation angle of the first rotator 320 according to the folding movement may be smaller than a total rotation angle of the second rotator 330. Since the first rotator 320 may rotate with the second rotator 330 at the first threshold angle or greater, the total rotation angle of the first rotator 320 according to the folding movement may be smaller than the total rotation angle of the second rotator 330.

In a case of an integrated rotator, according to a rotation of the rotator, a portion of the rotator connected to the bracket 310 may also start to rotate. As one rotator connects between a foldable housing (e.g., the first housing part 210 or the second housing part 220 of FIG. 2A) and the bracket 310, a rotation angle of a portion of the rotator coupled to a foldable housing (e.g., the first housing part 210 or the second housing part 220 of FIG. 2A) and a rotation angle of a portion (e.g., a rail portion) of the rotator connected to the bracket 310 may be substantially the same. When a thickness of the foldable electronic device 200 is thin, a thickness of the rotator may also be formed to be thin. When the thickness of the rotator is formed to be thin, a length of a portion (e.g., a rail portion) of the rotator inserted into the first rail portion 311 of the bracket 310 in the folded state may be relatively reduced. As the length is reduced, it is difficult for the rotator to be stably coupled to the bracket 310, so the rigidity of the foldable electronic device 200 in the folded state may be weakened. For example, the rail portion of the rotator may be easily separated from the first rail portion 311 of the bracket 310.

According to an embodiment, the foldable electronic device 200 may be configured such that the first rotator 320 is formed as a separation part separated from the second rotator 330 and the rotation angle of the first rotator 320 is limited. As described above, since a rotation angle of the first rotator 320 is smaller than a rotation angle of the second rotator 330 in the folding movement, a length of the second rail portion 324 of the first rotator 320 inserted into the first rail portion 311 of the bracket 310 may relatively increase in the folded state. As the length increases, the first rotator 320 may be stably coupled to the bracket 310 in the folded state, so the rigidity of the foldable electronic device 200 may be improved.

According to an embodiment, since the rotation of the first housing part 210 and the rotation of the second housing part 220 are linked to each other, each component of components for the rotation of the second housing part 220 may correspond to a corresponding component of components for the rotation of the first housing part 210.

For example, the first coupling bracket 361 may be coupled to a first arm 363 including a first gear g1. The first gear g1 may be engaged with a second gear g2. The second gear g2 may be engaged with a third gear g3. The third gear g3 may be coupled to a second arm 366 including a fourth gear g4. When the second housing part 220 rotates, the first coupling bracket 361 coupled to the second housing part 220 may rotate in conjunction with the second housing part 220. According to the rotation of the first coupling bracket 361, the first arm 363 coupled to the first coupling bracket 361 may rotate in conjunction with the first coupling bracket 361. According to the rotation of the first arm 363, the first gear g1 may rotate. The rotation of the first gear g1 may cause a rotation of the second gear g2 and a rotation of the third gear g3. According to the rotation of the third gear g3, the second arm 366 including the fourth gear g4 engaged with the third gear g3 may rotate. The second arm 366 may be coupled to the second coupling bracket 364 coupled to the first housing part 210. The second coupling bracket 364 may be coupled to the third rotator 340 through the second coupling member 365. The third rotator 340 may be coupled to the fourth rotator 350, which is rotatably coupled to the bracket 310. The second coupling bracket 364 and the third rotator 340 may rotate according to the rotation of the second arm 366. When a rotation angle of the third rotator 340 reaches a first threshold angle (e.g., about 20 degrees), the fourth rotator 350 coupled to the third rotator 340 may rotate in conjunction with the third rotator 340. The second gear g2 and the third gear g3 may be configured to transmit rotational force between the first gear g1 and the second gear g2. The second gear g2 and the third gear g3 may be referred to as idle gears in terms of transmitting rotational force. The hinge assembly 250 may include a first support plate 367 and a second support plate 368 for supporting a flexible display (e.g., the flexible display 230 of FIG. 2C).

The hinge assembly 250 may include shafts for gears. For example, the hinge assembly 250 may include a first shaft 371 coupled to the first gear g1, a second shaft 372 coupled to the second gear g2, a third shaft 373 coupled to the third gear g3, and a fourth shaft 374 coupled to the fourth gear g4. The shafts may fix a rotational axis of each of the gears, and each of the gears may rotate about the rotational axis. The hinge assembly 250 may include a shaft bracket 375 for fixing the shafts.

The hinge assembly 250 may include a CAM mechanism 376 and elastic members 377. The CAM mechanism 376 may include CAM detents that include ridges engaged with each other. In the folding movement or unfolding movement, the CAM detents engaged with each other may move along the ridge, thereby causing compression of the elastic members 377. The compression of the elastic members 377 may cause frictional force between the CAM detents. The frictional force may act as a force that resists rotation (e.g., torque), thereby providing an intermediate state of the foldable electronic device 200. The intermediate state, which is a state between the folded state and the unfolded state, may be referred to as a free stop or flex mode. The frictional force may provide haptic feedback to the user in the folding movement or the unfolding movement.

Hereinafter, a detailed structure of rotators will be described.

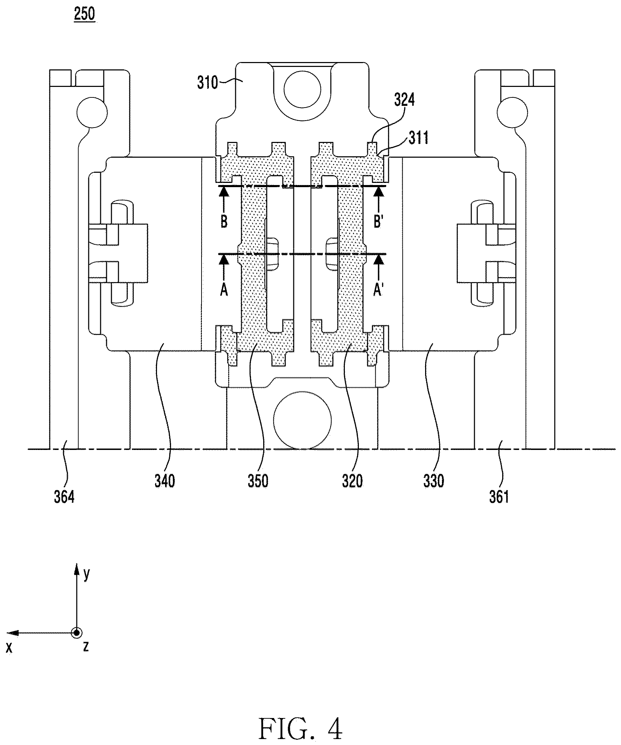

FIG. 4 illustrates a portion of a hinge assembly according to an embodiment.

Referring to FIG. 4, the first rotator 320 and the fourth rotator 350 may be directly coupled to the bracket 310. The first rotator 320 and the fourth rotator 350 may be rotatably coupled to the bracket 310. The second rotator 330 and the third rotator 340 may be rotatably coupled to the bracket 310 through the first rotator 320 and the fourth rotator 350, respectively. For example, the second rotator 330 may be coupled to the first rotator 320 and rotatably coupled to the bracket 310 through the first rotator 320. For example, the third rotator 340 may be coupled to the fourth rotator 350 and rotatably coupled to the bracket 310 through the fourth rotator 350.

According to an embodiment, the second rotator 330 may be coupled to a second housing part (e.g., the second housing part 220 of FIG. 2A). For example, the second rotator 330 may be coupled to the first coupling bracket 361 coupled to the second housing part 220. Since the second rotator 330 is coupled to the second housing part 220 through the first coupling bracket 361, it may be configured to rotate in conjunction with the second housing part 220. When a rotation angle of the second rotator 330 reaches a first threshold angle, the second rotator 330 may be configured to cause a rotation of the first rotator 320. The first rotator 320 may be configured to start to rotate with respect to the bracket 310 in conjunction with the second rotator 330, based on the rotation angle of the second rotator 330 reaching the first threshold angle.

According to an embodiment, the third rotator 340 may be coupled to a first housing part (e.g., the first housing part 210 of FIG. 2A). For example, the third rotator 340 may be coupled to the second coupling bracket 364 coupled to the first housing part 210. Since the third rotator 340 is coupled to the first housing part 210 through the second coupling bracket 364, it may be configured to rotate in conjunction with the first housing part 210. When the rotation angle of the third rotator 340 reaches the first threshold angle, the third rotator 340 may be configured to cause a rotation of the fourth rotator 350. The fourth rotator 350 may be configured to start to rotate with respect to the bracket 310 in conjunction with the third rotator 340, based on the rotation angle of the third rotator 340 reaching the first threshold angle.

According to an embodiment, when a foldable electronic device (e.g., the foldable electronic device 200 of FIG. 2A) is switched from the unfolded state to the folded state via the hinge assembly 250, a difference between the rotation angle of the second rotator 330 and the rotation angle of the first rotator 320 and a difference between the rotation angle of the fourth rotator 350 and the rotation angle of the third rotator 340 may be caused. A total rotation angle of the first rotator 320 may be smaller than a total rotation angle of the second rotator 330, and a total rotation angle of the fourth rotator 350 may be smaller than a total rotation angle of the third rotator 340. Since the first rotator 320 and the fourth rotator 350 are directly coupled to the bracket 310, when the rotation angle of the first rotator 320 and the rotation angle of the fourth rotator 350 are relatively small, a length of the first rotator 320 and a length of the fourth rotator 350, which are coupled to the bracket 310, may relatively increase in the folded state of the foldable electronic device 200. As the length increases, the first rotator 320 and the fourth rotator 350 may be firmly coupled to the bracket 310 in the folded state, so the rigidity of the foldable electronic device 200 may be improved. The second rotator 330 and the third rotator 340 may not cause the rotation of the first rotator 320 and the rotation of the fourth rotator 350 until they rotate by the first threshold angle. The second rotator 330 and the third rotator 340 may have a structure for causing the rotation of the first rotator 320 and the rotation of the fourth rotator 350 when they rotate by the first threshold angle, respectively.

According to an embodiment, a difference in rotation angles caused in the folding movement may also be substantially the same in the unfolding movement. When the difference in rotation angles caused in the folding movement is not caused in the unfolding movement, stable folding movement and unfolding movement may not be possible.

Hereinafter, a structure for causing a difference in rotation angles in the folding movement and the unfolding movement will be described. In the following description, descriptions for the first rotator 320 and the second rotator 330 are disclosed, and the descriptions may be substantially equally applied to the fourth rotator 350 and the third rotator 340.

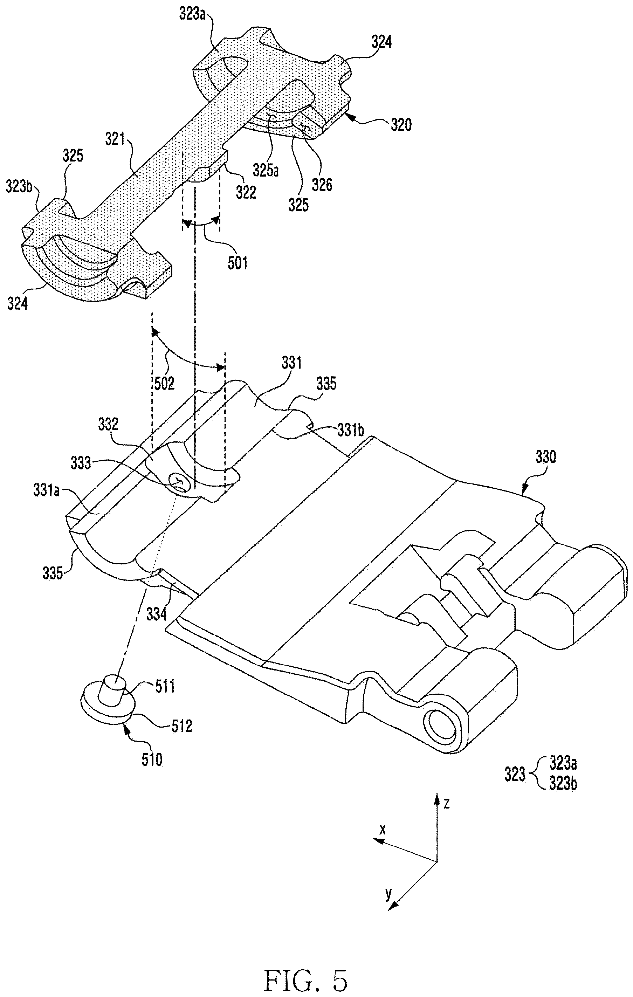

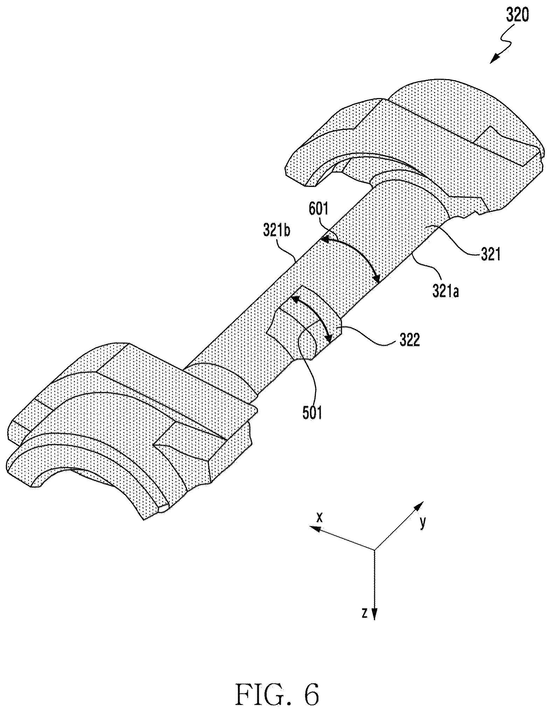

FIG. 5 is an exploded view of a first rotator and a second rotator. FIG. 6 is a perspective view of a first rotator.

Referring to FIG. 5, a first rotator 320 may include a body portion 321, a protruding portion 322, a wing portion 323, a second rail portion 324, and a third rail portion 325. A second rotator 330 may include a first groove portion 331, a second groove portion 332, a through hole 333, a stopper portion 334, and a fourth rail portion 335.

According to an embodiment, the first rotator 320 and the second rotator 330 may be coupled to each other. When the first rotator 320 and the second rotator 330 are coupled to each other, the body portion 321 of the first rotator 320 may be disposed on the first groove portion 331 of the second rotator 330. As a portion of a front surface of the second rotator 330 is dented to correspond to a shape of the body portion 321 of the first rotator 320, the first groove portion 331 may be formed. The front surface of the second rotator 330 may be referred to as a surface of the second rotator 330 facing the first rotator 320 (e.g., facing in the +z direction). The body portion 321 may have a cross-section of an approximately semicircular shape, and the first groove portion 331 may have an arc-shaped cross-section corresponding to the semicircular shape. A circumference (e.g., the circumference 601 of FIG. 6) of the semicircle that is the cross-sectional shape of the body portion 321 may correspond to a circumference of the arc that is the cross-sectional shape of the first groove portion 331. The circumference of the semicircle may be referred to as a circumference of the body portion 321, and the circumference of the arc may be referred to as a circumference of the first groove portion 331.

According to an embodiment, the second groove portion 332 may be formed by a portion of the first groove portion 331 being dented. A circumference (e.g., the second circumference 502) of the second groove portion 332 may correspond to the circumference of the first groove portion 331. However, the present disclosure is not limited thereto. For example, the circumference of the second groove portion 332 may be smaller than or equal to the circumference of the first groove portion 331. For example, the second groove portion 332 may extend from a portion of a periphery 331a (e.g., first periphery) of the first groove portion 331 that extends linearly to a portion of another periphery 331b (e.g., second periphery) of the first groove portion 331 that is opposite to the first periphery. Since the second groove portion 332 is formed by a portion of the first groove portion 331 being dented, a thickness of the first groove portion 331 may be greater than a thickness of the second groove portion 332. The above-described circumference may be referred to as a length or circumference of arc. For example, a circumference or arc length of the second groove portion 332 may correspond to a circumference or arc length of the first groove portion 331.

According to an embodiment, the protruding portion 322 of the first rotator 320 may be protruded from the body portion 321 of the first rotator 320. For example, the protruding portion 322 may be protruded from a rear surface of the body portion 321 toward the second rotator 330 (e.g., in the -z direction). The rear surface may be referred to as a surface of the body portion 321 facing the -z direction in FIG. 5. When the body portion 321 of the first rotator 320 is disposed within the first groove portion 331 of the second rotator 330, the protruding portion 322 of the first rotator 320 may be disposed within the second groove portion 332 of the second rotator 330. The protruding portion 322 may have a cross-section that is roughly arc-shaped.

According to an embodiment, the wing portion 323 of the first rotator 320 may be connected to an end portion of the body portion 321. For example, the wing portion 323 may include a first wing portion 323a connected to an end portion of the body portion 321, and a second wing portion 323b connected to another end portion of the body portion 321 opposite to the end portion of the body portion 321. The descriptions of the wing portion 323 may be substantially equally applied to both the first wing portion 323a and the second wing portion 323b.

According to an embodiment, the second rail portion 324 and the third rail portion 325 may be disposed on the wing portion 323. For example, the third rail portion 325 may be formed on a surface of the wing portion 323 facing the body portion 321. The second rail portion 324 may be formed on another surface of the wing portion 323 opposite to the surface of the wing portion 323. The second rail portion 324 may be configured to be inserted into a first rail portion (e.g., the first rail portion 311 of FIG. 3) of a bracket (e.g., the bracket 310 of FIG. 3) and slide along the first rail portion 311. When the body portion 321 of the first rotator 320 is disposed within the first groove portion 331 of the second rotator 330, the fourth rail portion 335 of the second rotator 330 may be positioned on a front surface 325a of the third rail portion 325 of the first rotator 320. The front surface 325a of the third rail portion 325 may be referred to as a surface of the third rail portion 325 facing the +z direction in FIG. 5. When the body portion 321 of the first rotator 320 is disposed within the first groove portion 331 of the second rotator 330, the wing portion 323 of the first rotator 320 may be positioned in an outer side of the first groove portion 331.

According to an embodiment, the hinge assembly 250 may include a stopper 510 (e.g., a first stopper). The stopper 510 may be inserted into the through hole 333 disposed within the second groove portion 332. When the stopper 510 is inserted into the through hole 333, a portion of the stopper 510 may protrude onto the second groove portion 332 of the second rotator 330.

According to an embodiment, the through hole 333 may be formed within the second groove portion 332. For example, the through hole 333 may be formed by passing through a portion of the second groove portion 332 of the second rotator 330. The through hole 333 may be positioned at a center of the second groove portion 332.

According to an embodiment, the stopper 510 may include a neck portion 511 and a flange portion 512. The neck portion 511 is a portion of the stopper 510 that is inserted into the through hole 333, and when the stopper 510 is fully inserted into the through hole 333, a portion of the neck portion 511 may protrude onto the second groove portion 332. A length of the neck portion 511 may be greater than a thickness of the second groove portion 332, so that a portion of the neck portion 511 protrudes onto the second groove portion 332. The neck portion 511 may have a diameter corresponding to a diameter of the through hole 333. As the diameter of the neck portion 511 corresponds to the diameter of the through hole 333, the stopper 510 may be coupled within the through hole 333 in a tight fit manner. The flange portion 512 may be contacted with an outer surface of the second rotator 330 to support the neck portion 511 inserted into the through hole 333. The flange portion 512 may support the neck portion 511 by having a diameter larger than the diameter of the neck portion 511. For example, A material forming the stopper 510 may be different from a material forming the second rotator 330. The stopper 510 may be formed of a non-metallic material. At least a portion of the stopper 510 may include an elastic material.

According to an embodiment, a first circumference 501 of the protruding portion 322 may be shorter than a second circumference 502 of the second groove portion 332. The first circumference 501 of the protruding portion 322 may be referred to as a developed length of the protruding portion 322 when the protruding portion 322 having an arc-shaped cross-section is unfolded flat. The second circumference 502 of the second groove portion 332 may be referred to as a developed length of the second groove portion 332 when the second groove portion 332 having an arc-shaped cross-section is unfolded flat. Since the first circumference 501 is shorter than the second circumference 502, the second groove portion 332 may not be entirely occupied by the protruding portion 322. For example, when the protruding portion 322 is disposed within the second groove portion 332, a portion of the second groove portion 332 may be occupied by the protruding portion 322, and a remaining portion of the second groove portion 332 may not be occupied by the protruding portion 322.

Referring to FIG. 6, the body portion 321 of the first rotator 320 may have a cross-section having an approximately semicircular shape. A circumference 601 of the body portion 321 having a semicircular shape may be referred to as a developed length of the body portion 321 extending from a periphery 321a (e.g., first periphery) of the body portion 321 to another periphery 321b (e.g., second periphery) of the body portion 321. As described above, the circumference of the body portion 321 may correspond to the circumference of the first groove portion 331, and the circumference of the first groove portion 331 may correspond to the second circumference (e.g., the second circumference 502 of FIG. 5) of the second groove portion 332, and as a result, the circumference 601 of the body portion 321 may be substantially the same as the second circumference 502 of the second groove portion 332.

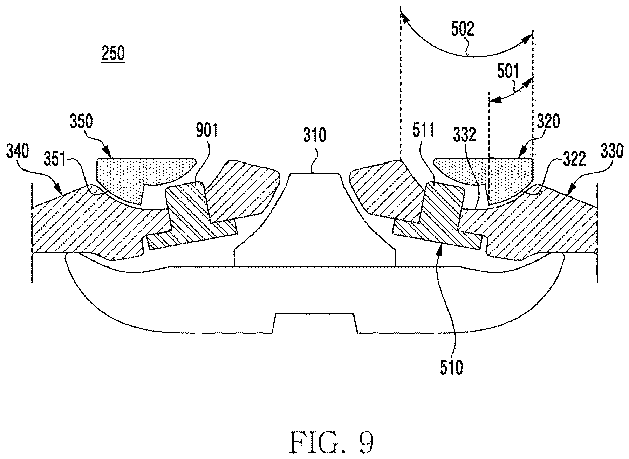

According to an embodiment, the protruding portion 322 may extend from the periphery 321a of the body portion 321 to a point between the periphery 321a and the other periphery 321b of the body portion 321. The protruding portion 322 does not extend from the periphery 321a to the other edge 321b, but extends from the periphery 321a to the point, so the first circumference 501 of the protruding portion 322 may be shorter than the circumference 601 of the body portion 321. As the first circumference 501 of the protruding portion 322 is formed shorter than the circumference 601 of the body portion 321, which is substantially the same as the second circumference 502 of the second groove portion 332, the first rotator 320 may be configured to start to rotate based on the rotation angle of the second rotator 330 reaching the first threshold angle. The operation of the first rotator 320 starting to rotate in conjunction with the first rotator 320 will be described later with reference to FIGS. 9, 10, 11, and 12.

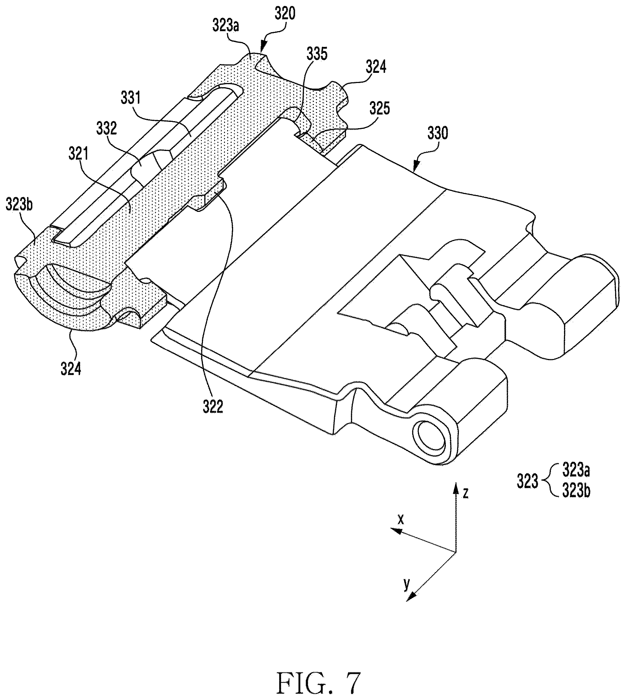

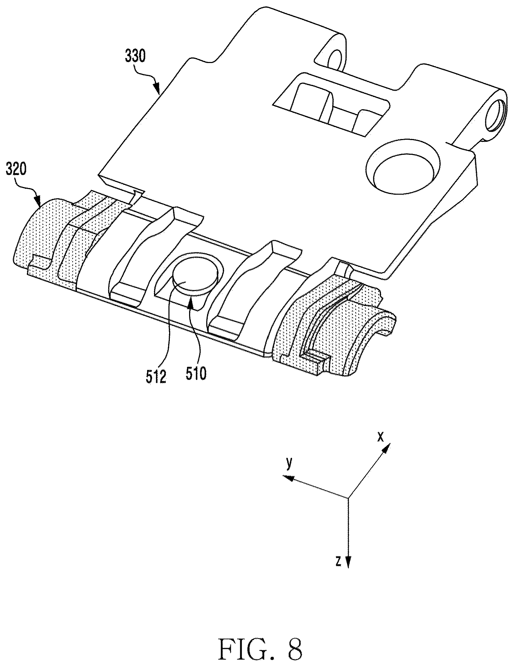

FIGS. 7 and 8 are perspective views of a first rotator and a second rotator coupled to each other.

FIG. 7 is a perspective view in which the first rotator 320 and the second rotator 330 coupled with each other are viewed from above. Referring to FIG. 7, the first rotator 320 and the second rotator 330 may be coupled to each other. When the first rotator 320 is coupled with the second rotator 330, the body portion 321 of the first rotator 320 may be disposed within the first groove portion 331 of the second rotator 330, and the wing portion 323 of the first rotator 320 may be positioned at an outer side of the first groove portion 331. For example, the first wing portion 323a may be positioned at a side of the first groove portion 331, and the second wing portion 323b may be positioned at another side of the first groove portion 331. The fourth rail portion 335 of the second rotator 330 may be positioned at a front surface (e.g., the front surface 325a of FIG. 5) of the third rail portion 325 of the first rotator 320. The first rotator 320 may be rotatably coupled to a bracket (e.g., the bracket 310 of FIG. 3). For example, the second rail portion 324 of the first rotator 320 may be inserted into a first rail portion (e.g., the first rail portion 311 of FIG. 3) of the bracket 310. The first rotator 320 may be rotatably coupled to the bracket 310 through the second rail portion 324.

According to an embodiment, the protruding portion 322 of the first rotator 320 may be disposed within the second groove portion 332 of the second rotator 330. As described above, since a first circumference (e.g., the first circumference 501 of FIG. 5) of the protruding portion 322 is shorter than a second circumference (e.g., the second circumference 502 of FIG. 5) of the second groove portion 332, the protruding portion 322 may not entirely occupy the second groove portion 332, but may occupy only a portion of the second groove portion 332.

FIG. 8 is a perspective view in which the first rotator 320 and the second rotator 330 coupled with each other are viewed from below. Referring to FIG. 8, the stopper 510 may be inserted into a through hole (e.g., the through hole 333 of FIG. 5) of the second rotator 330. Since the flange portion 512 of the stopper 510 has a diameter larger than a diameter of the through hole 333, the flange portion 512 of the stopper 510 may be contacted with an outer surface of the second rotator 330 without being inserted into the through hole 333. The flange portion 512 contacted with the second rotator 330 may support a neck portion (e.g., the neck portion 511 of FIG. 5) of the stopper 510 inserted into the through hole 333.

According to an embodiment, when a hinge assembly (e.g., the hinge assembly 250 of FIG. 3) provides a folding movement that changes a state of a foldable electronic device (e.g., foldable electronic device 200 of FIG. 2A) from an unfolded state to a folded state, the second rotator 330 may start to rotate before the first rotator 320. The first rotator 320 may maintain its position without rotating until the rotation angle of the second rotator 330 reaches the first threshold angle according to the folding movement. The first rotator 320 may be configured to start to rotate with respect to the bracket 310 in conjunction with the second rotator 330 by the stopper 510 when the rotation angle of the second rotator 330 reaches the first threshold angle according to the folding movement. For example, the first rotator 320 may maintain the position without rotating while the second rotator 330 rotates in a first rotation range. The first rotator 320 may be configured to rotate in conjunction with the second rotator 330 while the second rotator 330 rotates in a second rotation range exceeding the first rotation range. The first rotation range may be referenced as a rotation angle of the second rotator 330 between 0 degrees and the first threshold angle. When the rotation angle of the second rotator 330 is 0 degrees, the foldable electronic device 200 may be in the unfolded state. The second rotation range may be referred to as a rotation angle of the second rotator 330 between the first threshold angle and a maximum rotation angle corresponding to a position of the second rotator 330 corresponding to the folded state of the foldable electronic device 200. For example, in a case that the first threshold angle is about 20 degrees and the folded state of the foldable electronic device 200 is provided when the second rotator 330 rotates by about 100 degrees, the first rotation range may be referred to as a rotation angle of the second rotator 330 of 0 degrees to about 20 degrees or less, and the second rotation range may be referred to as a rotation angle of the second rotator 330 of about 20 degrees to about 100 degrees or less.

Hereinafter, the movement of the first rotator 320 and the second rotator 330 according to the folding movement will be described later. The descriptions of the first rotator 320 and the second rotator 330 described later with reference to FIGS. 9, 10, 11, and 12 may be substantially equally applied to a fourth rotator (e.g., the fourth rotator 350 of FIG. 3) and a third rotator (e.g., the third rotator 340 of FIG. 3).

FIG. 9 is a cross-sectional view of a hinge assembly cut along line A-A' of FIG. 6 in an unfolded state of a foldable electronic device.

Referring to FIG. 9, the stopper 510 inserted into a through hole (e.g., the through hole 333 of FIG. 5) positioned at a center of the second groove portion 332 may protrude onto the second groove portion 332 of the second rotator 330. For example, the neck portion 511 may partially protrude onto the second groove portion 332 through the through hole 333. As described above, since the first circumference 501 of the protruding portion 322 is shorter than the second circumference 502 of the second groove portion 332, the protruding portion 322 may partially occupy the second groove portion 332. For example, an arc length of the protruding portion 332 may be shorter than an arc length of the second groove portion 332. For example, a thickness of the protruding portion 332 may be smaller than a depth of the second groove portion 332.

According to an embodiment, in an unfolded state of a foldable electronic device (e.g., the foldable electronic device 200 of FIG. 2A), the stopper 510 inserted into the through hole 333 and protruding onto the second groove portion 332 may be spaced apart from the protruding portion 322 of the first rotator 320. For example, the neck portion 511 of the stopper 510 protruding onto the second groove portion 332 may be spaced apart from the protruding portion 322 of the first rotator 320. A gap may be formed between the neck portion 511 of the stopper 510 and the protruding portion 322, which are spaced apart from each other.

A first housing part (e.g., the first housing part 210 of FIG. 2A) and/or a second housing part (e.g., the second housing part 220 of FIG. 2A) may be configured to rotate when an external force (e.g., torque) causing a folding movement to change a state of the foldable electronic device 200 from the unfolded state to the folded state is provided to a foldable housing (e.g., the foldable housing 201 of FIG. 2A). For convenience of explanation, the folding movement is described as a rotation of the second housing part 220 with respect to the first housing part 210. When the external force is provided to the second housing part 220, the second housing part 220 may be configured to rotate counterclockwise in response to the external force. The second rotator 330 coupled to the second housing part 220 through a first coupling bracket (e.g., the first coupling bracket 361 of FIG. 3) may be configured to rotate counterclockwise according to the rotation of the second housing part 220. An angle at which the second rotator 330 rotates by the external force provided in the unfolded state may be referred to as a rotation angle of the second rotator 330 according to the folding movement.

According to an embodiment, when the second rotator 330 starts to rotate counterclockwise, the first rotator 320 may maintain its position without rotating. Since the first rotator 320 is not coupled to the second housing part 220 and is separated from the second housing part 220, it may not rotate even when the second housing part 220 rotates. As the first rotator 320 maintains its position and the second rotator 330 rotates counterclockwise, a relative positional relationship between the first rotator 320 and the second rotator 330 may be changed. In the cross-sectional view illustrated in FIG. 9, when the second rotator 330 rotates counterclockwise, a position of the stopper 510 may be changed in a direction approaching the protruding portion 322 of the first rotator 320. As the second rotator 330 rotates counterclockwise, a gap between the neck portion 511 of the stopper 510 and the protruding portion 322 of the first rotator 320 may decrease. As the rotation angle of the second rotator 330 according to the folding movement increases, the stopper 510 may become closer to the protruding portion 322 of the first rotator 320, and the gap may decrease.

According to an embodiment, until the rotation angle of the second rotator 330 according to the folding movement reaches the first threshold angle, the stopper 510 may be spaced apart from the protruding portion 322 of the first rotator 320 without contacting the protruding portion 322 of the first rotator 320. The stopper 510 may contact the protruding portion 322 of the first rotator 320, based on the rotation angle of the second rotator 330 reaching the first threshold angle according to the folding movement. The rotation angle of the second rotator 330 until the stopper 510 contacts the protruding portion 322 of the first rotator 320 may be referred to as a first rotation range.

The descriptions may be substantially equally applied to the third rotator 340 and the fourth rotator 350. For example, another stopper 901 inserted into the third rotator 340 may be spaced apart from the fourth rotator 350 without contacting the fourth rotator 350 in the unfolded state. The other stopper 901 (e.g., second stopper) may contact a protruding portion 351 of the fourth rotator 350 based on a rotation angle of the third rotator 340 reaching the first threshold angle according to the folding movement.

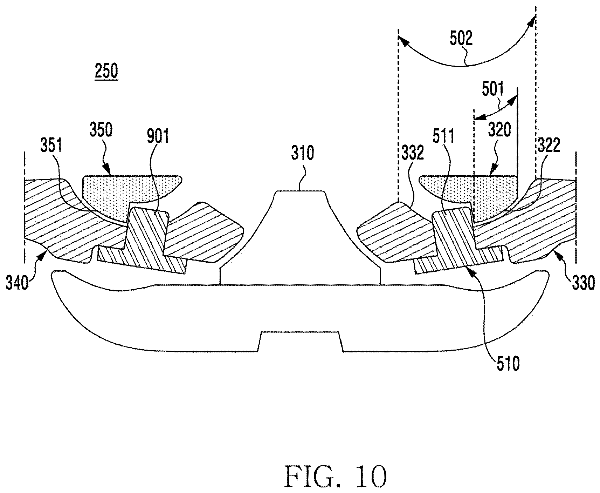

FIG. 10 is a cross-sectional view of a hinge assembly cut along line A-A' of FIG. 6 when a rotation angle of a second rotator according to a folding movement is a threshold angle.

Referring to FIG. 10, when the rotation angle of the second rotator 330 according to the folding movement reaches the first threshold angle, the stopper 510 may contact the protruding portion 322 of the first rotator 320. As the rotation angle of the second rotator 330 increases according to the folding movement, the stopper 510 approaches the protruding portion 322 of the first rotator 320, and when the rotation angle of the second rotator 330 reaches the first threshold angle, the stopper 510 may contact the protruding portion 322 of the first rotator 320. When the rotation angle of the second rotator 330 according to the folding movement reaches the first threshold angle, physical interference between the stopper 510 and the first rotator 320 may start.

According to various embodiments, a difference between a second circumference 502 of the second groove portion 332 and a first circumference 501 of the protruding portion 322 may correspond to the first threshold angle. As the difference between the second circumference 502 and the first circumference 501 increases, a gap between the stopper 510 and the protruding portion 322 of the first rotator 320 may increase in the unfolded state. As the gap increases, the first threshold angle for which the stopper 510 contacts the protruding portion 322 of the first rotator 320 may increase. As the difference between the second circumference 502 and the first circumference 501 decreases, the gap between the stopper 510 and the protruding portion 322 of the first rotator 320 may decrease in the unfolded state. As the gap decreases, the first threshold angle for which the stopper 510 contacts the protruding portion 322 of the first rotator 320 may decrease. Since the first threshold angle may correspond to a difference between the rotation angle of the first rotator 320 and the rotation angle of the second rotator 330 according to the folding movement, the first circumference 501 and the second circumference 502 may be adjusted to determine the first threshold angle based on a structure of a foldable electronic device (e.g., the foldable electronic device 200 of FIG. 2A). For example, the first threshold angle may be determined according to a structure of the foldable electronic device 200, such as a thickness of a foldable housing (e.g., the foldable housing 201 of FIG. 2A), a structure of a hinge assembly (e.g., the hinge assembly 250 of FIG. 3), a thickness of the first rotator 320, and a thickness of the second rotator 330, and the first circuitry 501 and the second circuitry 502 may be designed to correspond to the determined first threshold angle.

According to various embodiments, the gap between the stopper 510 and the protruding portion 322 of the first rotator 320 may correspond to the first threshold angle. In other words, the first threshold angle may vary as a function of the gap between the stopper 510 and the protruding portion 322 of the first rotator 320. Since the gap between the stopper 510 and the protruding portion 322 of the first rotator 320 may correspond to the first threshold angle, the gap may be adjusted to determine the first threshold angle. For example, the position and/or size of the through hole 333, and/or the position and/or size of the stopper 510 (e.g., the position where the stopper 510 (e.g., the neck portion 511 thereof) is inserted into the through hole 333 and/or protrudes the second groove portion 332) may be adjusted to form a desired first threshold angle.

According to an embodiment, based on the rotation angle of the second rotator 330 reaching the first threshold angle according to the folding movement, the first rotator 320 may be configured to start to rotate with respect to the bracket 310 in conjunction with the second rotator 330. As illustrated in FIG. 10, when the rotation angle of the second rotator 330 according to the folding movement is the first threshold angle, the stopper 510 may contact the protruding portion 322 of the first rotator 320. When the rotation angle of the second rotator 330 increases above the first threshold angle, the stopper 510 contacting the protruding portion 322 of the first rotator 320 may cause a rotation of the second rotator 330. The stopper 510 may push up the first rotator 320 by moving in a state of being in contact with the protruding portion 322 of the first rotator 320. The first rotator 320 may rotate in conjunction with the second rotator 330 by being pushed up by the stopper 510.

The above descriptions may be substantially equally applied to the third rotator 340 and the fourth rotator 350. For example, when a rotation angle of the third rotator 340 according to the folding movement reaches the first threshold angle, the other stopper 901 may contact the protruding portion 351 of the fourth rotator 350. According to an embodiment, based on the rotation angle of the third rotator 340 reaching the first threshold angle according to the folding movement, the fourth rotator 350 may be configured to start to rotate with respect to the bracket 310 in conjunction with the third rotator 340. When the rotation angle of the third rotator 340 increases above the first threshold angle, the other stopper 901 contacting the protruding portion 351 of the fourth rotator 350 may cause the rotation of the third rotator 340. The other stopper 901 may push up the fourth rotator 350 by moving in a state of being in contact with the protruding portion 351 of the fourth rotator 350. The fourth rotator 350 may rotate in conjunction with the third rotator 340 by being pushed up by the other stopper 901.

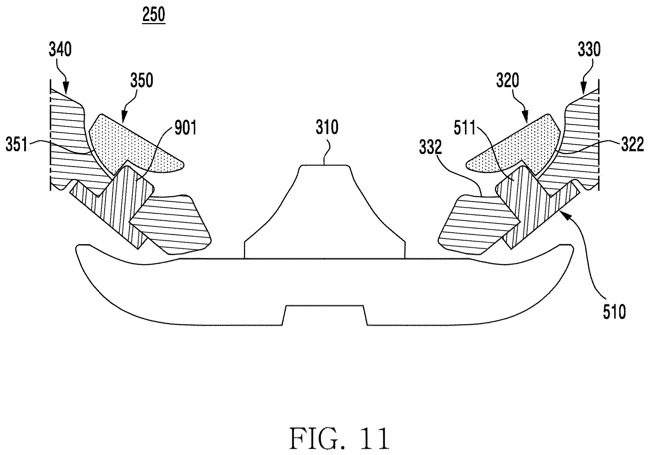

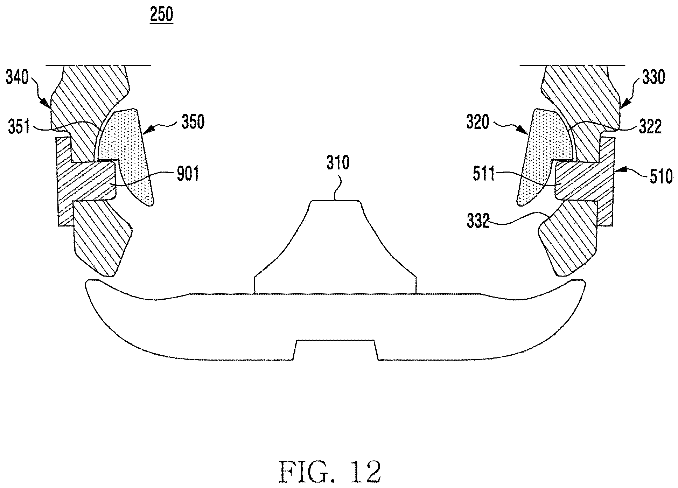

FIG. 11 is a cross-sectional view of a hinge assembly cut along line A-A' of FIG. 6 when a rotation angle of a second rotator exceeds a threshold angle. FIG. 12 is a cross-sectional view of a hinge assembly cut along line A-A' of FIG. 6 in a folded state of a foldable electronic device.

Referring to FIG. 11, the first rotator 320 may be configured to rotate in conjunction with the second rotator 330 as the rotation angle of the second rotator 330 according to the folding movement exceeds the first threshold angle. According to the rotation of the second rotator 330, a position of the stopper 510 inserted into the through hole 333 of the second rotator 330 may be changed. According to the change in the position of the stopper 510, the first rotator 320 including the protruding portion 322 contacting the neck portion 511 of the stopper 510 may be configured to rotate. While the second rotator 330 rotates beyond the first threshold angle, the protruding portion 322 of the first rotator 320 may maintain contact with the stopper 510.

For example, when the first threshold angle is about 20 degrees based on the unfolded state, while the second rotator 330 rotates within a first rotation range of 0 degrees to about 20 degrees from the unfolded state, the first rotator 320 may maintain its position without rotating. When the rotation angle of the second rotator 330 according to the folding movement reaches about 20 degrees, the stopper 510 may contact the protruding portion 322 of the first rotator 320. When the rotation angle of the second rotator 330 exceeds about 20 degrees, the stopper 510 may push up the first rotator 320, and the first rotator 320 may be configured to rotate in conjunction with the second rotator 330.

Referring to FIG. 12, as the folding movement is completed, the foldable electronic device 200 in the folded state may be provided. The first rotator 320, which is pushed up by the stopper 510, may be configured to rotate in conjunction with the second rotator 330. The first rotator 320 and the second rotator 330 may be configured to provide a folded state of the foldable electronic device 200.

The above descriptions may be substantially equally applied to the third rotator 340 and the fourth rotator 350. For example, based on the rotation angle of the third rotator 340 exceeding the first threshold angle, the fourth rotator 350 may rotate in conjunction with the third rotator 340. While the third rotator 340 rotates beyond the first threshold angle, the protruding portion 351 of the fourth rotator 350 may maintain contact with the other stopper 901.

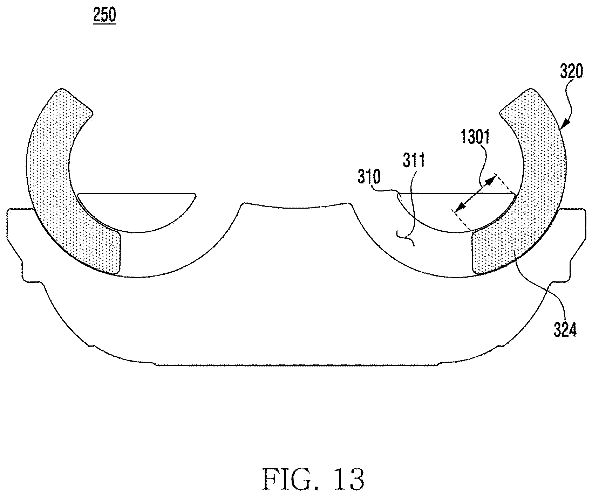

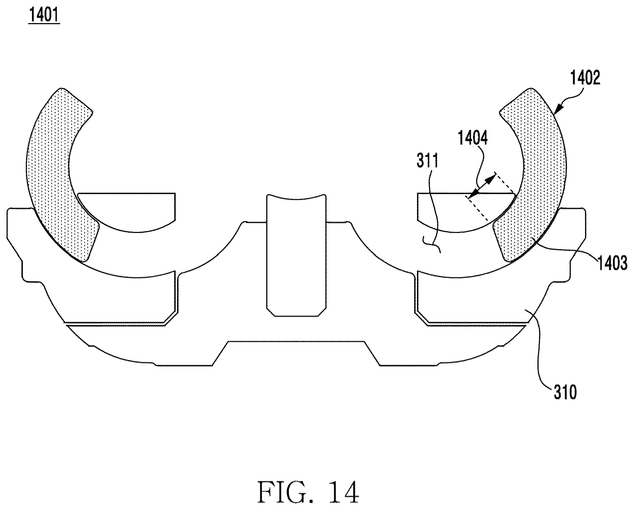

FIG. 13 illustrates a hinge assembly in a folded state of a foldable electronic device according to an embodiment. FIG. 14 illustrates a hinge assembly in a folded state of a foldable electronic device according to a comparative example.

Referring to FIG. 13, while a state of a foldable electronic device (e.g., the foldable electronic device 200 of FIG. 2A) is changed from an unfolded state to a folded state, a total rotation angle of a first rotator (e.g., the first rotator 320 of FIG. 3) may be smaller than a rotation angle of a second rotator (e.g., the second rotator 330 of FIG. 3).

According to an embodiment, since the first rotator 320 does not rotate until the rotation angle of the second rotator 330 reaches the first threshold angle, the rotation angle of the first rotator 320 according to the folding movement may be smaller than the rotation angle of the second rotator 330 according to the folding movement. The rotation angle of the first rotator 320 may be smaller than the rotation angle of the second rotator 330 by the first threshold angle. For example, when the first threshold angle is about 20 degrees and a total rotation angle of the second rotator 330 according to the folding movement is about 100 degrees, the rotation angle of the first rotator 320 according to the folding movement may be about 80 degrees. Since the second rotator 330 is not directly coupled to the bracket 310, but is indirectly coupled via the first rotator 320, the rotation angle of the first rotator 320 coupled to the bracket 310 may be different from the rotation angle of the second rotator 330. Since the first rotator 320 rotates about 80 degrees according to the folding movement, a length 1301 of a second rail portion 324 of the first rotator 320 inserted into a first rail portion 311 of the bracket 310 may be relatively long within the folded state of the foldable electronic device 200. In FIG. 13, the length 1301 of the second rail portion 324 inserted into the first rail portion 311 may be about 0.7 mm. The above-described numerical values are merely exemplary numerical values for describing the embodiment, and the embodiments of the present disclosure are not limited to the above numerical values.

FIG. 14 illustrates a hinge assembly 1401 according to a comparative example including an integrated rotator 1402. The integrated rotator 1402 may be referred to as a form in which a first rotator (e.g., the first rotator 320 of FIG. 3) and a second rotator (e.g., the second rotator 330 of FIG. 3) are formed integrally. The integrated rotator 1402 may be rotatably coupled to the bracket 310. Since the integrated rotator 1402 is directly inserted into the first rail portion 311 of the bracket 310 and rotates, a rotation angle of the integrated rotator 1402 according to the folding movement may be about 100 degrees. Since the integrated rotator 1402 rotates about 100 degrees according to the folding movement, a length of the integrated rotator 1402 inserted into the first rail portion 311 of the bracket 310 may be relatively short within the folded state of the foldable electronic device. In FIG. 14, a length 1404 of a second rail portion 1403 of the integrated rotator 1402 inserted into the first rail portion 311 of the bracket 310 may be about 0.4 mm. Since the length 1404 of the second rail portion 1403 of the integrated rotator 1402 inserted into the first rail portion 311 of the bracket 310 is relatively short, the integrated rotator 1402 may be difficult to be firmly coupled to the bracket 310 in the folded state of the foldable electronic device. For example, the integrated rotator 1402 may be easily detached from the bracket 310 due to an external force applied in the folded state of the foldable electronic device.

Referring back to FIG. 13, since the length 1301 of the second rail portion 324 of the first rotator 320 inserted into the first rail portion 311 of the bracket 310 is relatively long in the folded state of the foldable electronic device 200, the hinge assembly 250 according to an embodiment may improve the rigidity of the foldable electronic device 200. For example, since a first plate may be firmly coupled to the bracket 310, it may be difficult for the first rotator 320 to be separated from the bracket 310.

The table below illustrates results of a drop test for the foldable electronic device 200 according to an embodiment including the hinge assembly 250 of FIG. 13 and the foldable electronic device according to a comparative example including the hinge assembly 1401 of FIG. 14. The drop test was performed on devices in the folded state.

**[Table 1]**

| | Foldable electronic device according to a comparative example | Foldable electronic device according to an embodiment |
|---|---|---|
| Strain of rotator | 0.406 | 0.120 |
| Strain of bracket | 0.242 | 0.065 |

In the above table, the strain of the rotator indicates a rate at which the rotator is deformed during the drop test, and the strain of the bracket indicates a rate at which the bracket 310 is deformed during the drop test. The greater strain may indicate lower strength against drop impact. Referring to the above table, since the foldable electronic device according to an embodiment may have a lower strain than the foldable electronic device according to a comparative example, the foldable electronic device according to an embodiment may have relatively high rigidity.

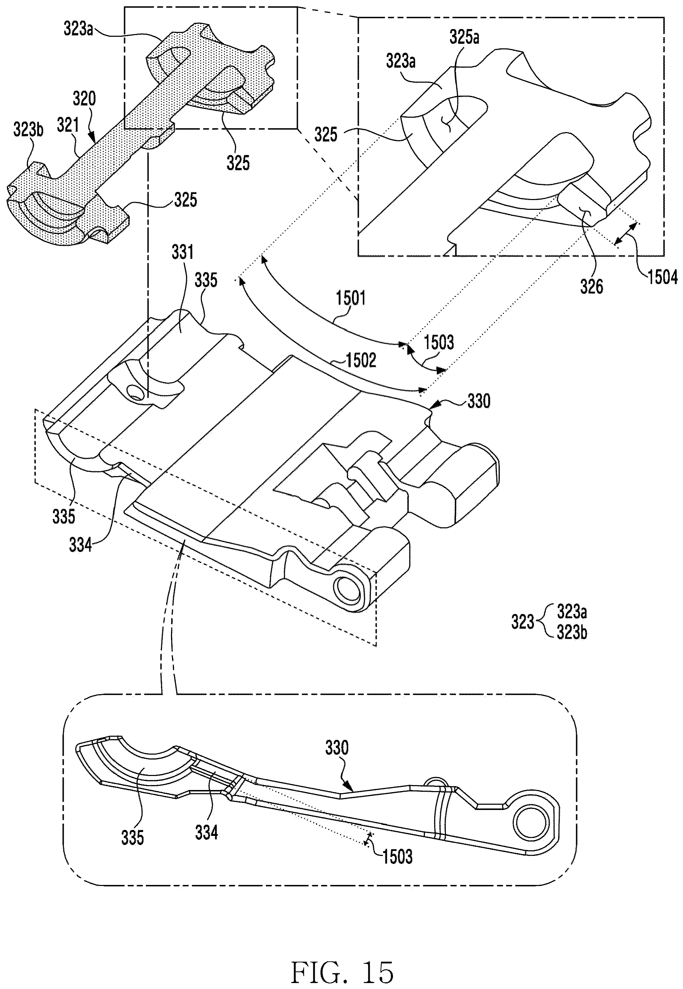

As described above, in order to increase the length 1301 by which the second rail portion 324 of the first rotator 320 is inserted into the first rail portion 311 of the bracket 310 in the folded state of the foldable electronic device 200, the rotation angle of the first rotator 320 according to the folding movement may be smaller than the rotation angle of the second rotator 330 according to the folding movement. When the foldable electronic device 200 is changed from the folded state to the unfolded state, the difference between the rotation angles may be equally provided even in the unfolding movement, in order for the hinge assembly 250 to be restored from the state illustrated in FIG. 12 to the state illustrated in FIG. 9. Hereinafter, operations of the first rotator 320 and the second rotator 330 according to the unfolding movement are described. The descriptions of the first rotator 320 and the second rotator 330 described later with reference to FIGS. 15, 16, 17, 18, and 19 may be substantially equally applied to a fourth rotator (e.g., the fourth rotator 350 of FIG. 3) and a third rotator (e.g., the third rotator 340 of FIG. 3).

FIG. 15 is an exploded view of a first rotator and a second rotator.

Referring to FIG. 15, a first rotator 320 may include a wing portion 323 connected to an end portion of a body portion 321. The wing portion 323 may include a first wing portion 323a connected to an end portion of the body portion 321, and a second wing portion 323b connected to another end portion of the body portion 321 opposite to the end portion of the body portion 321.

According to an embodiment, the first rotator 320 may include a third rail portion 325. For example, each of the first wing portion 323a and the second wing portion 323b may include the third rail portion 325. The third rail portion 325 may protrude toward the body portion 321. For example, the third rail portion 325 may protrude toward the body portion 321 from a surface of the wing portion 323 facing the body portion 321.

According to an embodiment, a third circumference 1501 of the third rail portion 325 may be shorter than a fourth circumference 1502 of the wing portion 323. For example, the third rail portion 325 may not be formed along the entire periphery of the wing portion 323, but may be formed along a portion of the periphery of the wing portion 323. A seating portion 326 may be formed by a difference 1503 between the third circumference 1501 of the third rail portion 325 and the fourth circumference 1502 of the wing portion 323. When the third rail portion 325 is formed along the entire periphery of the wing portion 323, the seating portion 326 may not be formed because the third circumference 1501 and the fourth circumference 1502 are substantially the same. The seating portion 326 may be formed in a portion in which the third rail part 325 is not formed, on a surface of the wing portion 323 facing the body portion 321.

According to an embodiment, the second rotator 330 may include a fourth rail portion 335. The fourth rail portion 335 may be defined by an end portion of a first groove portion 331 facing the wing portion 323. For example, the fourth rail portion 335 may be defined by an end portion of the first groove portion 331 facing the first wing portion 323a and another end portion of the first groove portion 331 facing the second wing portion 323b, respectively. Since the first groove portion 331 has an arc-shaped cross-section corresponding to a shape of the body portion 321, a shape of the fourth rail portion 335 defined by the end portion of the first groove portion 331 may correspond to the arc shape. When the body portion 321 of the first rotator 320 is disposed on the first groove portion 331 of the second rotator 330, the fourth rail portion 335 may be disposed on a front surface 325a of the third rail portion 325. The fourth rail portion 335 may be positioned between the body portion 321 and the third rail portion 325.

According to an embodiment, the second rotator 330 may include a stopper portion 334 (e.g., first stopper portion). When the body portion 321 of the first rotator 320 is disposed on the first groove portion 331 of the second rotator 330, the fourth rail portion 335 of the second rotator 330 may be disposed on the front surface 325a of the third rail portion 325 of the first rotator 320, and the stopper portion 334 of the second rotator 330 may be positioned within the seating portion 326 of the first rotator 320. A first thickness 1503 of the stopper portion 334 may be thinner than a second thickness 1504 of the seating portion 326. Since the first thickness 1503 of the stopper portion 334 is thinner than the second thickness 1504 of the seating portion 326, the stopper portion 334 positioned within the seating portion 326 may move within the seating portion 326.

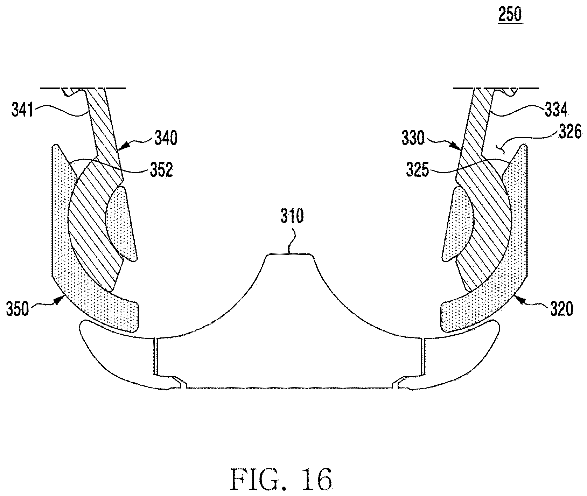

FIG. 16 is a cross-sectional view of a hinge assembly cut along line B-B' of FIG. 6 in a folded state of a foldable electronic device.

Referring to FIG. 16, in the folded state of the foldable electronic device (e.g., the foldable electronic device 200 of FIG. 2B), the stopper portion 334 of the second rotator 330, which is positioned within the seating portion 326 of the first rotator 320, may be spaced apart from the third rail portion 325 of the first rotator 320. In the folded state of the foldable electronic device 200, the stopper portion 334 of the second rotator 330 may not contact the third rail portion 325 of the first rotator 320. As described above, since a first thickness (e.g., the first thickness 1503 of FIG. 15) of the stopper portion 334 is thinner than a second thickness (e.g., the second thickness 1504 of FIG. 15) of the seating portion 326, the stopper portion 334 may not contact the third rail portion 325 even when the stopper portion 334 is positioned within the seating portion 326. A gap may be formed between the third rail portion 325 of the first rotator 320 and the stopper portion 334 of the second rotator 330, which are spaced apart from each other.

According to an embodiment, the second rotator 330 may be configured to rotate with respect to the bracket 310, according to the unfolding movement. When an external force (e.g., torque) causing an unfolding movement to change a state of the foldable electronic device 200 from a folded state to an unfolded state is provided to a foldable housing (e.g., the foldable housing 201 of FIG. 2B), a first housing part (e.g., the first housing part 210 of FIG. 2B) and/or the second housing part (e.g., the second housing part 220 of FIG. 2B) may be configured to rotate. For convenience of explanation, the unfolding movement is described as a rotation of the second housing part 220 with respect to the first housing part 210. When the external force is provided to the second housing part 220, the second housing part 220 may be configured to rotate clockwise in response to the external force. The second rotator 330 coupled to the second housing part 220 through a first coupling bracket (e.g., the first coupling bracket 361 of FIG. 3) may be configured to rotate clockwise according to the rotation of the second housing part 220. An angle at which the second rotator 330 rotates due to the external force provided in the folded state may be referred to as a rotation angle of the second rotator 330 according to the unfolding movement.

According to an embodiment, the first rotator 320 may be configured to start to rotate with respect to the bracket 310 in conjunction with the second rotator 330, based on a rotation angle of the second rotator 330 reaching a second threshold angle according to the unfolding movement. When the second rotator 330 starts to rotate clockwise, the first rotator 320 may maintain its position without rotating. Since the first rotator 320 is not coupled to the second housing part 220 and is separated from the second housing part 220, it may not rotate even when the second housing part 220 rotates. The first rotator 320 maintains its position, and the second rotator 330 rotates clockwise, so a relative position between the first rotator 320 and the second rotator 330 may be changed. In the cross-sectional view illustrated in FIG. 16, when the second rotator 330 rotates clockwise, the stopper portion 334 of the second rotator 330 may move in a direction approaching the third rail portion 325 of the first rotator 320. As the second rotator 330 rotates clockwise, a gap between the stopper portion 334 of the second rotator 330 and the third rail portion 325 of the first rotator 320 may decrease. As the rotation angle of the second rotator 330 according to the unfolding movement increases, the stopper portion 334 of the second rotator 330 may become closer to the third rail portion 325 of the first rotator 320, and the gap may decrease.

According to an embodiment, until the rotation angle of the second rotator 330 according to the unfolding movement reaches a second threshold angle, the stopper portion 334 of the second rotator 330 may be spaced from the third rail portion 325 of the first rotator 320 without contacting the third rail portion 325 of the first rotator 320. The stopper portion 334 of the second rotator 330 may contact the third rail portion 325 of the first rotator 320, based on the rotation angle of the second rotator 330 reaching the second threshold angle according to the unfolding movement.

The above descriptions may be substantially equally applied to the third rotator 340 and the fourth rotator 350. For example, in the folded state of the foldable electronic device 200, another stopper portion 341 (e.g., second stopper portion) of the third rotator 340, which is positioned within the seating portion 326 of the fourth rotator 350, may be spaced apart from a rail portion 352 of the fourth rotator 350. When an external force is applied to the first housing part 210, the first housing part 210 may be configured to rotate counterclockwise in response to the external force. According to the rotation of the first housing part 210, the third rotator 340 coupled to the first housing part 210 through a second coupling bracket (e.g., the second coupling bracket 364 of FIG. 3) may be configured to rotate counterclockwise. The fourth rotator 350 may be configured to start to rotate with respect to the bracket 310 in conjunction with the third rotator 340, based on the rotation angle of the third rotator 340 reaching the second threshold angle according to the unfolding movement. When the third rotator 340 starts to rotate counterclockwise, the fourth rotator 350 may maintain its position without rotating. Since the fourth rotator 350 is not coupled to the first housing part 210 and is separated from the first housing part 210, it may not rotate even when the first housing part 210 rotates. When the third rotator 340 rotates counterclockwise, the other stopper portion 341 of the third rotator 340 may move in a direction approaching the rail portion 352 of the fourth rotator 350. According to the rotation of the third rotator 340 in the clockwise direction, a gap between the other stopper portion 341 of the third rotator 340 and the rail portion 352 of the fourth rotator 350 may decrease. As the rotation angle of the third rotator 340 according to the unfolding movement increases, the other stopper portion 341 of the third rotator 340 may become closer to the rail portion 352 of the fourth rotator 350, and the gap may decrease.

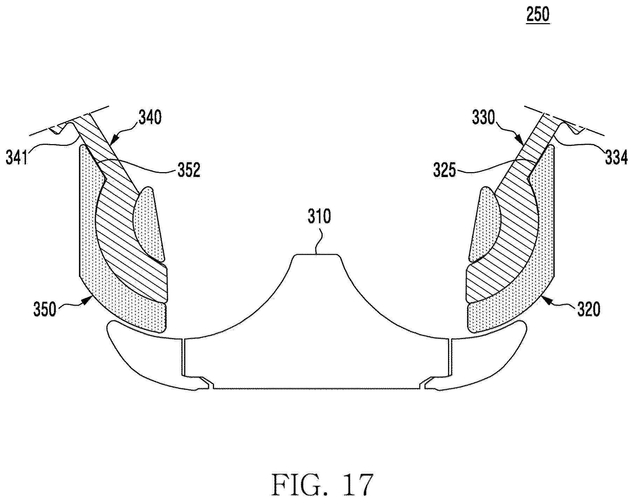

FIG. 17 is a cross-sectional view of a hinge assembly cut along line B-B' of FIG. 6 when a rotation angle of a second rotator according to an unfolding movement is a threshold angle.

Referring to FIG. 17, when the rotation angle of the second rotator 330 according to the unfolding movement reaches the second threshold angle, the stopper portion 334 of the second rotator 330 may contact the third rail portion 325 of the first rotator 320. As the rotation angle of the second rotator 330 increases, the stopper portion 334 of the second rotator 330 approaches the third rail portion 325 of the first rotator 320, and when the rotation angle of the second rotator 330 reaches the second threshold angle, the stopper portion 334 of the second rotator 330 may contact the third rail portion 325 of the first rotator 320. When the rotation angle of the second rotator 330 according to the unfolding movement reaches the second threshold angle, physical interference between the first rotator 320 and the second rotator 330 may start.

According to an embodiment, a difference between a second thickness (e.g., the second thickness 1504 of FIG. 15) of the seating portion 326 and a first thickness (e.g., the first thickness 1503 of FIG. 15) of the stopper portion 334 may correspond to the second threshold angle. As the difference between the second thickness 1504 and the first thickness 1503 increases, a gap between the stopper portion 334 of the second rotator 330 and the third rail portion 325 of the first rotator 320 may increase in the unfolded state. As the gap increases, the second threshold angle for which the stopper portion 334 of the second rotator 330 contacts the third rail portion 325 of the first rotator 320 may increase. As the difference between the second thickness 1504 and the first thickness 1503 decreases, the gap between the stopper portion 334 of the second rotator 330 and the third rail portion 325 of the first rotator 320 may decrease in the folded state. As the gap decreases, the second threshold angle for which the stopper portion 334 of the second rotator 330 contacts the third rail portion 325 of the first rotator 320 may decrease. Since the second threshold angle corresponds to the difference between the rotation angle of the first rotator 320 and the rotation angle of the second rotator 330 according to the unfolding movement, the first thickness 1503 and the second thickness 1504 may be adjusted to determine the second threshold angle according to a structure of the foldable electronic device 200.

According to an embodiment, based on the rotation angle of the second rotator 330 reaching the second threshold angle according to the unfolding movement, the first rotator 320 may be configured to start to rotate with respect to the bracket 310 in conjunction with the second rotator 330. As illustrated in FIG. 17, when the rotation angle of the second rotator 330 according to the unfolding movement is the second threshold angle, the stopper portion 334 of the second rotator 330 may contact the third rail portion 325 of the first rotator 320. When the rotation angle of the second rotator 330 increases above the second threshold angle, the stopper portion 334 of the second rotator 330 contacting the third rail portion 325 of the first rotator 320 may cause the rotation of the second rotator 330. The stopper portion 334 of the second rotator 330 may push down the first rotator 320 by moving in a state of contacting the third rail portion 325 of the first rotator 320. The first rotator 320 may rotate in conjunction with the second rotator 330 by being pushed down by the stopper portion 334 of the second rotator 330.

The above descriptions may be substantially equally applied to the third rotator 340 and the fourth rotator 350. For example, when the rotation angle of the third rotator 340 according to the unfolding movement reaches the second threshold angle, the other stopper portion 341 of the third rotator 340 may contact the rail portion 352 of the fourth rotator 350. As the rotation angle of the third rotator 340 increases, the other stopper portion 341 of the third rotator 340 approaches the rail portion 352 of the fourth rotator 350, and when the rotation angle of the third rotator 340 reaches the second threshold angle, the other stopper portion 341 of the third rotator 340 may contact the rail portion 352 of the fourth rotator 350. According to an embodiment, based on the rotation angle of the third rotator 340 reaching the second threshold angle according to the unfolding movement, the fourth rotator 350 may be configured to start to rotate with respect to the bracket 310 in conjunction with the third rotator 340.

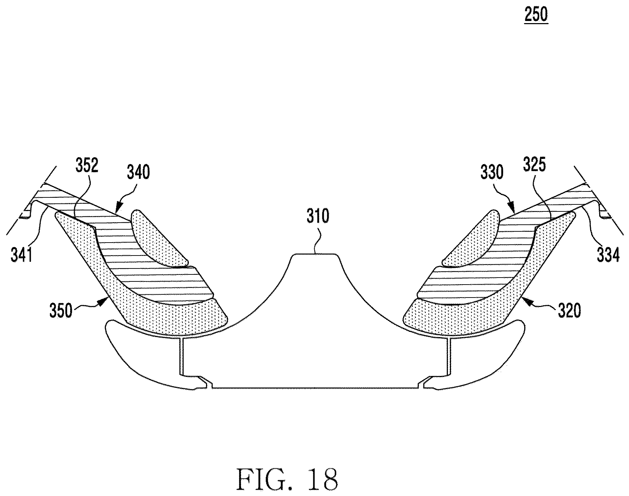

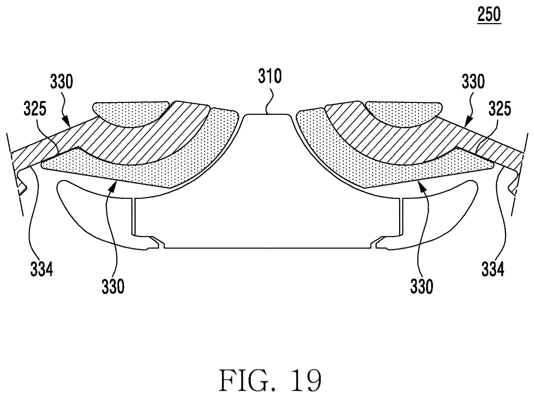

FIG. 18 is a cross-sectional view of a hinge assembly cut along line B-B' of FIG. 6 when a rotation angle of a second rotator exceeds a threshold angle. FIG. 19 is a cross-sectional view of a hinge assembly cut along line B-B' of FIG. 6 in an unfolded state of a foldable electronic device.

Referring to FIG. 18, as the rotation angle of the second rotator 330 according to the unfolding movement exceeds the second threshold angle, the first rotator 320 may be configured to rotate in conjunction with the second rotator 330. According to the rotation of the second rotator 330, a position of the stopper portion 334 of the second rotator 330 may be changed. According to the change in the position of the stopper portion 334 of the second rotator 330, the first rotator 320 including the third rail portion 325 in contact with the stopper portion 334 may be configured to rotate. While the first rotator 320 rotates beyond the second threshold angle, the third rail portion 325 of the first rotator 320 may maintain contact with the stopper portion 334 of the second rotator 330.

For example, when the second threshold angle is about 20 degrees based on the folded state, while the second rotator 330 rotates within a third rotation range of 0 degrees to about 20 degrees from the folded state, the first rotator 320 may maintain its position without rotating. The third rotation range may be referred to as about 100 degrees to about 80 degrees based on the unfolded state. When the rotation angle of the second rotator 330 according to the unfolding movement reaches about 20 degrees, the stopper portion 334 of the second rotator 330 may contact the third rail portion 325 of the first rotator 320. When the rotation angle of the second rotator 330 exceeds about 20 degrees, the stopper portion 334 may push down the first rotator 320, and the first rotator 320 may be configured to rotate in conjunction with the second rotator 330.

Referring to FIG. 19, as the unfolding movement is completed, a foldable electronic device (e.g., the foldable electronic device 200 of FIG. 2B) in the unfolded state may be provided. The first rotator 320, which is pushed down by the stopper portion 334 of the second rotator 330, may be configured to rotate in conjunction with the second rotator 330. The first rotator 320 and the second rotator 330 may be configured to provide the unfolded state of the foldable electronic device 200. The unfolded state illustrated in FIG. 19 may correspond to the unfolded state illustrated in FIG. 9.

According to an embodiment, the second threshold angle may correspond to the first threshold angle. For example, when the first threshold angle is about 20 degrees based on the unfolded state, the second threshold angle may be about 20 degrees based on the folded state. When the state of the foldable electronic device 200 is switched from the unfolded state to the folded state, when a total rotation angle of the second rotator 330 is 100 degrees, the second threshold angle may be referred to as about 80 degrees (100 degrees - 20 degrees) based on the unfolded state. Since the second threshold angle corresponds to the first threshold angle, a total rotation angle of the first rotator 320 may be constant at about 80 degrees in the folding movement and the unfolding movement. Since the total rotation angle of the first rotator 320 according to the unfolding movement corresponds to the total rotation angle of the first rotator 320 according to the folding movement, the first rotator 320 may rotate within a certain angular range (e.g., about 80 degrees) between the unfolded state and the folded state.

In the above description, it is described that the second threshold angle corresponds to the first threshold angle, but the embodiments of the present disclosure are not limited thereto. According to an embodiment, the first threshold angle may be different from the second threshold angle. For example, the first threshold angle may be greater than the second threshold angle. When a certain engagement length (e.g., the length 1301 of FIG. 13) is secured in the folded state by the first threshold angle, the second threshold angle corresponding to the unfolding movement may be designed to be smaller than the first threshold angle corresponding to the folding movement. As an example, the second threshold angle may be designed to be about 100 degrees (e.g., in a state that there is no gap between the third rail portion 325 and the stopper portion 334 in the folded state). However, it is not limited thereto. According to an embodiment, the first threshold angle may be smaller than the second threshold angle.

As described above, according to the unfolding movement, the stopper portion 334 may contact the third rail portion 325 of the first rotator 320. According to an embodiment, in order to reduce damage to the first rotator 320 due to contact between the first rotator 320 and the third rail portion 325, at least a portion of the third rail portion 325 or at least a portion of the stopper portion 334 may be formed of an elastic material, or an elastic member may be disposed between the third rail portion 325 and the stopper portion 334. As at least a portion of the third rail portion 325 or at least a portion of the stopper portion 334 is formed of an elastic material, or an elastic member is disposed between the third rail portion 325 and the stopper portion 334, damage to the stopper portion 334 in the unfolding movement may be reduced.

The above descriptions may be substantially equally applied to the third rotator 340 and the fourth rotator 350.

For example, when the rotation angle of the third rotator 340 according to the unfolding movement exceeds the second threshold angle, the fourth rotator 350 may be configured to rotate in conjunction with the third rotator 340. While the fourth rotator 350 rotates beyond the second threshold angle, the rail portion 352 of the fourth rotator 350 may maintain contact with the other stopper portion 341 of the third rotator 340. The third rotator 340 and the fourth rotator 350 may be configured to provide the unfolded state of the foldable electronic device 200.

In the above-described embodiment, it is described that the hinge assembly 250 includes the stopper 510 provided as a separate piece for a rotation of the first rotator 320 in the folding movement, but the embodiments of the present disclosure are not limited thereto. For example, the hinge assembly 250 may increase the length of the first rotator 320 inserted into the bracket 310 through a structure for limiting the rotation angle of the first rotator 320 in the folding movement and the unfolding movement.

According to an embodiment, when the second rotator 330 rotates according to the folding movement, the first rotator 320 may include an overlap portion that contacts the second rotator 330 at a rotation angle of the second rotator 330 greater than or equal to the first threshold angle. For example, the overlap portion of the first rotator 320 may not contact the second rotator 330 when the rotation angle of the second rotator 330 is less than the first threshold angle. As the second rotator 330 continues to rotate, when the rotation angle of the second rotator 330 reaches the first threshold angle, the overlap portion of the first rotator 320 may contact the second rotator 330. When the rotation angle of the second rotator 330 exceeds the first threshold angle, the first rotator 320 may be configured to rotate in conjunction with the second rotator 330 due to a frictional force between the second rotator 330 and the overlap portion of the first rotator 320.

According to an embodiment, the hinge assembly 250 may further include an additional rotator in addition to the first rotator 320 and the second rotator 330. For example, the first rotator 320 and the second rotator 330 described above may be referred to as a dual rotator, and when a rotator is added, the first rotator 320, the second rotator 330, and the added rotator may be referred to as a triple rotator.

Although it is described that the above-described foldable electronic device 200 includes the first housing part 210 and the second housing part 220, the embodiments of the present disclosure are not limited thereto. For example, the foldable electronic device 200 may further include a third housing part.

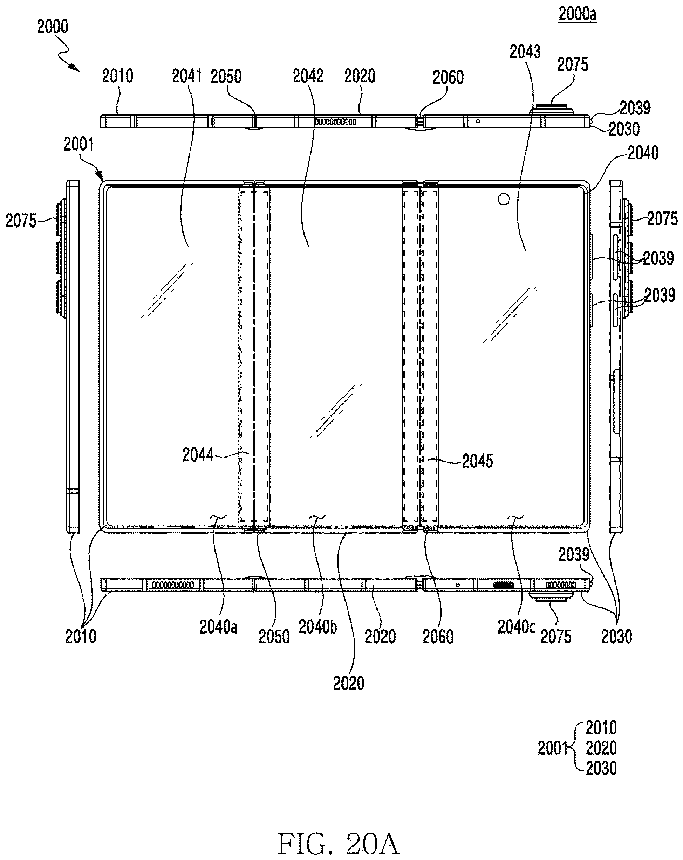

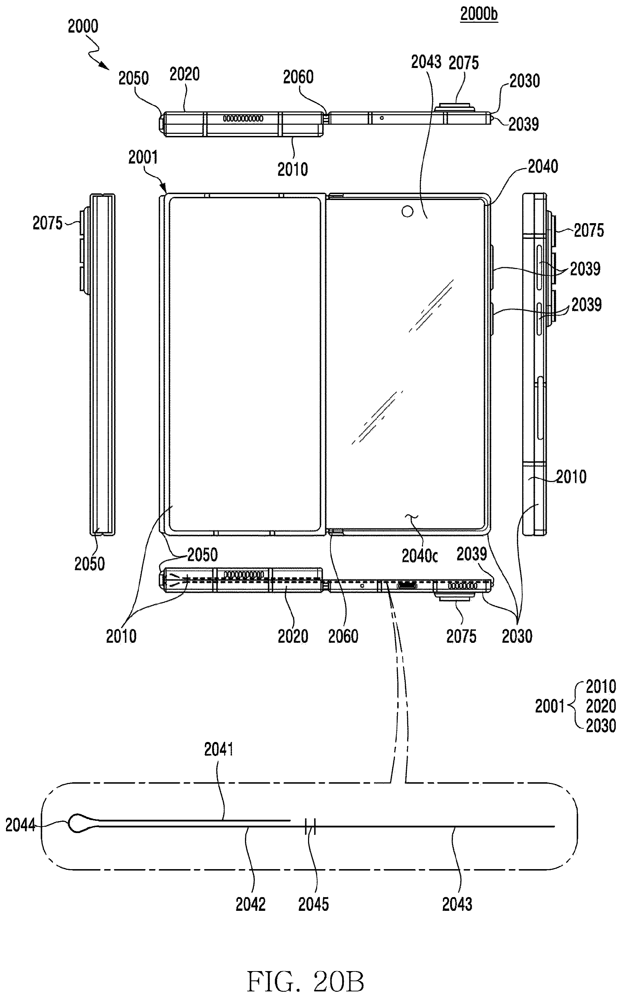

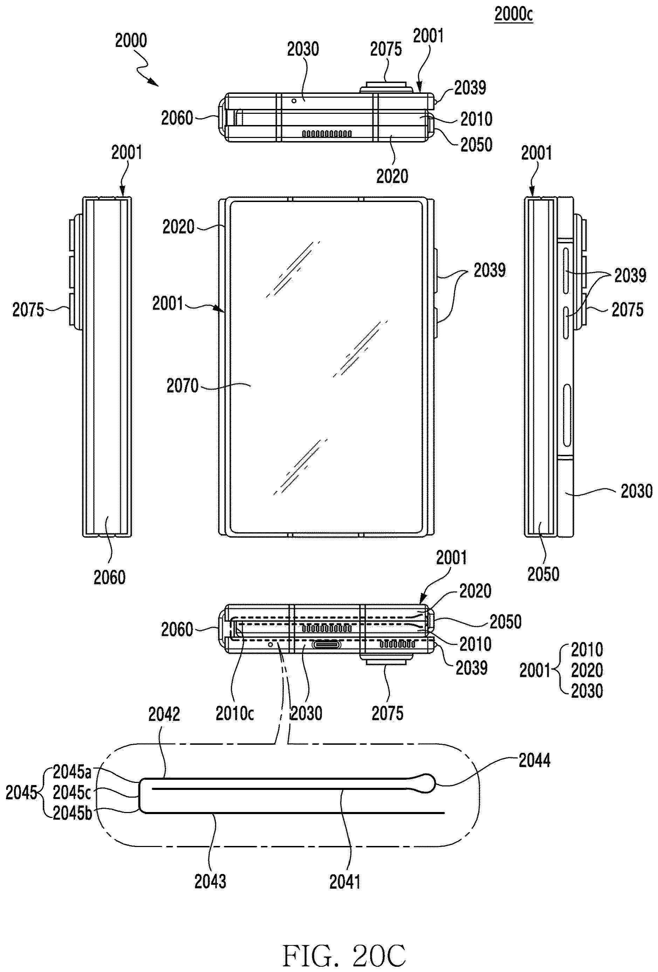

FIG. 20A illustrates an example of a first state of an electronic device. FIG. 20B illustrates an example of a second state of an electronic device. FIG. 20C illustrates an example of a third state of an electronic device.

Referring to FIGS. 20A, 20B, and 20C, a foldable electronic device 2000 may include a housing structure 2001, a flexible display 2040, a first hinge structure 2050, a second hinge structure 2060, and a display 2070. The first housing structure 2001 may include a first housing part 2010, a second housing part 2020, and a third housing part 2030.

The first housing part 2010 may be rotatably coupled to the second housing part 2020 by the first hinge structure 2050. The second housing part 2020 and the first housing part 2010 may be rotated with respect to the first hinge structure 2050. While the first housing part 2010 rotates with respect to the first hinge structure 2050, the second housing part 2020 may rotate with respect to the first hinge structure 2050. For example, when the second housing part 2020 and the first housing part 2010 are rotated with respect to the first hinge structure 2050, an angular displacement of the second housing part 2020 may be substantially equal to an angular displacement of the first housing part 2010. The first hinge structure 2050 may be referred to as a first hinge assembly. The second hinge structure may be referred to as a second hinge assembly.

The third housing part 2030 may be rotatably coupled to the second housing part 2020 by the second hinge structure 2060. The second housing part 2020 and the third housing part 2030 may be rotated with respect to the second hinge structure 2060. While the second housing part 2020 is rotated with respect to the second hinge structure 2060, the third housing part 2030 may be rotated with respect to the second hinge structure 2060. For example, when the second housing part 2020 and the third housing part 2030 are rotated with respect to the second hinge structure 2060, the angular displacement (or angular change) of the second housing part 2020 may be substantially equal to the angular displacement of the third housing part 2030.

The first hinge structure 2050 and the second hinge structure 2060 may change a state of the electronic device. The first hinge structure 2050 and the second hinge structure 2060 may provide (or enable) a first state 2000a of the foldable electronic device 2000 (or a first state 2000a of the housing structure 2001). The first state 2000a of the foldable electronic device 2000 (or the first state 2000a of the housing structure 2001) may be described as an unfolded state (or unfolding state) of the foldable electronic device 2000 (or the housing structure 2001). In the first state 2000a, a front surface of the first housing part 2010, a front surface of the second housing part 2020, and a front surface of the third housing part 2030 may define a front surface of the foldable electronic device 2000. In the first state 2000a, the front surface of the first housing part 2010, the front surface of the second housing part 2020, and the front surface of the third housing part 2030 may face the same direction. In the first state 2000a, the foldable electronic device 2000 may provide a large display region of the flexible display 2040 to the user.

The first hinge structure 2050 and the second hinge structure 2060 may provide a second state 2000b of the foldable electronic device 2000. The second state 2000b of the foldable electronic device 2000 may be described as a state in which the foldable electronic device 2000 is partially folded and partially unfolded (or a single folding state or a half folding state). For example, in the second state 2000b, the front surface of the second housing part 2020 and the front surface of the third housing part 2030 may face the same direction, and the front surface of the first housing part 2010 and the front surface of the second housing part 2020 may face opposite directions. For example, in the second state 2000b, the first housing part 2010 and the second housing part 2020 may be folded, and the second housing part 2020 and the third housing part 2030 may be unfolded. In the second state 2000b, the foldable electronic device 2000 may provide visual information through a portion (e.g., a third display region 2040c) of the flexible display 2040.

The foldable electronic device 2000 may change from the first state 2000a to the third state 2000c through the second state 2000b. The foldable electronic device 2000 may change from the first state 2000a, which is an unfolded state, to the second state 2000b, which is a partially unfolded state. For example, the foldable electronic device 2000 may change from the first state 2000a in which the first housing part 2010, the second housing part 2020, and the third housing part 2030 face the same direction, to the second state 2000b in which the front surface of the first housing part 2010 faces the front surface of the second housing part 2020. The foldable electronic device 2000 may change from the second state 2000b, which is partially unfolded, to the third state 2000c, which is folded. For example, when changing from the second state 2000b to the third state 2000c, the folded first housing part 2010 and the second housing part 2020 may be disposed on the third housing part 2030.

The first hinge structure 2050 and the second hinge structure 2060 may provide a third state 2000c of the foldable electronic device 2000 (or a third state 2000c of the housing structure 2001). The third state 2000c of the foldable electronic device 2000 (or the third state 2000c of the housing structure 2001) may be described as a state in which the foldable electronic device 2000 (or the housing structure 2001) is folded (or a folding state or a multi-folding state). In the third state 2000c, the front surface of the first housing part 2010 and the front surface of the second housing part 2020 may face opposite directions, and the front surface of the second housing part 2020 and the front surface of the third housing part 2030 may face opposite directions. In the third state 2000c, the front surface of the first housing part 2010 and the front surface of the third housing part 2030 may face the same direction. For example, in the third state 2000c, the front surface of the second housing part 2020 may face the front surface of the first housing part 2010, and the front surface of the third housing part 2030 may face a rear surface of the first housing part 2010. In the third state 2000c, a rear surface of the second housing part 2020 may be exposed to the outside. The display 2070 may be disposed on the rear surface of the second housing part 2020. In the third state 2000c, a rear surface of the third housing part 2030 may be exposed to the outside. A camera 2075 may be disposed on the rear surface of the third housing part 2030. In the third state 2000c, the foldable electronic device 2000 may be folded to enhance portability and may provide visual information through the display 2070 disposed on the rear surface of the second housing part 2020.

The foldable electronic device 2000 may further include a key button 2039. The key button 2039 may be exposed from a structure (e.g., opening) formed on a side surface of the third housing part 2030 and may partially protrude to the outside of the foldable electronic device 2000. The key button 2039 may provide a physical input to processing circuitry inside the foldable electronic device 2000 by a pressure transmitted from the outside. The key button 2039 may not be included in the foldable electronic device 2000 and may be implemented in another form, such as a soft key displayed on the flexible display 2040 or the display 2070.

The key button 2039 may be disposed on the side surface of the third housing part 2030 so as to be exposed to the outside in the third state 2000c. The key button 2039 may be disposed in a direction toward which the side surface of the third housing part 2030 faces by being disposed on the side surface of the third housing part 2030. Even when the third state 2000c is changed to the first state 2000a by a user looking at the display 2070, a position of the key button 2039 disposed on the side surface of the third housing part 2030 may not move. For example, referring to FIG. 20A, in the first state 2000a, when the flexible display 2040 is viewed from above, the key button 2039 may be disposed on the right. Referring to FIG. 20C, in the third state 2000c, when the display 2070 is viewed from above, the key button 2039 may be disposed on the right side.

The flexible display 2040 may at least partially define a surface of the foldable electronic device 2000. The flexible display 2040 may be partially disposed within the housing structure 2001. The flexible display 2040 may define a front surface of the foldable electronic device 2000. The flexible display 2040 may include a first unbendable portion 2041, a second unbendable portion 2042, a third unbendable portion 2043, a first bendable portion 2044, and a second bendable portion 2045. The first unbendable portion 2041 of the flexible display 2040 may be disposed on the front surface of the first housing part 2010. The second unbendable portion 2042 of the flexible display 2040 may be disposed on the front surface of the second housing part 2020. The third unbendable portion 2043 of the flexible display 2040 may be disposed on the front surface of the third housing part 2030. The first bendable portion 2044 of the flexible display 2040 may be disposed between the first unbendable portion 2041 and the third unbendable portion 2043 of the flexible display 2040. For example, the first bendable portion 2044 of the flexible display 2040 may be disposed on the first hinge structure 2050 connecting the first housing part 2010 and the second housing part 2020. The second bendable portion 2045 of the flexible display 2040 may be disposed between the second unbendable portion 2042 and the third unbendable portion 2043 of the flexible display 2040. For example, the second bendable portion 2045 of the flexible display 2040 may be disposed on the second hinge structure 2060 connecting the second housing part 2020 and the third housing part 2030.

The first hinge structure 2050 and the second hinge structure 2060 may face substantially the same direction as the first unbendable portion 2041 of the flexible display 2040, the second unbendable portion 2042 of the flexible display 2040, and the third unbendable portion 2043 of the flexible display 2040. In the first state 2000a, the first bendable portion 2044 and the second bendable portion 2045 may be disposed in substantially the same horizontal plane as the first unbendable portion 2041, the second unbendable portion 2042, and the third unbendable portion 2043.

The first hinge structure 2050 and the second hinge structure 2060 may provide a second state 2000b of the foldable electronic device 2000. In the second state 2000b, the first unbendable portion 2041 of the flexible display 2040 may face the second unbendable portion 2042 of the flexible display 2040, and the third unbendable portion 2043 of the flexible display 2040 may face the same direction as the second unbendable portion 2042 of the flexible display 2040. For example, the second unbendable portion 2042 and the third unbendable portion 2043 may be disposed in substantially the same horizontal plane.

In the second state 2000b, as the first bendable portion 2044 of the flexible display 2040 is bent by the first hinge structure 2050, the first bendable portion 2044 of the flexible display 2040 may be folded, so that the first unbendable portion 2041 of the flexible display 2040 and the second unbendable portion 2042 of the flexible display 2040 face different directions.

In the second state 2000b, as the second bendable portion 2045 of the flexible display 2040 is maintained in the unfolded state by the second hinge structure 2060, the second bendable portion 2045 of the flexible display 2040 may be unfolded so that the second unbendable portion 2042 of the flexible display 2040 and the third unbendable portion 2043 of the flexible display 2040 face the same direction.

The first hinge structure 2050 and the second hinge structure 2060 may provide a third state 2000c of the foldable electronic device 2000. In the third state 2000c, the second unbendable portion 2042 of the flexible display 2040 may face the first unbendable portion 2041 of the flexible display 2040, and the third unbendable portion 2043 of the flexible display 2040 may face the rear surface of the first housing part 2010.

In the third state 2000c, as the first bendable portion 2044 of the flexible display 2040 is bent by the first hinge structure 2050, the first bendable portion 2044 of the flexible display 2040 may be folded so that the first unbendable portion 2041 of the flexible display 2040 and the second unbendable portion 2042 of the flexible display 2040 face different directions.

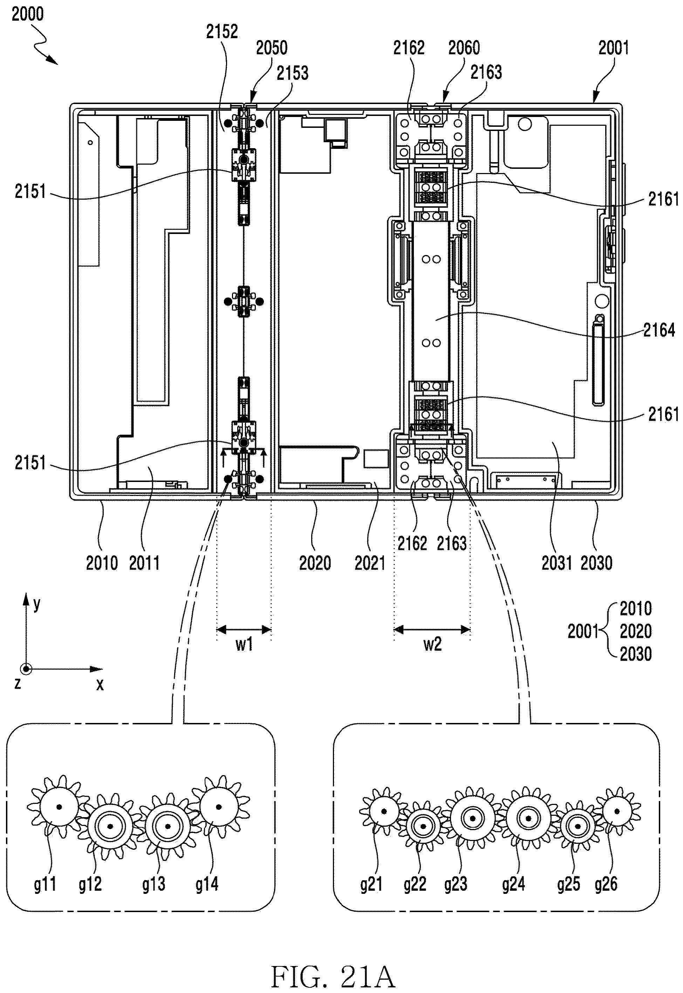

In the third state 2000c, the second bendable portion 2045 of the flexible display 2040 is bent by the second hinge structure 2060, the second bendable portion 2045 of the flexible display 2040 may be folded so that the second unbendable portion 2042 of the flexible display 2040 and the third unbendable portion 2043 of the flexible display 2040 face different directions. The second bendable portion 2045 may further include a first deformation portion 2045a, a second deformation portion 2045b, and a planar portion 2045c. The first deformation portion 2045a may be disposed between the planar portion 2045c and the second unbendable portion 2042, and the second deformation portion 2045b may be disposed between the planar portion 2045c and the third unbendable portion 2043. The planar portion 2045c may be disposed between the first deformation portion 2045a and the second deformation portion 2045b. The planar portion 2045c may be supported by a support plate (e.g., the support plate 2164 of FIG. 21A) that is distinct from the hinge plates (e.g., the third hinge plate 2162 and the fourth hinge plate 2163 of FIG. 21A) of the second hinge structure 2060. Regardless of the state of the foldable electronic device 2000, the planar portion 2045c may maintain a planar surface. The first deformation portion 2045a and the second deformation portion 2045b may be unfolded in the first state 2000a and the second state 2000b, and in the third state 2000c, the first deformation portion 2045a and the second deformation portion 2045b may be bent so that the second unbendable portion 2042 and the third unbendable portion 2043 face different directions. In the third state 2000c, the first housing part 2010 may be disposed between the second housing part 2020 and the third housing part 2030. In the third state 2000c, the second bendable portion 2045 of the flexible display 2040 disposed on the second hinge structure 2060 may partially face the side surface 2010c of the first housing part 2010.

A display region of the flexible display 2040 may include a first display region 2040a, a second display region 2040b, and a third display region 2040c. The display region indicates a region capable of providing visual information from the flexible display 2040. For example, the first display region 2040a may include the first unbendable portion 2041 and a portion of the first bendable portion 2044 of FIG. 20A. For example, the second display region 2040b may include a second unbendable portion 2042, another portion of the first bendable portion 2044, and a portion of the second bendable portion 2045 of FIG. 20A. For example, the third display region 2040c may include the third unbendable portion 2043 and another portion of the second bendable portion 2045 of FIG. 20A.

Within the first state 2000a, the entire display region of the flexible display 2040 may be viewed from the front surface of the housing structure 2001. For example, in the first state 2000a, the first display region 2040a, the second display region 2040b, and the third display region 2040c of the flexible display 2040 may be visually exposed. The foldable electronic device 2000 may provide, to the user, a large display region including the first display region 2040a, the second display region 2040b, and the third display region 2040c.

In the second state 2000b, the display region of the flexible display 2040 may be partially visible from the front surface of the third housing part 2030. For example, the third display region 2040c may be visually exposed, and the first display region 2040a and the second display region 2040b may not be visually exposed.

In the third state 2000c, the display region of the flexible display 2040 may not be visible. For example, in the third state 2000c, the first display region 2040a, the second display region 2040b, and the third display region 2040c of the flexible display 2040 may not be visually exposed.

As a non-limiting example, when the flexible display 2040 is used to display a screen within the first state 2000a of the foldable electronic device 2000, the first display region 2040a, the second display region 2040b, and the third display region 2040c of the flexible display 2040 may be activated. As a non-limiting example, in the third state 2000c, the first display region 2040a, the second display region 2040b, and the third display region 2040c of the flexible display 2040 may be deactivated. As a non-limiting example, in the second state 2000b of the foldable electronic device 2000, when the flexible display 2040 is used to display a screen, the third display region 2040c may be activated, and the first display region 2040a and the second display region 2040b of the flexible display 2040 may be deactivated.

As a non-limiting example, when the flexible display 2040 is used to display a screen within the first state 2000a of the foldable electronic device 2000, the first display region 2040a, the second display region 2040b, and the third display region 2040c of the flexible display 2040 may display visual information. As a non-limiting example, in the third state 2000c, the first display region 2040a, the second display region 2040b, and the third display region 2040c of the flexible display 2040 may provide a black image. As a non-limiting example, in the second state 2000b of the foldable electronic device 2000, when the flexible display 2040 is used to display a screen, the third display region 2040c may provide visual information, and the first display region 2040a and the second display region 2040b of the flexible display 2040 may provide a black image.

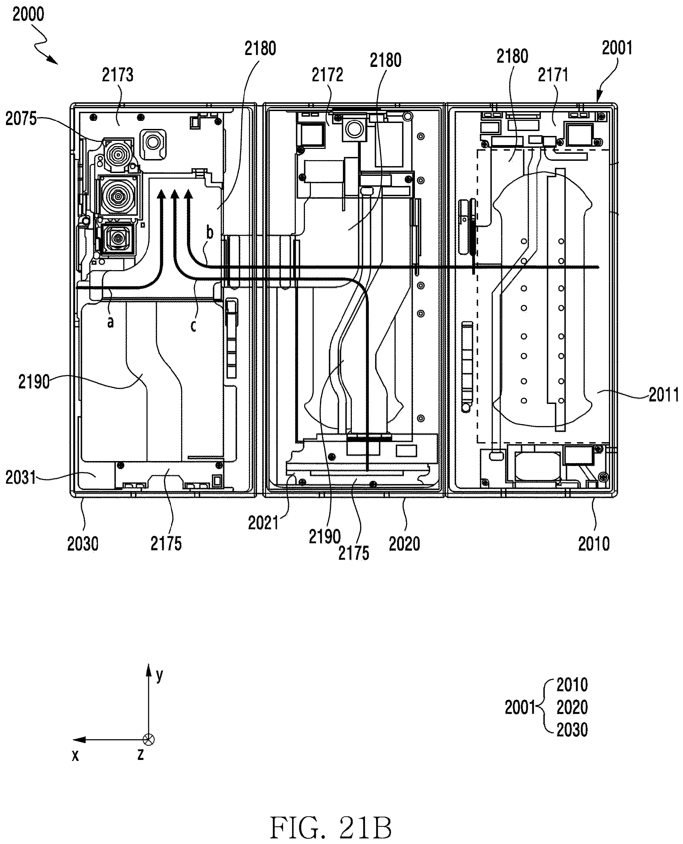

FIG. 21A is a plan view of an electronic device from which a flexible display is removed. FIG. 21B is a rear view of an electronic device from which a rear cover and a display are removed.

Referring to FIGS. 21A and 21B, the foldable electronic device 2000 may include a first hinge structure 2050 and a second hinge structure 2060. A first width w1 of the first hinge structure 2050 may be narrower than a second width w2 of the second hinge structure 2060. A difference between the first width w1 of the first hinge structure 2050 and the second width w2 of the second hinge structure 2060 may be greater than or equal to a thickness of the first housing part 2010. For example, the second hinge structure 2060 may have the second width w2 wider than the first width w1 so that the first housing part 2010 is disposed between the second housing part 2020 and the third housing part 2030 according to the third state 2000c. The first hinge structure 2050 may be referred to as a narrow hinge structure in terms of having a narrower width than the second hinge structure 2060. The second hinge structure 2060 may be referred to as a wide hinge structure in terms of having a wider width than the first hinge structure 2050.

The first hinge structure 2050 may include a first set of gears 2151, a first hinge plate 2152, and a second hinge plate 2153. The first hinge plate 2152 may be coupled to a first support portion 2011 of the first housing part 2010. The second hinge plate 2153 may be coupled to a second support portion 2021 of the second housing part 2020. Gears g11, g12, g13, and g14 included in the first set of gears 2151 may be configured to rotate the first hinge plate 2152 and the second hinge plate 2153. For example, the gears g11, g12, g13, and g14 included in the first set of gears 2151 may rotate the second hinge plate 2153 (or the second housing part 2020) by linking with a rotation of the first hinge plate 2152 (or the first housing part 2010). After the first hinge plate 2152 (or the first housing part 2010) rotates, the gears g11, g12, g13, and g14 included in the first set of gears 2151 may rotate in accordance with a rotation of the first hinge plate 2152 (or the first housing part 2010). The second hinge plate 2153 (or the second housing part 2020) may rotate by linking with the rotation of the first hinge plate 2152 in accordance with the rotation of the gears included in the first set of gears 2151. The gears g11, g12, g13, and g14 included in the first set of gears 2151 may include a first gear g11, a second gear g12, a third gear g13, and a fourth gear g14. The first gear g11 may be disposed adjacent to the first hinge plate 2152, and the fourth gear g14 may be disposed adjacent to the second hinge plate 2153. The second gear g12 and the third gear g13 may be disposed between the first gear g11 and the fourth gear g14. The first gear g11, the second gear g12, the third gear g13, and the fourth gear g14 may be sequentially engaged. According to a rotation of the first gear g11 in a first rotation direction (e.g., clockwise), the second gear g12 engaged with the first gear g11 may be rotated in a second rotation direction (e.g., counterclockwise) opposite to the first rotation direction. According to the rotation of the second gear g2 in the second rotation direction, the third gear g13 engaged with the second gear g12 may be rotated in the first rotation direction. The fourth gear g14 may be rotated in the second rotation direction according to the rotation of the third gear g13 in the first rotation direction. As the first gear g11 and the fourth gear g14 rotate in different directions, the first housing part 2010 connected to the first hinge plate 2152 and the second housing part 2020 connected to the second hinge plate 2153 may be folded or unfolded.

The second hinge structure 2060 may include a second set of gears 2161, a third hinge plate 2162, a fourth hinge plate 2163, and a support plate 2164. The third hinge plate 2162 may be coupled to the second support portion 2021 of the second housing part 2020. The fourth hinge plate 2163 may be coupled to a third support portion 2031 of the third housing part 2030. Gears g21, g22, g23, g24, g25, and g26 included in the second set of gears 2161 may be configured to rotate the third hinge plate 2162 and the fourth hinge plate 2163. For example, the gears g21, g22, g23, g24, g25, and g26 included in the second set of gears 2161 may rotate the fourth hinge plate 2163 (or the third housing part 2030) by linking with a rotation of the third hinge plate 2162 (or the second housing part 2020). After the third hinge plate 2162 (or the second housing part 2020) is rotated, the gears g21, g22, g23, g24, g25, and g26 included in the second set of gears 2161 may rotate according to the rotation of the third hinge plate 2162 (or the second housing part 2020). The fourth hinge plate 2163 (or the third housing part 2030) may be rotated by linking with the rotation of the third hinge plate 2162 according to the rotation of the gears g21, g22, g23, g24, g25, and g26 included in the second set of gears 2161.

The gears g21, g22, g23, g24, g25, and g26 included in the second set of gears 2161 may include a first gear g21, a second gear g22, a third gear g23, a fourth gear g24, a fifth gear g25, and a sixth gear g26. The first gear g21 may be disposed adjacent to the third hinge plate 2162, and the sixth gear g26 may be disposed adjacent to the fourth hinge plate 2163. The second gear g22, the third gear g23, the fourth gear g24, and the fifth gear g25 may be disposed between the first gear g21 and the sixth gear g26. The first gear g21, the second gear g22, the third gear g23, the fourth gear g24, the fifth gear g25, and the sixth gear g26 may be sequentially engaged. According to a rotation of a first rotation direction (e.g., clockwise) of the first gear g21, the second gear g22 engaged with the first gear g21 may be rotated in a second rotation direction (e.g., counterclockwise) opposite to the first rotation direction. According to the rotation of the second gear g22 in the second rotation direction, the third gear g23 engaged with the second gear g22 may be rotated in the first rotation direction. According to the rotation of the third gear g23 in the first rotation direction, the fourth gear g24 may be rotated in the second rotation direction. According to the rotation of the fourth gear g24 in the second rotation direction, the fifth gear g25 engaged with the fourth gear g24 may be rotated in the first rotation direction. According to the rotation of the fifth gear g25 in the first rotation direction, the sixth gear g26 engaged with the fifth gear g25 may be rotated in the second rotation direction. As the first gear g21 and the sixth gear g26 rotate in different directions, the second housing part 2020 connected to the third hinge plate 2162 and the third housing part 2030 connected to the fourth hinge plate 2163 may be folded or unfolded.

The first hinge structure 2050 and the second hinge structure 2060 may further include a spiral structure. The spiral structure may include a helical spiral groove formed in each hinge plate or a rotation member connected to the hinge plate and a moving member sliding along the spiral groove. The hinge plates connected to the hinge structure may be configured to rotate at substantially the same angular displacement through the spiral structure.

The foldable electronic device 2000 may include a first printed circuit board 2171, a second printed circuit board 2172, and a third printed circuit board 2173.

The first printed circuit board 2171 may be disposed on the first support portion 2011 of the first housing part 2010. Hardware components within the first housing part 2010 may be disposed in the first printed circuit board 2171. The second printed circuit board 2172 may be disposed on the second support portion 2021 of the second housing part 2020. The third printed circuit board 2173 may be disposed in the third support portion 2031 of the third housing part 2030. Hardware components within the third housing part 2030 may be disposed in the third printed circuit board 2173.

Hardware components disposed on the first printed circuit board 2171 may support or operate independently of hardware components disposed on the second printed circuit board 2172 and/or hardware components disposed on the third printed circuit board 2173.

The hardware components disposed on the second printed circuit board 2172 may support or operate independently of the hardware components disposed on the first printed circuit board 2171 or the third printed circuit board 2173. The hardware components disposed on the second printed circuit board 2172 may include a speaker, a front camera, and/or display driving circuitry.

The hardware components disposed on the third printed circuit board 2173 may include at least one processor (e.g., an application processor (AP), a communication processor (CP)) including processing circuitry, memory including one or more storage media, communication circuitry, and a rear camera 2075. The rear camera 2075 may be exposed through a structure (e.g., opening) of the rear surface of the third housing part 2030.

The foldable electronic device 2000 may further include a sub-printed circuit board 2175, flexible printed circuit boards 2180 and 2190. The sub-printed circuit board 2175 may be disposed on at least a portion of the first housing part 2010, the second housing part 2020, and the third housing part 2030. The flexible printed circuit boards 2180 and 2190 may include a first flexible printed circuit board 2180 and a second flexible printed circuit board 2190. The first flexible printed circuit board 2180 may electrically connect printed circuit boards disposed on each of the housing parts 2010, 2020, and 2030. The second flexible printed circuit board 2190 may connect a printed circuit board within a housing part in which the sub-printed circuit board 2175 is disposed and the sub-printed circuit board 2175.

Components within the foldable electronic device 2000 may be connected to at least one processor within the third printed circuit board 2173 through the flexible printed circuit boards 2180 and 2190. For example, a signal received from an antenna disposed in the third housing part 2030 may be transmitted to the third printed circuit board 2173 on which at least one processor (e.g., AP or CP) is disposed through a signal path (a) provided by the first flexible printed circuit board 2180. A driving circuit for the flexible display 2040 disposed within the first housing part 2010 may be connected to the third printed circuit board 2173 on which at least one processor (e.g., AP) is disposed through a signal path (b) provided by the sub-printed circuit board 2175 and the first flexible printed circuit board 2180. A driving circuit for the display 2070 connected to the sub-printed circuit board 2175 disposed on the second housing part 2020 may be electrically connected to the third printed circuit board 2173 on which at least one processor (e.g., AP) is disposed through a signal path (c) provided by the sub-printed circuit board 2175 and the first flexible printed circuit board 2180 and the second flexible printed circuit board 2190.

The foldable electronic device 2000 may further include batteries. Each of the batteries may be attached to support portions 2011, 2021, and 2031 included in the housing parts 2010, 2020, and 130. The support portions 2011, 2021, and 2031 may support rechargeable batteries.

The arrangement of hardware components is exemplary, unlike the above description, the rear camera 2075 and the second printed circuit board 2172 may be disposed in the third housing part 2030, and the third printed circuit board 2173 may be disposed in the second housing part 2020.

It is illustrated that the first housing part 2010 and the third housing part 2030 rotate in opposite directions with respect to the second housing part 2020, but are not limited thereto. For example, while changing from the first state 2000a to the third state 2000c, the first housing part 2010 may rotate counterclockwise with respect to the second housing part 2020, and the third housing part 2030 may rotate counterclockwise with respect to the second housing part 2020. As the first housing part 2010 and the third housing part 2030 rotate in the same direction, a portion of the display region of the flexible display 2040 within the second state may be visually exposed.

According to an embodiment, the foldable electronic device 2000 may have a structure in which the first housing part 2010 and the second housing part 2020 are folded so that a first display region (e.g., the first display region 2040a) and a second display region (e.g., the second display region 2040b) face each other, and an opposite surface of a surface on which the first display region is disposed and a third display region (e.g., the third display region 2040c) face each other. However, it is not limited thereto. According to an embodiment, the foldable electronic device 2000 may have a structure in which the first housing part 2010 and the second housing part 2020 are folded so that the first display region and the second display region face each other (e.g., in-folding), and the second housing part 2020 and the third housing part 2030 are folded so that an opposite surface of a surface on which the second display region is disposed and an opposite surface of a surface on which the third display region is disposed face each other (e.g., out-folding). According to an embodiment, a hinge housing may not be provided between two housing parts (e.g., the second housing part 2020 and the third housing part 2030) that are foldable in an out-folding manner.

According to an embodiment, a multi-rotator structure including a first rotator (or first rotation member) 320 and a second rotator (or second rotation member) 330 may be applied to a hinge structure having a narrower width among the first hinge structure 2050 and the second hinge structure 2060. According to an embodiment, a width of the first hinge structure 2050 of the foldable electronic device 2000 may be narrower than a width of the second hinge structure 2060. For example, a single rotator may be applied to the second hinge structure 2060, rather than the multi-rotator. For example, in the first hinge structure 2050, a width (or length) of the first rotator 320 and the second rotator 330 in a coupled state may be substantially the same as a width (or length) of a single rotator of the second hinge structure 2060. However, it is not limited thereto. For example, the width (or length) of the single rotator included in the second hinge structure 2060 may be larger. According to an embodiment, the multi-rotator structure may be applied to both the first hinge structure 2050 and the second hinge structure 2060. According to an embodiment, a triple rotator including an additional rotator structure having a structure corresponding to a first rotator (e.g., the first rotator 320 of FIG. 5) may be applied to the first hinge structure 2050, and a dual rotator including the first rotator 320 and the second rotator 330 may be applied to the second hinge structure 2060.

According to an embodiment, the first hinge structure 2050 to which the first rotator 320 and the second rotator 330 are applied may be a dumbbell type (e.g., in a state that the first display region 2040a and the second display region 2040b are folded to face each other, a distance between the two display regions increases as they approach the first bendable portion 2044), and the second hinge structure 2060 to which a single rotator is applied may be a U type (e.g., in a state that the second display region 2040b and the third display region 2040c are folded to face each other, a distance between the two display regions is substantially constant).

According to an embodiment, a flex mode enabling the two housings to be maintained at a specific angle between a fully unfolded state and a fully folded state may be supported in the first hinge structure 2050. For example, the flex mode may not be supported in the second hinge structure 2060. A CAM mechanism may be applied to the first hinge structure 2050. For example, the flex mode may not be supported in a section where a rotation of the first rotator 320 is limited and the second rotator 330 rotates first, and the flex mode may be supported in a partial section among sections where the first rotator 320 and the second rotator 330 rotate in conjunction with each other. However, it is not limited thereto.

According to the present disclosure, the hinge assembly 250 including the first rotator 320 and the second rotator 330 may be configured in a structure in which a part thereof is modified in accordance with the purpose and effect exemplified in the present disclosure. According to an embodiment, the first rotator 320 may be provided as a portion of a hinge bracket. According to an embodiment, the first rotator 320 and the second rotator 330 may be provided in a structure that maintains at least a certain area of engagement with the hinge bracket as the first rotator 320 slides out from the second rotator 330 in the folding movement.

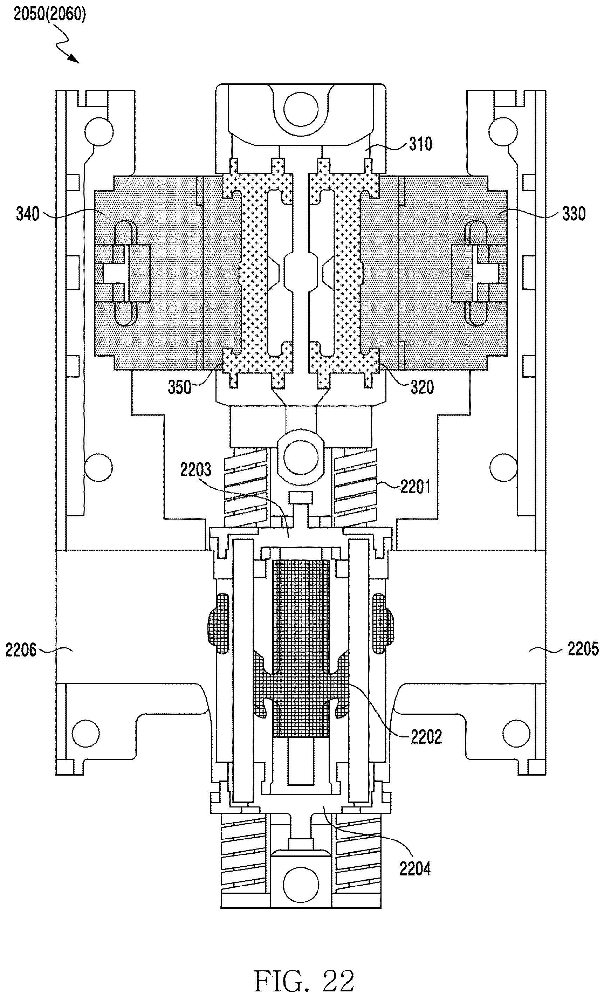

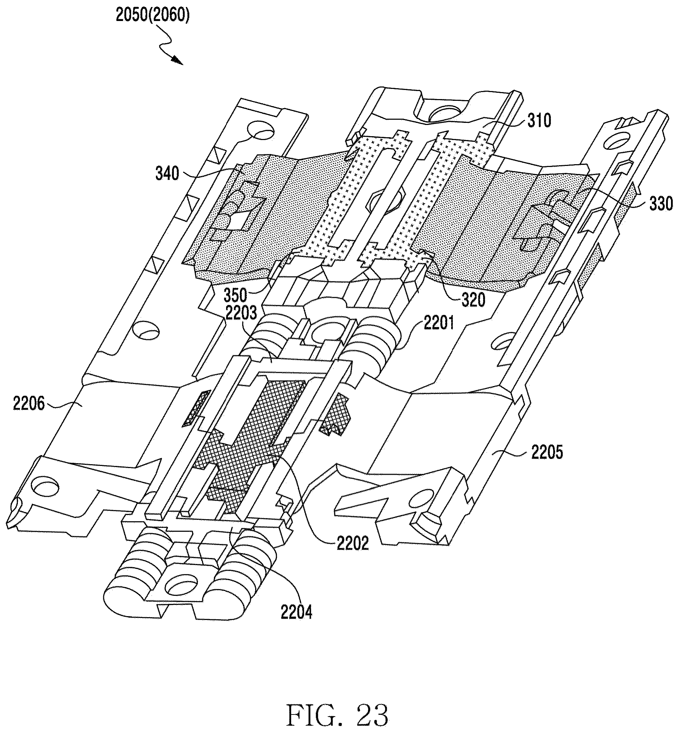

FIG. 22 is a plan view of a hinge assembly including a spiral structure. FIG. 23 is a perspective view of a hinge assembly including a spiral structure.

The structure illustrated in FIGS. 22 and 23 may be applied to at least one of the first hinge structure 2050 or the second hinge structure 2060. According to an embodiment, at least one of the first hinge structure 2050 or the second hinge structure 2060 may include a spiral structure 2202. As described above, the spiral structure 2202 may be configured to slide along a spiral groove. As the spiral structure 2202 slides, the spiral structure 2202 may contact CAM mechanism 2203 and 2204. The CAM mechanism 2203 and 2204 may be configured to pressurize elastic members 2201.

According to an embodiment, the spiral structure 2202 may be coupled with a first arm 2205 and a second arm 2206. As the first arm 2205 rotates, the spiral structure 2202 slides, and as the spiral structure 2202 slides, the second arm 2206 may rotate. The spiral structure 2202 may link the rotation of the first arm 2205 and the second arm 2206.

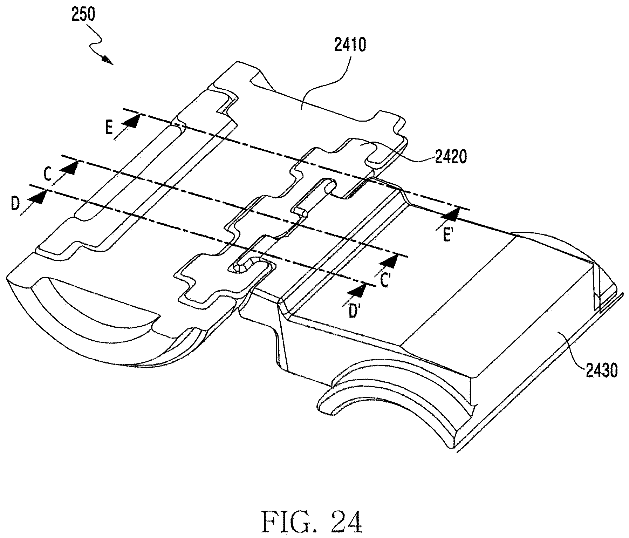

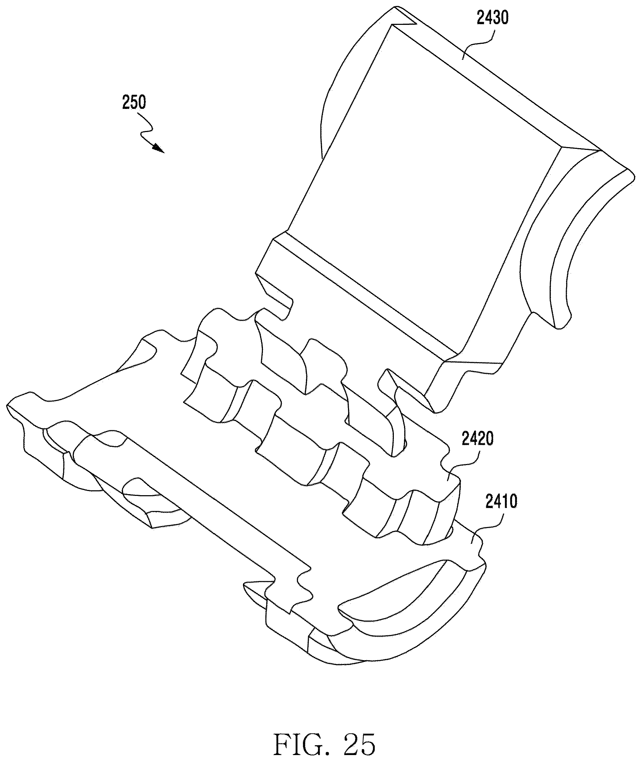

FIGS. 24 and 25 illustrate a portion of a hinge assembly including three rotators.

As described above, a hinge assembly (e.g., the hinge assembly 250 of FIG. 3) may include two rotators (e.g., the first rotator 320 and the second rotator 330 of FIG. 3) for rotation of a first housing part (e.g., the first housing part 210 of FIG. 2A) and two rotators (e.g., the third rotator 340 and the fourth rotator 350 of FIG. 3) for rotation of a second housing part (e.g., the second housing part 220 of FIG. 2A). However, embodiments of the present disclosure are not limited thereto. As described below, three rotators may be configured to provide rotation of a foldable housing (e.g., the foldable housing 201 of FIG. 2A) by coupling each other. Threshold angles described below may be different from the threshold angles described above.

Hereinafter, three rotators corresponding to one (e.g., the second housing part) of the first housing part or the second housing part are described. The hinge assembly may include three different rotators corresponding to another one (e.g., the first housing part) of the first housing part or the second housing part. Each of the three different rotators may correspond to a corresponding rotator of the three rotators described below.

Referring to FIG. 24, a hinge assembly (e.g., hinge assembly 250 of FIG. 3) according to an embodiment may include a first rotator 2410, a second rotator 2420, and a third rotator 2430. For example, the first rotator 2410 may be rotatably coupled to a bracket (e.g., the bracket 310 of FIG. 3). For example, the second rotator 2420 may be rotatably coupled to the first rotator 2410. For example, the third rotator 2430 may be rotatably coupled to the second rotator 2420. The third rotator 2430 may be indirectly rotatably coupled to the first rotator 2410 through the second rotator 2420. Although not illustrated in FIG. 24, the third rotator 2430 may be coupled to a second housing part (e.g., the second housing part 220 of FIG. 2A).

Referring to FIG. 25, according to the folding movement, when a second housing part (e.g., the second housing part 220 of FIG. 2A) is rotated, the third rotator 2430 may be rotated with respect to the second rotator 2420. According to the folding movement, based on a rotation angle of the third rotator 2430 reaching the first threshold angle, the second rotator 2420 may be configured to start to rotate with respect to the first rotator 2410 in conjunction with the third rotator 2430. For example, in the folding movement, the second rotator 2420 may not rotate until the rotation angle of the third rotator 2430 reaches the first threshold angle. When the rotation angle of the third rotator 2430 reaches the first threshold angle, the second rotator 2420 may start to rotate in conjunction with the third rotator 2430. The second rotator 2420 may rotate with respect to the first rotator 2410.

According to an embodiment, based on the rotation angle of the second rotator 2420 reaching the second threshold angle according to the folding movement, the first rotator 2410 may be configured to start to rotate with respect to a bracket (e.g., the bracket 310 of FIG. 3) in conjunction with the second rotator 2420. For example, in the folding movement, the first rotator 2410 may not rotate until the rotation angle of the second rotator 2420 reaches the second threshold angle. When the rotation angle of the second rotator 2420 reaches the second threshold angle, the first rotator 2410 may start to rotate in conjunction with the second rotator 2420. The first rotator 2410 may rotate with respect to the bracket.

According to an embodiment, when a foldable electronic device (e.g., the foldable electronic device 200 of FIG. 2A) is changed from the unfolded state to the folded state, the rotation angle of the first rotator 2410, the rotation angle of the second rotator 2420, and the rotation angle of the third rotator 2430 may be different from each other. In the folding movement, since the third rotator 2430 rotates in conjunction with the second housing part, the rotation angle of the third rotator 2430 may be greater than the rotation angle of the second rotator 2420 and the rotation angle of the first rotator 2410. Since the first rotator 2410 does not rotate until the rotation angle of the second rotator 2420 reaches the second threshold angle, the rotation angle of the first rotator 2410 may be smaller than the rotation angle of the second rotator 2420.

According to an embodiment, when the second housing part is rotated according to the unfolding movement, the third rotator 2430 may be rotated with respect to the second rotator 2420. The second rotator 2420 may be configured to start to rotate with respect to the first rotator 2410 in conjunction with the third rotator 2430, based on the rotation angle of the third rotator 2430 reaching the third threshold angle according to the unfolding movement. For example, in the unfolding movement, the second rotator 2420 may not rotate until the rotation angle of the third rotator 2430 reaches the third threshold angle. When the rotation angle of the third rotator 2430 reaches the third threshold angle, the second rotator 2420 may start to rotate in conjunction with the third rotator 2430.

According to an embodiment, the first rotator 2410 may be configured to start to rotate with respect to the bracket in conjunction with the second rotator 2420, based on the rotation angle of the second rotator 2420 reaching the fourth threshold angle according to the unfolding movement. For example, in the unfolding movement, the first rotator 2410 may not rotate until the rotation angle of the second rotator 2420 reaches the fourth threshold angle. When the rotation angle of the second rotator 2420 reaches the fourth threshold angle, the first rotator 2410 may start to rotate in conjunction with the second rotator 2420.

According to an embodiment, when the foldable electronic device is changed from the folded state to the unfolded state, the rotation angle of the first rotator 2410, the rotation angle of the second rotator 2420, and the rotation angle of the third rotator 2430 may be different from each other. Since the third rotator 2430 rotates in conjunction with the second housing part in the unfolding movement, the rotation angle of the third rotator 2430 may be greater than the rotation angle of the second rotator 2420 and the rotation angle of the first rotator 2410. Since the first rotator 2410 does not rotate until the rotation angle of the second rotator 2420 reaches the fourth threshold angle, the rotation angle of the first rotator 2410 may be smaller than the rotation angle of the second rotator 2420.

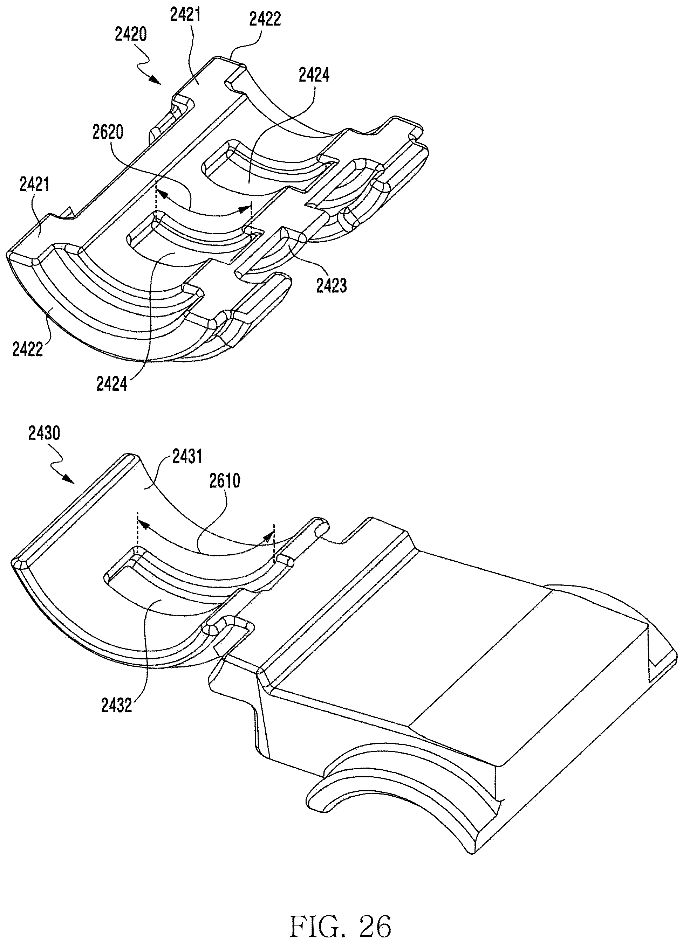

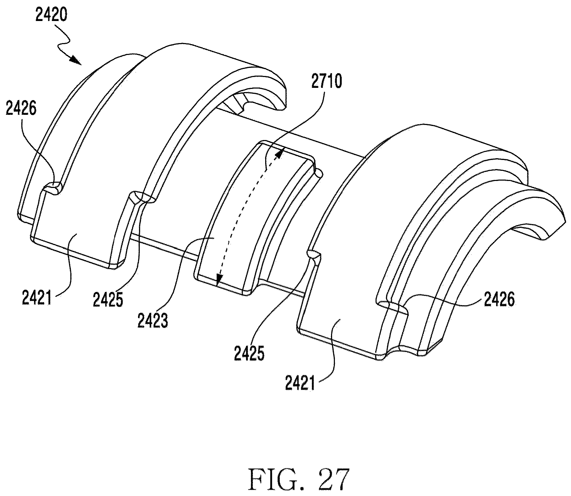

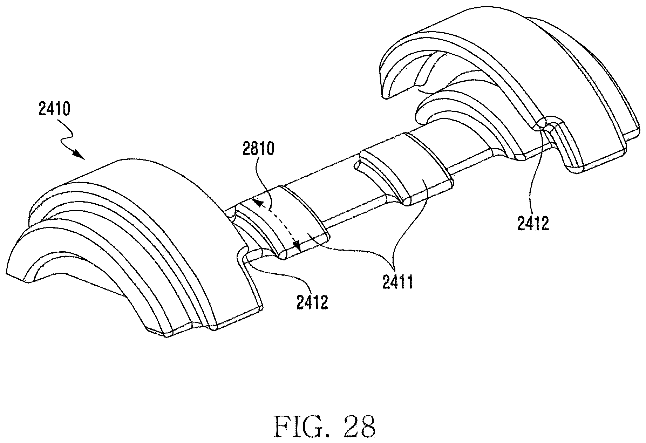

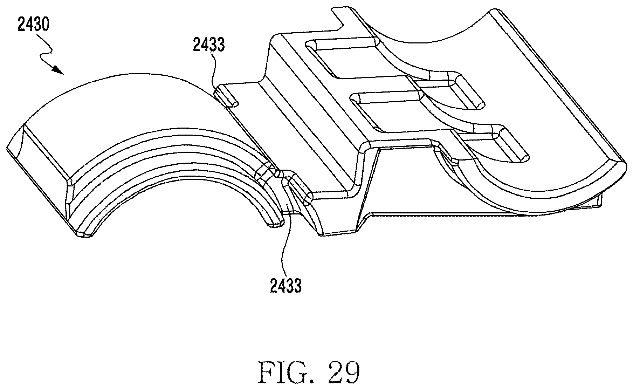

FIG. 26 is an exploded perspective view of a second rotator and a third rotator. FIG. 27 is a perspective view of a second rotator. FIG. 28 is a perspective view of a first rotator. FIG. 29 is a perspective view of a third rotator.

Referring to FIG. 26, the second rotator 2420 may be disposed on a seating portion 2431 of the third rotator 2430. When the second rotator 2420 is disposed on the seating portion 2431 of the third rotator 2430, wing portions 2421 of the second rotator 2420 may be positioned outside the seating portion 2431 of the third rotator 2430. A rail portion 2422 coupled to a first rotator (e.g., the first rotator 2410 of FIG. 28) may be formed on an outer surface of the wing portions 2421.

According to an embodiment, the seating portion 2431 of the third rotator 2430 may include a first groove portion 2432 into which the first protruding portion 2423 of the second rotator 2420 is inserted. For example, a shape of the first protruding portion 2423 may correspond to a shape of the first groove portion 2432. The first groove portion 2432 may have a first circumference 2610.

Referring to FIG. 27, the first protruding portion 2423 of the second rotator 2420 may have a second circumference 2710. According to an embodiment, a first circumference (e.g., the first circumference 2610 of FIG. 26) of a first groove portion (e.g., the first groove portion 2432 of FIG. 26) of a third rotator (e.g., the third rotator 2430 of FIG. 26) may be larger than the second circumference 2710 of the first protruding portion 2423. Since the first circumference 2610 is larger than the second circumference 2710, when the second rotator 2420 is disposed on a seating portion (e.g., the seating portion 2431 of FIG. 26) of the third rotator 2430, a gap may be formed between the first groove portion 2432 and the first protruding portion 2423. The second rotator 2420 may be configured to rotate in conjunction with the third rotator 2430, by the gap between the first groove portion 2432 and the first protruding portion 2423, when the rotation angle of the third rotator 2430 reaches the first threshold angle according to the folding movement. Until the rotation angle of the third rotator 2430 reaches the first threshold angle according to the folding movement, the second rotator 2420 may maintain its position without rotating.

Referring to FIG. 26, the second rotator 2420 may include a second groove portion 2424. The second groove portion 2424 may be positioned between the wing portions 2421. The second groove portion 2424 may be a portion in which a second protruding portion (e.g., the second protruding portion 2411 of FIG. 28) of a first rotator (e.g., the first rotator 2410 of FIG. 28) is disposed. The second groove portion 2424 may have a third circumference 2620.

Referring to FIG. 28, the first rotator 2410 may include the second protruding portion 2411 disposed within a second groove portion (e.g., the second groove portion 2424 of FIG. 26) of a second rotator (e.g., the second rotator 2420 of FIG. 26). The second protruding portion 2411 may have a fourth circumference 2810. According to an embodiment, a third circumference (e.g., the third circumference 2620 of FIG. 26) of the second groove portion 2424 may be larger than the fourth circumference 2810 of the second protruding portion 2411. Since the third circumference 2620 is larger than the fourth circumference 2810, when the second protruding portion 2411 of the first rotator 2410 is disposed within a second groove portion (e.g., the second groove portion 2424 of FIG. 26) of the second rotator 2420, a gap may be formed between the second groove portion 2424 and the second protruding portion 2411. The first rotator 2410 may be configured to rotate in conjunction with the second rotator 2420, by the gap between the second groove portion 2424 and the second protruding portion 2411, when the rotation angle of the second rotator 2420 reaches the second threshold angle according to the folding movement. The first rotator 2410 may maintain its position without rotating, until the rotation angle of the second rotator 2420 according to the folding movement reaches the second threshold angle.

Referring to FIG. 27, the second rotator 2420 may include a first stopper portion 2425. The first stopper portion 2425 may be formed on a surface where the wing portions 2421 face each other. For example, as the surface is at least partially dented, the first stopper portion 2425 may be formed. The first stopper portion 2425, which is a portion contacting a third rotator (e.g., the third rotator 2430 of FIG. 26) in the unfolding movement, may be a portion contacting the third rotator 2430 based on the rotation angle of the third rotator 2430 reaching the third threshold angle. Referring to FIG. 29, the third rotator 2430 may include a second stopper portion 2433. The second stopper portion 2433 may contact the first stopper portion 2425 of the second rotator 2420 when the rotation angle of the third rotator 2430 according to the unfolding movement reaches the third threshold angle. The second rotator 2420 may rotate in conjunction with the third rotator 2430, based on the rotation angle of the third rotator 2430 reaching the third threshold angle according to the unfolding movement. The second rotator 2420 may maintain its position without rotating until the rotation angle of the third rotator 2430 according to the unfolding movement reaches the third threshold angle.

Referring to FIG. 27, the second rotator 2420 may include a third stopper portion 2426. The third stopper portion 2426 may be formed on a surface of the wing portions 2421 opposite to a surface on which the first stopper portion 2425 is formed. For example, as the surface protrudes partially, the third stopper portion 2426 may be formed. The third stopper portion 2426 of the second rotator 2420, which is a portion contacting the first rotator 2410 in the unfolding movement, may be a portion contacting the first rotator 2410 when the rotation angle of the second rotator 2420 according to the unfolding movement reaches a fourth threshold angle. Referring to FIG. 28, the first rotator 2410 may include a fourth stopper portion 2412. The fourth stopper portion 2412 may contact a third stopper portion (e.g., the third stopper portion 2426 of FIG. 27) of the second rotator 2420 when a rotation angle of a second rotator (e.g., the second rotator 2420 of FIG. 27) reaches the fourth threshold angle in the unfolding movement. The first rotator 2410 may maintain its position without rotating until the rotation angle of the second rotator 2420 according to the unfolding movement reaches the fourth threshold angle.

Hereinafter, operations of the first rotator 2410, the second rotator 2420, and the third rotator 2430 according to the folding movement are described.

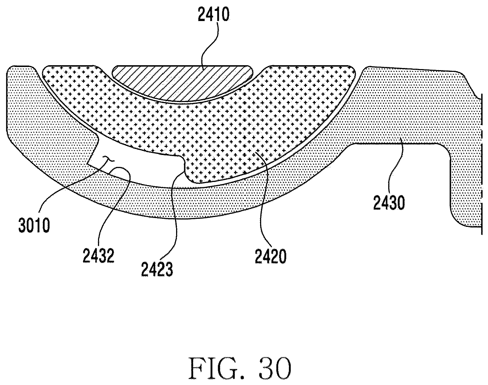

FIG. 30 is a cross-sectional view of a hinge assembly cut along line C-C' of FIG. 24 in an unfolded state of a foldable electronic device.

Referring to FIG. 30, in an unfolded state of a foldable electronic device (e.g., the foldable electronic device 200 of FIG. 2A), the first protruding portion 2423 of the second rotator 2420 may be disposed within the first groove portion 2432 of the third rotator 2430. As described above, since the first circumference 2610 of the first groove portion 2432 is larger than the second circumference 2710 of the first protruding portion 2423, a gap 3010 may be formed between the end portion of the first groove portion 2432 and the first protruding portion 2423.

According to an embodiment, when the foldable electronic device is changed from the unfolded state to the folded state, an external force may be applied to a second housing part (e.g., the second housing part of FIG. 2A). A rotation of the third rotator 2430 coupled to the second housing part may start by the external force. For example, the third rotator 2430 may rotate counterclockwise. When the third rotator 2430 starts to rotate counterclockwise, the second rotator 2420 and the first rotator 2410 may not rotate and maintain their positions. As the second rotator 2420 may maintain its position, and the third rotator 2430 rotates counterclockwise, a relative positional relationship between the second rotator 2420 and the third rotator 2430 may change. When the third rotator 2430 rotates counterclockwise, an end portion of the first groove portion 2432 may approach the first protruding portion 2423 of the second rotator 2420. As the third rotator 2430 rotates counterclockwise, the gap 3010 between the end portion of the first groove portion 2432 and the first protruding portion 2423 may decrease. As the rotation angle of the third rotator 2430 according to the folding movement increases, the gap 3010 may decrease.

According to an embodiment, until the rotation angle of the third rotator 2430 according to the folding movement reaches the first threshold angle, the first protruding portion 2423 of the second rotator 2420 may be spaced from the end portion of the first groove portion 2432 without contacting the end portion of the first groove portion 2432 of the third rotator 2430. Based on the rotation angle of the third rotator 2430 reaching the first threshold angle, the first protruding portion 2423 of the second rotator 2420 may contact the end portion of the first groove portion 2432 of the third rotator 2430.

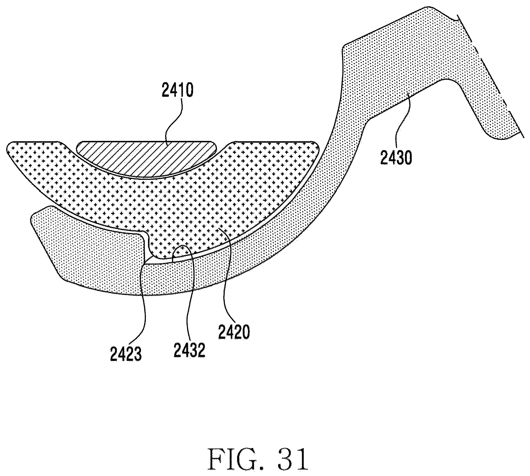

FIG. 31 is a cross-sectional view of a hinge assembly cut along line C-C' of FIG. 24 when a rotation angle of a third rotator according to a folding movement is a threshold angle.

Referring to FIG. 31, when the rotation angle of the third rotator 2430 according to the folding movement reaches the first threshold angle, the first protruding portion 2423 of the second rotator 2420 may contact the end portion of the first groove portion 2432 of the third rotator 2430. As the rotation angle of the third rotator 2430 according to the folding movement increases, the first protruding portion 2423 of the second rotator 2420 approaches the end portion of the first groove portion 2432 of the third rotator 2430, and when the rotation angle of the third rotator 2430 reaches the first threshold angle, the first protruding portion 2423 of the second rotator 2420 may contact the end portion of the first groove portion 2432 of the third rotator 2430. When the rotation angle of the third rotator 2430 according to the folding movement reaches the first threshold angle, physical interference between the third rotator 2430 and the second rotator 2420 may start. As the rotation angle of the third rotator 2430 increases, the end portion of the first groove portion 2432 may push up the first protruding portion 2423, thereby causing rotation of the second rotator 2420.

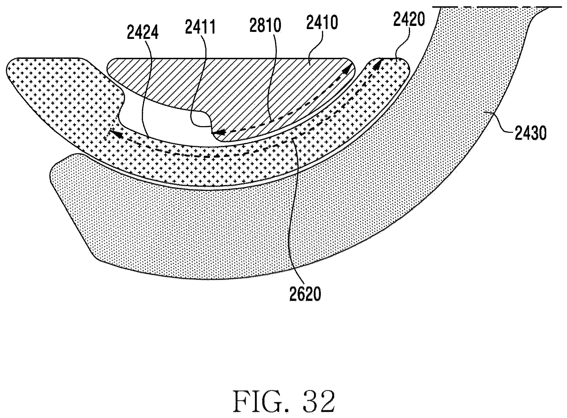

FIG. 32 is a cross-sectional view of a hinge assembly cut along line D-D' of FIG. 24 when a rotation angle of a third rotator according to a folding movement is a threshold angle.

Referring to FIG. 32, even when the rotation angle of the third rotator 2430 reaches the first threshold angle, interference between the first rotator 2410 and the second rotator 2420 may not start. The second protruding portion 2411 of the first rotator 2410 may be disposed within the second groove portion 2424 of the second rotator 2420. As described above, since the third circumference 2620 of the second groove portion 2424 is larger than the fourth circumference 2810 of the second protruding portion 2411, a gap may be formed between the end portion of the second groove portion 2424 and the second protruding portion 2411.

According to an embodiment, when the rotation angle of the third rotator 2430 is the first threshold angle in the folding movement, the rotation of the second rotator 2420 may start. For example, the second rotator 2420 may rotate counterclockwise in conjunction with the third rotator 2430. When the second rotator 2420 starts to rotate counterclockwise, the first rotator 2410 may maintain its position without rotating. As the first rotator 2410 maintains its position, and the second rotator 2420 rotates counterclockwise, a relative positional relationship between the first rotator 2410 and the second rotator 2420 may change. When the second rotator 2420 rotates counterclockwise in conjunction with the first rotator 2410, the end portion of the second groove portion 2424 may approach the second protruding portion 2411 of the first rotator 2410. As the second rotator 2420 rotates counterclockwise, the gap between the end portion of the second groove portion 2424 and the first protruding portion 2423 may be reduced. As the rotation angle of the second rotator 2420 according to the folding movement increases, the gap may be reduced.

According to an embodiment, until the rotation angle of the second rotator 2420 according to the folding movement reaches the second threshold angle, the second protruding portion 2411 of the first rotator 2410 may be spaced from the end portion of the second groove portion 2424 of the second rotator 2420 without contacting the end portion of the second groove portion 2424. Based on the rotation angle of the second rotator 2420 reaching the second threshold angle, the second protruding portion 2411 of the first rotator 2410 may contact the end portion of the second groove portion 2424 of the second rotator 2420.

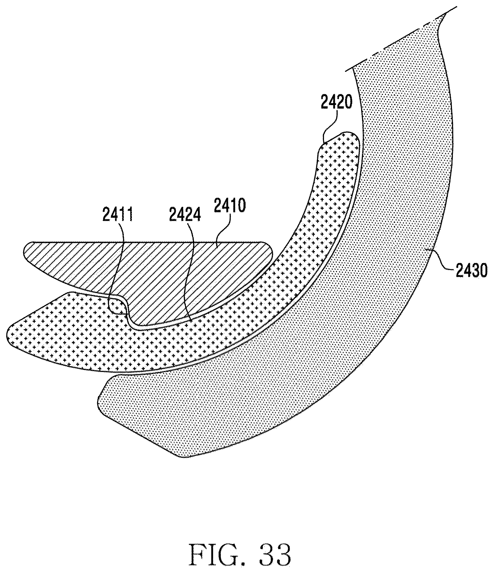

FIG. 33 is a cross-sectional view of a hinge assembly cut along line D-D' of FIG. 24 when a rotation angle of a second rotator according to a folding movement is a threshold angle.

Referring to FIG. 33, when the rotation angle of the second rotator 2420 according to the folding movement reaches the second threshold angle, the second protruding portion 2411 of the first rotator 2410 may contact the end portion of the second groove portion 2424 of the second rotator 2420. As the rotation angle of the second rotator 2420 according to the folding movement increases, the second protruding portion 2411 of the first rotator 2410 approaches the end portion of the second groove portion 2424 of the second rotator 2420, and when the rotation angle of the second rotator 2420 reaches the second threshold angle, the second protruding portion 2411 of the first rotator 2410 may contact the end portion of the second groove portion 2424 of the second rotator 2420. When the rotation angle of the second rotator 2420 according to the folding movement reaches the second threshold angle, physical interference between the second rotator 2420 and the first rotator 2410 may start. When the rotation angle of the second rotator 2420 increases, the end portion of the second groove portion 2424 may push up the second protruding portion 2411, thereby causing the rotation of the first rotator 2410.

As described above, according to the folding movement, the rotation angle of the first rotator 2410, the rotation angle of the second rotator 2420, and the rotation angle of the third rotator 2430 may be different. The first rotator 2410, which is rotatably connected to a bracket (e.g., bracket 310 of FIG. 3), starts to rotate after the rotation of the second rotator 2420 and the rotation of the third rotator 2430, so the rotation angle of the first rotator 2410 may be relatively small. When a foldable electronic device (e.g., the foldable electronic device 200 of FIG. 2A) is changed from the unfolded state to the folded state, a length of the first rotator 2410 engaged with the bracket may be relatively long because the rotation angle of the first rotator 2410 is relatively small. According to an embodiment, the durability of the hinge assembly may be improved, and the rotators may be stably coupled to the bracket within the folded state.

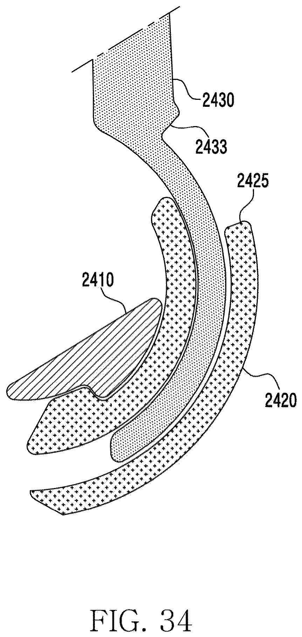

FIG. 34 is a cross-sectional view of a hinge assembly cut along line E-E' of FIG. 24 in a folded state of a foldable electronic device.

Referring to FIG. 34, in a folded state of a foldable electronic device (e.g., the foldable electronic device 200 of FIG. 2A), the first stopper portion 2425 of the second rotator 2420 may be spaced apart from the second stopper portion 2433 of the third rotator 2430. In the folded state of the foldable electronic device, a gap may be formed between the first stopper portion 2425 of the second rotator 2420 and the second stopper portion 2433 of the third rotator 2430.

According to an embodiment, when the foldable electronic device is changed from the folded state to the unfolded state, an external force may be applied to a second housing part (e.g., the second housing part of FIG. 2A). A rotation of the third rotator 2430 coupled to the second housing part may start by the external force. For example, the third rotator 2430 may rotate clockwise. When the third rotator 2430 starts to rotate clockwise, the second rotator 2420 and the first rotator 2410 may not rotate and maintain their positions. As the second rotator 2420 may maintain its position, and the third rotator 2430 rotates clockwise, a relative positional relationship between the second rotator 2420 and the third rotator 2430 may change. When the third rotator 2430 rotates clockwise, the second stopper portion 2433 may approach the first stopper portion 2425. As the third rotator 2430 rotates clockwise, the gap between the second stopper portion 2433 and the first stopper portion 2425 may be reduced. As the rotation angle of the third rotator 2430 according to the unfolding movement increases, the gap may be reduced.

According to an embodiment, until the rotation angle of the third rotator 2430 according to the unfolding movement reaches the third threshold angle, the first stopper portion 2425 of the second rotator 2420 may be spaced apart from the first stopper portion 2425 without contacting the first stopper portion 2425 of the third rotator 2430. Based on the rotation angle of the third rotator 2430 reaching the third threshold angle, the first stopper portion 2425 of the second rotator 2420 may contact the second stopper portion 2433 of the third rotator 2430.

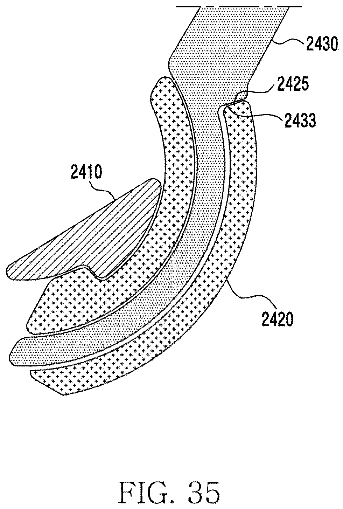

FIG. 35 is a cross-sectional view of a hinge assembly cut along E-E' line of FIG. 24 when a rotation angle of a third rotator according to an unfolding movement is a threshold angle.

Referring to FIG. 35, when the rotation angle of the third rotator 2430 according to the unfolding movement reaches the third threshold angle, the first stopper portion 2425 of the second rotator 2420 may contact the second stopper portion 2433 of the third rotator 2430. As the rotation angle of the third rotator 2430 according to the unfolding movement increases, the first stopper portion 2425 of the second rotator 2420 approaches the second stopper portion 2433 of the third rotator 2430, and when the rotation angle of the third rotator 2430 reaches the third threshold angle, the first stopper portion 2425 of the second rotator 2420 may contact the second stopper portion 2433 of the third rotator 2430. When the rotation angle of the third rotator 2430 according to the unfolding movement reaches the third threshold angle, physical interference between the third rotator 2430 and the second rotator 2420 may start. When the rotation angle of the third rotator 2430 increases, the second stopper portion 2433 may push down the first stopper portion 2425, thereby causing the rotation of the second rotator 2420.

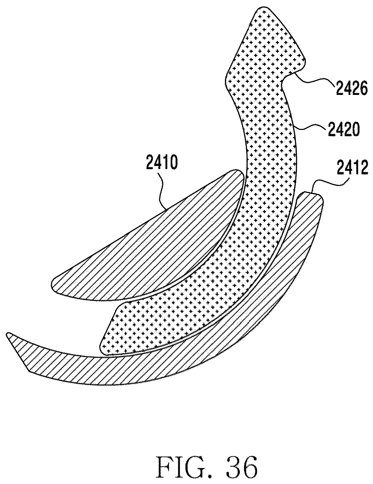

FIG. 36 is a cross-sectional view of a hinge assembly cut along line D-D' of FIG. 24 when a rotation angle of a third rotator according to an unfolding movement is a threshold angle.

Referring to FIG. 36, even when a rotation angle of a third rotator (e.g., the third rotator 2430 of FIG. 26) reaches the third threshold angle, interference between the first rotator 2410 and the second rotator 2420 may not start. The fourth stopper portion 2412 of the first rotator 2410 may be spaced apart from the third stopper portion 2426 of the second rotator 2420. A gap may be formed between the third stopper portion 2426 and the fourth stopper portion 2412.

According to an embodiment, in the unfolding movement, when the rotation angle of the third rotator 2430 is the third threshold angle, the rotation of the second rotator 2420 may start. For example, the second rotator 2420 may rotate clockwise in conjunction with the third rotator 2430. When the second rotator 2420 starts to rotate clockwise, the first rotator 2410 may maintain its position without rotating. As the first rotator 2410 maintains its position, and the second rotator 2420 rotates clockwise, the relative positional relationship between the first rotator 2410 and the second rotator 2420 may be changed. When the second rotator 2420 rotates clockwise in conjunction with the first rotator 2410, the third stopper portion 2426 may approach the fourth stopper portion 2412. As the second rotator 2420 rotates clockwise, a gap between the third stopper portion 2426 and the fourth stopper portion 2412 may be reduced. As the rotation angle of the second rotator 2420 according to the unfolding movement increases, the gap may be reduced.

According to an embodiment, until the rotation angle of the second rotator 2420 according to the unfolding movement reaches the fourth threshold angle, the fourth stopper portion 2412 of the first rotator 2410 may be spaced from the third stopper portion 2426 of the second rotator 2420 without contacting the third stopper portion 2426. Based on the rotation angle of the second rotator 2420 reaching the fourth threshold angle, the fourth stopper portion 2412 of the first rotator 2410 may contact the third stopper portion 2426 of the second rotator 2420.

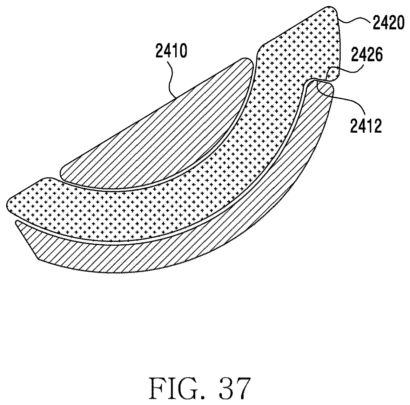

FIG. 37 is a cross-sectional view of a hinge assembly cut along line D-D' of FIG. 24 when a rotation angle of a second rotator according to an unfolding movement is a threshold angle.

Referring to FIG. 37, when the rotation angle of the second rotator 2420 according to the unfolding movement reaches the fourth threshold angle, the fourth stopper portion 2412 of the first rotator 2410 may contact the third stopper portion 2426 of the second rotator 2420. As the rotation angle of the second rotator 2420 according to the unfolding movement increases, the fourth stopper portion 2412 of the first rotator 2410 approaches the third stopper portion 2426 of the second rotator 2420, and when the rotation angle of the second rotator 2420 reaches the second threshold angle, the fourth stopper portion 2412 of the first rotator 2410 may contact the third stopper portion 2426 of the second rotator 2420. When the rotation angle of the second rotator 2420 according to the unfolding movement reaches the fourth threshold angle, physical interference between the second rotator 2420 and the first rotator 2410 may start. When the rotation angle of the second rotator 2420 increases, the third stopper portion 2426 may push down the fourth stopper portion 2412, thereby causing the rotation of the first rotator 2410.

According to various embodiments, the hinge assembly of the foldable electronic device includes multiple (e.g., double or dual) rotators, instead of a single-piece rotator. Since a rotation angle of the first rotator 320 is smaller than a rotation angle of the second rotator 330 in the folding movement, a length of the second rail portion 324 of the first rotator 320 inserted into the first rail portion 311 of the bracket 310 may relatively increase in the folded state. As the length increases, the first rotator 320 may be stably coupled to the bracket 310 in the folded state, so the rigidity of the foldable electronic device 200 may be improved. In other words, as the folding movement is ongoing, the second rotator 330 begins to rotate earlier than the first rotator 320. Thus, the angle of the rotation of the first rotator 320, which is coupled to the bracket 310, is reduced, which helps to maintain sufficient contact area between the first rotator 310 and the bracket 310 as required for a stable coupling of the first rotator 320 to the bracket 310.

The technical problems to be solved and/or the technical advantages to be achieved in this document are not limited to those described above, and other technical problems not mentioned herein will be clearly understood by those having ordinary knowledge in the art to which the present disclosure belongs, from the following description.

A foldable electronic device 101, 200, or 2000 is provided. The foldable electronic device 101, 200, or 2000 includes a foldable housing 201 including a first housing part 210 and a second housing part 220. The foldable electronic device 101, 200, or 2000 includes a hinge assembly 250 configured to provide an unfolding movement and a folding movement by rotatably connecting the first housing part 210 and the second housing part 220. The hinge assembly 250 includes a bracket 310, a first rotator 320 rotatably coupled to the bracket 310 and separated from the second housing part 220, and a second rotator 330 coupled to the first rotator 320, coupled to the second housing part 220, and rotatably coupled to the bracket 310 through the first rotator 320. The second rotator 330 is configured to rotate with respect to the bracket 310 according to the folding movement. The first rotator 320 is configured to start to rotate with respect to the bracket 310 in conjunction with the second rotator 330, based on a rotation angle of the second rotator 330 reaching a threshold angle according to the folding movement.

According to various embodiments, the bracket 310 may include a first rail portion 311 for guiding the rotation of the first rotator 320. The first rotator 320 may include a second rail portion 324 inserted into the first rail portion 311 of the bracket 310 and configured to slide along the first rail portion 311.

According to various embodiments, the second rotator 330 may include a first groove portion 331 on which the first rotator 320 is disposed, a second groove portion 332 formed by denting a portion of the first groove portion 331, and/or a through hole 333 disposed in the second groove portion 332. The first rotator 320 may include a body portion 321 disposed in the first groove portion 331, and/or a protruding portion 322 protruding from the body portion 321 of the first rotator 320 and disposed in the second groove portion 332. The hinge assembly 250 may include a stopper 510 inserted into the through hole 333 and protruding on the second groove portion 332 of the second rotator 330. A first circumference 501 of the protruding portion 322 may be shorter than a second circumference 502 of the second groove portion 332.

According to various embodiments, the stopper 510 protruding on the second groove portion 332 may be spaced from the protruding portion 322 of the first rotator 320 in the unfolded state of the foldable electronic device 101, 200, or 2000. Based on the rotation angle of the second rotator 330 reaching the threshold angle according to the folding movement, the stopper 510 may contact the protruding portion 322 of the first rotator 320.

According to various embodiments, a difference between the second circumference 502 of the second groove portion 332 and the first circumference 501 of the protruding portion 322 may correspond to the threshold angle.

According to various embodiments, the stopper 510 may include a neck portion 511, inserted into the through hole 333, protruding on the second groove portion 332, and having a diameter corresponding to a diameter of the through hole 333, and a flange portion 512, contacting an outer surface of the second rotator 330 to support the neck portion 511 inserted into the through hole 333, and having a diameter larger than the diameter of the neck portion 511.

According to various embodiments, the second rotator 330 may be configured to rotate with respect to the bracket 310 according to the unfolding movement. The first rotator 320 may be configured to start to rotate with respect to the bracket 310 in conjunction with the second rotator 330, based on a rotation angle of the second rotator 330 reaching another threshold angle according to the unfolding movement. According to various embodiments, the second rotator 330 may include a stopper portion 334 spaced apart from the first rotator 320 in a folded state of the foldable electronic device 101, 200, or 2000, and contacting the first rotator 320 based on the rotation angle of the second rotator 330 reaching the other threshold angle 320 according to the unfolding movement.

According to various embodiments, the first rotator 320 may include a body portion 321, a wing portion 323 connected to an end portion of the body portion 321 and positioned in outer side of the first groove portion 331, a rail portion (e.g., the third rail portion 325) protruding from a surface of the wing portion 323 facing the body portion 321 toward the body portion 321, and having a third circumference 1501 shorter than a fourth circumference 1502 of the wing portion 323, and/or a seating portion 326, formed by a difference between the third circumference 1501 of the third rail portion 325 and the fourth circumference 1502 of the wing portion 323, in which the stopper portion 334 is positioned. The second rotator 330 may include a first groove portion 331 on which the body portion 321 of the first rotator 320 is disposed, and/or another rail portion (e.g., the fourth rail portion 335), defined by the an end portion of the first groove portion 331 facing the wing portion 323 of the first rotator 320, and disposed on a front surface of the third rail portion 325. A first thickness 1503 of the stopper portion 334 may be thinner than a second thickness 1504 of the seating portion 326.

According to various embodiments, a difference between the second thickness 1504 of the seating portion 326 and the first thickness 1503 of the stopper portion 334 may correspond to the other threshold angle.

According to various embodiments, the other threshold angle may correspond to the threshold angle.

According to various embodiments, the first rotator 320 may be configured to maintain a position before the rotation angle of the second rotator 330 reaches the threshold angle.

According to various embodiments, the hinge assembly 250 may include a third rotator 340 rotatably coupled to the bracket 310 and spaced from the first housing part 210, and a fourth rotator 350 coupled to the third rotator 340, coupled to the first housing part 210, and rotatably coupled to the bracket 310 through the third rotator 340. The fourth rotator 350 may be configured to rotate with respect to the bracket 310 according to the folding movement. The third rotator 340 may be configured to start to rotate with respect to the bracket 310 in conjunction with the fourth rotator 350, based on a rotation angle of the fourth rotator 350 reaching the threshold angle according to the folding movement.

According to various embodiments, the hinge assembly 250 may further include a coupling bracket 361 coupled to the second housing part 220 and the second rotator 330. The second rotator 330 may be configured to rotate in conjunction with the second housing part 220 through the coupling bracket 310.

A foldable electronic device 101, 200, or 2000 is provided. The foldable electronic device 101, 200, or 2000 may include a foldable housing 201 including a first housing part 210 and a second housing part 220. The foldable electronic device 101, 200, or 2000 may include a hinge assembly 250, configured to provide an unfolding movement that changes a folded state of the foldable electronic device 101, 200, or 2000 to an unfolded state of the foldable electronic device 101, 200, or 2000 and a folding movement that changes the unfolded state of the foldable electronic device 101, 200, or 000) to the folded state of the foldable electronic device 101, 200, or 2000, by rotatably connecting the first housing part 210 and the second housing part 220. The hinge assembly 250 may include a bracket 310, a first rotator 320 rotatably coupled to the bracket 310 and separated from the second housing part 220, a second rotator 330 coupled to the first rotator 320, coupled to the second housing part 220, and rotatably coupled to the bracket 310 through the first rotator 320, and a coupling bracket 310 coupled to the second housing part 220 and the second rotator 330 and separated from the first rotator 320. The second rotator 330 may be configured to rotate with respect to the bracket 310 according to the folding movement. The first rotator 320 may be configured to start to rotate with respect to the bracket 310 in conjunction with the second rotator 330, based on a rotation angle of the second rotator 330 reaching a threshold angle according to the folding movement.

According to various embodiments, the foldable electronic device 101, 200, or 2000 may further include a flexible display 230 disposed on the foldable housing 201. The flexible display 230 may include a first portion 231 supported by the first housing part 210, a second portion 232 supported by the second housing part 220, and a third portion 233 disposed between the first portion 231 of the flexible display 230 and the second portion 232 of the flexible display 230, and configured to be bent based on a rotation of the first housing part 210 or the second housing part 220.

According to various embodiments, the bracket 310 may include a first rail portion 311 for guiding a rotation of the first rotator 320. The first rotator 320 may include a second rail portion 324, inserted into the first rail portion 311 of the bracket 310 and configured to slide along the first rail portion 311.

According to various embodiments, the second rotator 330 may include a first groove portion 331 on which the first rotator 320 is disposed, a second groove portion 332 formed by denting a portion of the first groove portion 331, and a through hole 333 disposed within the second groove portion 332. The first rotator 320 may include a body portion 321 disposed in the first groove portion 331, and a protruding portion 322 protruding from the body portion 321 of the first rotator 320 and disposed within the second groove portion 332. The hinge assembly 250 may include a stopper 510 inserted into the through hole 333 and protruding on the second groove portion 332 of the second rotator 330. A first circumference 501 of the protruding portion 322 may be shorter than a second circumference 502 of the second groove portion 332.

According to various embodiments, the stopper 510 protruding on the second groove portion 332 may be spaced apart from the protruding portion 322 of the first rotator 320 in an unfolded state of the foldable electronic device 101, 200, or 2000. Based on the rotation angle of the second rotator 330 reaching the threshold angle according to the folding movement, the stopeer 510 may be configured to contact the protruding portion 322 of the first rotator 320.

An electronic device 101 or 2000 may include a foldable housing (e.g., the housing structure 2001 of FIG. 20A) including a first housing part (e.g., the first housing part 2010 of FIG. 20A), a second housing part (e.g., the second housing part 2020 of FIG. 20A), a third housing part (e.g., the third housing part 2030 of FIG. 20A), a first hinge housing part disposed between the first housing part and the second housing part and having a first width, and a second hinge housing part disposed between the second housing part and the third housing part and having a second width different from the first width. The electronic device 101, 200, or 2000 may include a first hinge assembly (e.g., the first hinge structure 2050 of FIG. 20A) that is at least partially accommodated in the first hinge housing part and rotatably connected to the first housing part and the second housing part. The electronic device 101, 200, or 2000 may include a second hinge assembly (e.g., the second hinge structure 2060 of FIG. 20A) that is at least partially accommodated in the second hinge housing part and rotatably connected to the second housing part and the third housing part. The electronic device 101, 200, or 2000 may include a flexible display (e.g., the flexible display 2040 of FIG. 20A) including a first display region (e.g., the first unbendable portion 2041 of FIG. 20A), a second display region (e.g., the second unbendable portion 2042 of FIG. 20A), and a third display region (e.g., the third unbendable portion 2043 of FIG. 20A), which are accommodated in the first housing part, the second housing part, and the third housing part, respectively. The first hinge assembly may comprise a first bracket (e.g., the bracket 310 of FIG. 4), a first rotation member (e.g., the first rotator 320 of FIG. 5) rotatably coupled to the first bracket, and a second rotation member (e.g., the second rotator 330 of FIG. 5) rotatably coupled to the first bracket through the first rotation member and coupled to the first housing part, wherein the first rotation member may be limited in rotation while the second rotation member is rotated within a first rotation range (e.g., about 0 degrees to about 20 degrees), and may be configured to rotate in conjunction with the second rotation member while the second rotation member is rotated within a second rotation range exceeding the first rotation range. The second hinge assembly includes a second bracket, and a third rotation member rotatably coupled to the second bracket and coupled to the second housing part, wherein the third rotation member may be configured to rotate in a state that the first housing part and the second housing part are folded.

According to various embodiments, the first hinge assembly may further include a fourth rotation member (e.g., the fourth rotator 350 of FIG. 4) rotatably coupled to the first bracket, and a fifth rotation member (e.g., the third rotator 340 of FIG. 4) rotatably coupled to the first bracket through the fourth rotation member and coupled to the second housing part, and as the fifth rotation member is coupled to the second rotation member through a gear structure (e.g., the first gear g1, the second gear g2, the third gear g3, and the fourth gear g4 of FIG. 3), the fourth rotation member may be limited in rotation while the second rotation member is rotated within the first rotation range, and may be configured to rotate in conjunction with the fifth rotation member while the second rotation member is rotated within the second rotation range.

According to various embodiments, the first rotation member may include a first surface (e.g., the rear surface of the body portion 321 of FIG. 5 ) having a convex shape in a direction toward the second rotation member, and the second rotation member may include a second surface (e.g., the first groove portion 331 of FIG. 5) having a concave shape corresponding to the convex shape and facing at least a portion of the first surface. The first rotation member may include an engagement region (e.g., the protruding portion 322 of FIG. 5) protruding from the first surface toward the second surface.

According to various embodiments, the first hinge assembly may further include an engagement member (e.g., the stopper 510 of FIG. 5) protruding from the second surface of the second rotation member by being coupled to pass through a hole (e.g., the through hole 333 of FIG. 5) formed in the second rotation member.

According to various embodiments, the engagement region may be spaced apart from the engagement member while the second rotation member rotates within a first rotation range from a state that the first and second housing parts are unfolded, and may engage with the engagement member while the second rotation member rotates within a second rotation range, so that the first and second rotation members are configured to rotate in conjunction with each other.

According to various embodiments, the second surface of the second rotation member may include a groove region (e.g., the second groove portion 332 of FIG. 5), and the hole may be formed in the groove region so that the engagement member may protrude from the groove region, and at least a portion of the engagement region of the first rotation member may be accommodated within the groove region.

According to various embodiments, the first rotation member may include a first contact portion (e.g., the seating portion 326 of FIG. 15) formed to extend from an end portion of the first rotation member in a length direction, bent inwardly of the first rotation member, and cover a portion of the second rotation member, and a second rotation member may include a second contact portion (e.g., the stopper portion 334 of FIG. 15) formed to face in a direction opposite to the second surface and face the first contact portion. The first contact portion may be spaced apart from the second contact portion while the second rotation member rotates within a third rotation range from a state that the first and second housing parts are folded, and may contact the second contact portion while the second rotation member rotates within a fourth rotation range exceeding the third rotation range, so that the first and second rotation members are configured to rotate in conjunction with each other.

According to various embodiments, the first bracket and the first rotation member may be coupled through a first rotation rail structure (e.g., the first rail portion 311 and the second rail portion 324 of FIG. 4), and the first rotation member and the second rotation member may be coupled through a second rotation rail structure (e.g., the third rail portion 325 and the fourth rail portion 335 of FIG. 5) having substantially the same rotation radius as the first rotation rail structure.

According to various embodiments, the first hinge assembly may further include a CAM mechanism (e.g., the CAM mechanism 376 of FIG. 3) including a first cam nose (e.g., one of the CAM detents of FIG. 3) and a second cam nose (e.g., another one of the CAM detents of FIG. 3) protruding in a direction facing each other.

According to various embodiments, the second rotation range may include a section in which the first cam nose and the second cam nose are positioned to face each other.

According to various embodiments, a width of the third rotation member may be configured to be substantially the same as a width in a state where the first and second rotation members are coupled.

The effects that can be obtained from the present disclosure are not limited to those described above, and any other effects not mentioned herein will be clearly understood by those having ordinary knowledge in the art to which the present disclosure belongs, from the following description.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A foldable electronic device (200) comprising:
a foldable housing (201) including:
a first housing part (210), and
a second housing part (220); and
a hinge assembly (250), configured to provide an unfolding movement and a folding movement by rotatably connecting the first housing part (210) and the second housing part (220), the hinge assembly (250) including:
a bracket (310),
a first rotator (320), rotatably coupled to the bracket (310), separated from the second housing part (220), and
a second rotator (330), coupled to the first rotator (320), coupled to the second housing part (220), and rotatably coupled to the bracket (310) through the first rotator (320),
wherein the second rotator (330) is configured to rotate with respect to the bracket (310) according to the folding movement, and
wherein the first rotator (320) is configured to, based on an angle of the rotation of the second rotator (330) reaching a threshold angle according to the folding movement, start to rotate with respect to the bracket (310) in conjunction with the second rotator (330).

2. The foldable electronic device (200) of claim 1,
wherein the second rotator (330) includes:
a first groove portion (331) on which the first rotator (320) is disposed,
a second groove portion (332), formed by denting a portion of the first groove portion (331), and
a through hole (333) disposed in the second groove portion (332),
wherein the first rotator (320) includes:
a body portion (321) disposed in the first groove portion (331), and
a protruding portion (322), protruding from the body portion (321) of the first rotator (320), disposed in the second groove portion (332),
wherein the hinge assembly (250) includes a stopper (510), inserted into the through hole (333), protruding on the second groove portion (332) of the second rotator (330), and
wherein a first circumference of the protruding portion (322) is shorter than a second circumference of the second groove portion (332).

3. The foldable electronic device (200) of claim 2,
wherein the stopper (510) protruding on the second groove portion (332) is spaced apart from the protruding portion (322) of the first rotator (320), in an unfolded state of the foldable electronic device (200), and is contacted with the protruding portion (322) of the first rotator (320) based on the angle of the rotation of the second rotator (330) reaching the threshold angle according to the folding movement.

4. The foldable electronic device (200) of claim 2,
wherein a difference between the second circumference of the second groove portion (332) and the first circumference of the protruding portion (322) corresponds to the threshold angle.

5. The foldable electronic device (200) of claim 2,
wherein the stopper (510) includes:
a neck portion (511), inserted into the through hole (333), protruding on the second groove portion (332), having a diameter corresponding to a diameter of the through hole (333), and
a flange portion (512), contacted with an outer surface of the second rotator (330) to support the neck portion (511) inserted into the through hole (333), having a diameter larger than the diameter of the neck portion (511).

6. The foldable electronic device (200) of any one of claims 1 to 5,
wherein the second rotator (330) is configured to rotate with respect to the bracket (310) according to the unfolding movement, and
wherein the first rotator (320) is configured to, based on an angle of the rotation of the second rotator (330) reaching another threshold angle according to the unfolding movement, start to rotate with respect to the bracket (310) in conjunction with the second rotator (330).

7. The foldable electronic device (200) of claim 6,
wherein the second rotator (330) includes a stopper portion (334) spaced apart from the first rotator (320) in a folded state of the foldable electronic device (200), and contacted with the first rotator (320) based on the angle of the rotation of the second rotator (330) reaching the other threshold angle according to the unfolding movement.

8. The foldable electronic device (200) of claim 7,
wherein the first rotator (320) includes:
a body portion (321),
a wing portion (323), connected to an end portion of the body portion (321), positioned in an outer side of a first groove portion (331) of the second rotator (330), and
a rail portion (324), protruding from a surface of the wing portion (323) facing the body portion (321) toward the body portion (321), having a third circumference shorter than a fourth circumference of the wing portion (323), and
a seating portion (326), formed by a difference between the third circumference of the rail portion (325) and the fourth circumference of the wing portion (323), in which the stopper portion (334) is positioned,
wherein the second rotator (330) includes:
the first groove portion (331), on which the body portion (321) of the first rotator (320) is disposed, and
another rail portion (335), defined by an end portion of the first groove portion (331) facing the wing portion (323) of the first rotator (320), disposed on a front surface of the rail portion (325), and
wherein a first thickness of the stopper portion (334) is thinner than a second thickness of the seating portion (326).

9. The foldable electronic device (200) of claim 8,
wherein a difference between the second thickness of the seating portion (326) and the first thickness of the stopper portion (334) corresponds to the other threshold angle.

10. The foldable electronic device (200) of any one of claim 6,
wherein the other threshold angle corresponds to the threshold angle.

11. The foldable electronic device (200) of any one of claims 1 to 10,
wherein the first rotator (320) is configured to maintain a position before the angle of the rotation of the second rotator (330) according to the folding movement reaches the threshold angle.

12. The foldable electronic device (200) of any one of claims 1 to 11,
wherein the hinge assembly (250) includes a coupling bracket (361) coupled to the second housing part (220) and the second rotator (330), and
wherein the second rotator (330) is configured to rotate in conjunction with the second housing part (220) via the coupling bracket (361).

13. The foldable electronic device (200) of any one of claims 1 to 12,
wherein the bracket (310) includes a rail portion (311) to guide the rotation of the first rotator (320), and
wherein a portion of the first rotator (320) is inserted into the rail portion (311) of the bracket (310).

14. The foldable electronic device (200) of any one of claims 1 to 13,
wherein the hinge assembly (250) includes:
a third rotator (340), rotatably coupled to the bracket (310), separated from the first housing part (210), and
a fourth rotator (350), coupled to the third rotator (340), coupled to the first housing part (210), and rotatably coupled to the bracket (310) through the third rotator (340).

15. The foldable electronic device (200) of any one of claims 1 to 14, further comprising a flexible display (230) including a first portion (231), a second portion (232), and a third portion (233) between the first portion (231) of the flexible display (230) and the second portion (232) of the flexible display (230),
wherein the third portion (233) of the flexible display (230) is bent in a folded state of the foldable electronic device (200) and is flat in an unfolded state of the foldable electronic device (200),
wherein a first direction of the first portion (231) of the flexible display (230) corresponds to a second direction of the second portion (232) of the flexible display (230), when the foldable electronic device (200) is in the unfolded state, and
wherein the first direction is opposite to the second direction, when the foldable electronic device (200) is in the folded state.
